# EUROPEAN PATENT APPLICATION

(11) **EP 4 814 819 A1**
(43) Date of publication of application: **30.09.2026**
(21) Application number: 26161615.5
(22) Date of filing: 02.03.2026
(51) Int. Cl.: G06Q 10/04, F02D 19/06, G06Q 10/06, G06Q 10/063, G06Q 10/0631, G06Q 10/0637, G06Q 50/40, G08G 5/32

(54) **FUEL ALLOCATION**

(30) Priority: 28.03.2025 GB 202504637
(71) Applicant: Rolls-Royce plc, London N1 9FX (GB)
(72) Inventor: Swann, Peter, Derby, DE24 8BJ (GB); Dutka, Marcin, Derby, DE24 8BJ (GB); Shennan, Roslyn, Derby, DE24 8BJ (GB)
(74) Representative: Rolls-Royce plc

(57) **Abstract**

The application discloses a method (1000) of determining an overall fuel allocation for missions performed by at least one aircraft, supplied with fuel from a fuel source (70) comprising an amount of a first fuel (72) and an amount of a different second fuel (74). The method comprises: determining (1002) one or more utility values for each mission of the plurality of missions, wherein the or each utility value for each mission is based on the same one or more of a predicted contrail outcome and a predicted local air quality outcome; and determining (1004) the overall fuel allocation for the plurality of missions based on the or each utility value for each mission. Also disclosed is: a method of loading (1006) fuel onto one or more aircraft according to the overall fuel allocation; and a fuel allocation determination system.

## Description

### FIELD

This disclosure relates to methods of operating aircraft involving the management of fuels of different types, including actions taken to improve aircraft performance in particular with respect to environmental outcomes, based on data acquired, and to aircraft fleet management systems to allow such methods to be implemented. The invention may be of particular utility in allocating a limited amount of a non-default fuel type between a plurality of missions, in order to maximise the reduction in contrail warming impact that can be obtained from use of that limited amount of the non-default fuel type.

### BACKGROUND

There is an expectation in the aviation industry of a trend towards the use of fuels different from the traditional kerosene-based jet fuels generally used at present. Sustainable Aviation Fuel (SAF) is one such alternative ("non-default") fuel, and its uptake is primarily motivated by the wish to reduce life-cycle CO₂ emissions. For some aircraft types and engine types, SAF cannot be used in neat form and must be blended with fossil kerosene. Several types of SAF are currently certified for use at up to 50% blending ratio. Nonetheless, many modern aircraft types and engine types are believed able to handle and use paraffinic SAF at up to 100% blending ratio, so certification limits may change.

Contrails are elongate ice clouds which can form behind aircraft under certain conditions. If ambient conditions support the persistence of a contrail, it can spread to resemble natural cirrus cloud. Contrails and contrail-cirrus are collectively referred to as aviation-induced cloudiness (AIC). AIC has two impacts on the radiative budget of the earth - it can reflect incoming sunlight back into space, so having a cooling effect (e.g. during the day), or can capture infrared radiation which might otherwise escape from the Earth, leading to a warming effect (day and/or night). For current patterns of aviation activity, the net effect of AIC is believed heat trapping similar in magnitude to the heat trapping attributable to accumulated atmospheric CO₂ from aviation. For an individual contrail, the life-cycle impact may be warming or cooling depending on a number of factors. According to the Schmidt-Appleman criterion, a contrail can form if the local relative humidity over water (RHw) exceeds a threshold during the mixing of engine exhaust with ambient air. Suitable condensation nuclei are also needed to initiate condensation, and the value of the threshold depends upon nuclei characteristics. Typically, soot particles created during incomplete combustion of fuel within an engine can act as condensation nuclei (especially when coated with aqueous sulphuric acid arising from sulphur in the fuel). The proportion of emitted soot particles which become activated as condensation nuclei is influenced by the extent to which local relative humidity over water exceeds the pre-determined threshold.

Due to low ambient temperatures typically encountered at aircraft cruise altitudes, the initially-formed droplets quickly freeze to form ice particles. Adiabatic heating in aircraft wingtip vortices can eliminate some ice particles, reducing the optical depth of the contrail downstream of the vortex. This effect is particularly evident for relatively large/heavy aircraft, but is less evident when ambient air is highly supersaturated with respect to ice. Interactions are therefore complex, as discussed in the literature (see e.g. S. Unterstrasser and I. Sölch, Atmospheric Chemistry and Physics 10.20 (2010): 10003-10015), with a strong dependency upon ambient relative humidity over ice (RHi) of the proportion of contrail ice particles which survive the wingtip vortex. Ice particles which survive the wingtip-vortex make up a contrail whose vertical extent is greatly increased, perhaps to several hundred metres, as a result of wingtip-vortex interaction. Any ambient wind-shear can also cause a vertically-large contrail to spread laterally, covering more sky. Therefore in some cases the product of the contrail's optical depth and its width can be increased by the wingtip vortex interaction, while in others, it can be decreased by the wingtip vortex interaction due to the elimination of ice particles having a greater effect than spatial spreading. Irrespective of the extent of interaction between the engine exhaust plume and the aircraft's wingtip-vortex, if ambient air is subsaturated with respect to ice, then a contrail will last only a few tens of seconds due to sublimation of ice from the initially formed ice particles.

For a typical rich-burn combustor, the number of soot particles emitted per unit mass of fuel burned depends upon engine fuel flow rate. Soot particle generation generally increases with increased fuel flow until the curve reaches an inflection point, and then decreases again. Different combustor designs may lead to curves of different shapes, and the shape of the curve and/or the range of values spanned by the curve will also vary with ambient air pressure, and hence with altitude. For a typical lean-burn combustor, the relationship is typically different with a first region at low fuel flow rates at which only the combustor's pilot burners are operating, in which soot production rises rapidly with increasing fuel flow rate, and a second region in which both the pilot burners and the mains burners are operating, and in which soot generation is much lower and rises only slowly (if at all) with increasing fuel flow rate, with a downward step change at a staging point at which the combustor is switched from pilot only to pilot and main operation. Typically, the position of the staging point is chosen such that the fuel flow rate during most or all cruise conditions falls to the right of the staging point, i.e. in the second region. For a lean-burn combustor, the below discussion of soot generation is relevant primarily to operation in "pilot-only" mode.

The variation in local static temperature and water-vapour partial pressure of a parcel of engine exhaust gas as it mixes with ambient air has a significant effect on contrail formation. The mixing trajectory - from the parcel of engine exhaust gas as it leaves the aircraft engine to that parcel being completely mixed with atmospheric air - also varies significantly based on ambient water-vapour partial pressure. The overall gradient of a mixing trajectory is sometimes known as the contrail factor; different assumptions concerning ambient conditions, engine parameters and fuel parameters will give rise to substantially different mixing trajectories, including in some cases mixing trajectories that do not cross the water vapour saturation curve at all and which therefore correspond to an absence of contrail formation. Increasing the gradient of the overall mixing trajectory may raise the peak value of the local relative humidity over water (RHw) such that a non-contrail forming condition may become a contrail forming condition. Conversely, reducing the gradient of the overall mixing trajectory may lower the peak value of RHw such that a contrail-forming condition may become a non-contrail-forming condition.

During the early stages of mixing engine exhaust with ambient air, shortly after the exhaust leaves the aircraft when temperatures are typically higher, the mixing process drives local RHw to increase. Once condensation starts to take place, there is an opposing effect which drives local RHw downwards. Since not all soot particles are equal (they may differ in size or in the extent of their coating with sulphuric acid), condensation does not start for all simultaneously. Condensation initially starts upon a subset of the soot particles, and the subsequent depletion of local RHw may be sufficient to prevent further soot particles from achieving condensation, so preventing them from forming contrail ice particles. Such circumstances are most likely when the ambient temperature lies only slightly below the Schmidt-Appleman temperature (the ambient air temperature at or below which contrail formation can take place, given the ambient pressure and relative humidity, and other factors such as engine efficiency and fuel properties). In such circumstances, the number of ice particles per unit length of contrail is largely independent of the number of emitted soot particles, since a substantial proportion of the particles do not become condensation nuclei. Conversely, if the mixing is such that local RHw is driven strongly upwards despite the super-saturation-depletion effect of initial condensation, further soot particles can also produce contrail ice particles. Such circumstances are most likely when the ambient temperature lies at least several kelvins below the Schmidt-Appleman temperature. In such circumstances, a variation in the number of soot particles emitted per unit length of aircraft travel can lead to a corresponding variation in the number of ice particles initially formed in a contrail behind the aircraft.

### SUMMARY

The inventors appreciated that CO₂ release is not the only environmental impact that depends on aircraft fuel, and that improved management of aircraft fleet with respect to utilisation of new, "non-default", fuels can have beneficial environmental impacts beyond reducing CO₂ release. The inventors appreciated that, compared to fossil kerosene (as constitutes the majority of current default aviation fuels), SAF, particularly paraffinic SAF comprising low or substantially zero levels of aromatic compounds, also offers substantially lower emissions of soot, or more generally, non-volatile particulate matter (nvPM), which can reduce contrail ice particle formation. However, the high price and low availability of SAF means that it currently constitutes only a very small fraction of global jet fuel use. Typically, SAF is mixed in with a conventional jet fuel supply chain and is thus used at very low blending ratios. Furthermore, the blending ratio is not chosen so as to maximise the value that can be obtained from each unit mass or unit volume of SAF, but is determined simply by an available quantity of SAF relative to an amount of fuel consumed.

For a particular type of SAF, the CO₂ saving relative to fossil kerosene is the same whether we use 1 tonne of a 50% SAF blend or 5 tonnes of a 10% SAF blend or even 50 tonnes of a 1% SAF blend. However, the inventors appreciated that non-CO₂ benefits of the SAF can be greatly increased if a blend ratio is determined dynamically based on available data, rather than using a fixed blend ratio. The contrail climate impact of a single flight can vary between a strong net warming and a strong net cooling, according to a large number of contributing variables.

Compared to fossil kerosene, SAF produces fewer soot particles when burned which - under the right circumstances - can result in a contrail containing fewer ice particles per unit length. Since there are fewer ice particles per unit length of contrail competing for ambient water vapour, those ice crystals may grow more rapidly. At a given age they may therefore be larger and as a result may even have a shorter lifetime due to earlier sedimentation. Both of these effects (fewer ice particles and shorter lifetime) may reduce the magnitude of the contrail's climate impact (see e.g. 3.1.1 of R. Teoh et al., Environmental Science & Technology 2022 56 (23), 17246-17255), depending on other factors. The use of SAF on flights with an overall cooling contrail climate impact is likely to disadvantageously increase aviation's overall contrail climate warming impact, however and its use on flights with substantially no contrail climate warming provides less of an advantageous reduction in aviation's overall contrail climate warming impact than if the same fuel were to be used on better-selected flights.

The use of SAF on flights with an overall warming contrail impact presents an opportunity to advantageously reduce aviation's overall contrail climate warming impact. Particularly if SAF is available only in small quantities, as is currently the case, it is desirable to prioritise SAF usage to the flights which present the largest opportunity to reduce contrail warming.

Although in general the use of a fuel blend comprising a higher proportion (i.e. higher mass fraction) of SAF is likely to result in fewer soot particles and hence a reduction in the magnitude of contrail climate impact, it will sometimes be the case that a higher SAF blend ratio can cause formation of a contrail in circumstances where a lower SAF blend ratio would not cause contrail formation at all. This change from a non-contrail-forming condition to a contrail-forming condition may arise due to an increase in the gradient of the mixing line due to increased water vapour emissions per unit of fuel energy. The inventors appreciated that careful consideration of variables is therefore required. The inventors also appreciated that aircraft type, engine type, altitude, and weather/atmospheric conditions are all relevant factors, as laid out above.

The inventors have derived computationally low-cost allocation methods for a non-default fuel, taking account of the specific characteristics of the problem at hand, which avoid the need for high-complexity optimisation schemes and may be quicker to implement and easier for the end-user to understand. The inventors have also laid out methods for assessing and improving the robustness of proposed non-default fuel allocation schedules to imperfections in meteorological forecasts, particularly forecasts of ice-supersaturated regions (ISSRs).

The inventors appreciated that careful fuel allocation can be used to improve environmental outcomes whenever two fuels differ in at least one fuel characteristic relevant to environmental outcome, whether or not the second, "non-default", fuel is SAF or a SAF blend. The differing fuel characteristic(s) may be or comprise parameters of a hydrocarbon distribution of the fuel, or relating to one or more additive or other elements present. The fuel characteristic(s) may be or comprise one or more of the following:
i. the percentage of sustainable aviation fuel (SAF) in the fuel;
ii. the aromatic hydrocarbon content of the fuel;
iii. the multi-aromatic hydrocarbon content of the fuel;
iv. the percentage of nitrogen-containing species in the fuel;
v. the hydrogen to carbon ratio (H/C) of the fuel;
vi. the hydrocarbon distribution of the fuel;
vii. the level of non-volatile particulate matter (nvPM) emissions on combustion (e.g. on combustion for a given combustor design, at a given operating condition);
viii. naphthalene content of the fuel;
ix. sulphur content of the fuel;
x. cycloparaffin content of the fuel;
xi. oxygen content of the fuel;
xii. level of coking of the fuel; and
xiii. one or more properties such as density, viscosity, calorific value, and/or heat capacity.

According to an aspect, there is provided a computer implemented method of determining an overall fuel allocation for a plurality of missions carried out by one or more aircraft, the plurality of missions being supplied with fuel from a fuel source, the fuel source comprising an amount of a first fuel and an amount of a second fuel, each mission of the plurality of missions being supplied with an amount of the first fuel and an amount of the second fuel, the overall fuel allocation indicating an amount of the first fuel and an amount of the second fuel to be allocated to each mission of the plurality of missions, the first fuel and the second fuel having one or more fuel characteristics different from each other, the method comprising:
determining one or more utility values for each mission of the plurality of missions, wherein the or each utility value for each mission is based on the same one or more of a predicted contrail outcome and a predicted local air quality outcome; and
determining the overall fuel allocation for the plurality of missions based on the or each utility value for each mission.

As used to herein, an amount of a fuel refers to a mass of the fuel or a volume of the fuel as measured under predetermined conditions. The predetermined conditions may be International Standard Atmosphere (ISA) at sea level.

It will be appreciated that an amount of a fuel as referred to anywhere herein could be zero. For example, an amount of the first fuel could be 0 kg of the first fuel and an amount of the second fuel could be 0 kg of the second fuel.

Determining the one or more utility values for each mission of the plurality of missions may comprise, for each mission:
determining a baseline proportion of the second fuel within the amount of fuel to be allocated to the mission;
determining a baseline predicted outcome based on the baseline proportion of the second fuel, wherein the baseline predicted outcome is based on the one or more of the predicted contrail outcome and the predicted local air quality outcome for the baseline proportion of the second fuel;
selecting one or more trial proportions of the second fuel within the amount of fuel to be allocated to the mission; and
for the or each trial proportion of the second fuel:
   determining a trial predicted outcome based on the trial proportion of the second fuel, wherein the trial predicted outcome is based on the one or more of the predicted contrail outcome and the predicted local air quality outcome for the trial proportion of the second fuel;
   performing a comparison of the baseline predicted outcome and the trial predicted outcome; and
   determining the utility value based on the comparison of the baseline predicted outcome and the trial predicted outcome.

Determining the baseline predicted outcome and/or the trial predicted outcome may be further based on any residual fuel stored by an aircraft carrying out the respective mission. The residual fuel may be fuel remaining after the aircraft has completed a preceding mission. The amount of the first fuel and the amount of the second fuel supplied to the respective mission may, in practice, be at least partially mixed with the residual fuel or may not be mixed with the residual fuel. For example, the residual fuel may be contained within one or more first fuel tanks, such as fuel tanks arranged within the wings of a respective aircraft, and a first portion of the amount of the first fuel and the amount of the second fuel supplied to the respective mission may be mixed with the residual fuel in the one or more first fuel tanks. A second portion of the amount of the first fuel and the amount of the second fuel supplied to the respective mission may be supplied to a second fuel tank, such as a centre tank arranged within the fuselage of the respective aircraft, such that the second portion of the amount of the first fuel and the amount of the second fuel is not mixed with any residual fuel. The one or more first fuel tanks and the second fuel tank may or may not be fluidly isolated from one another. The baseline predicted outcome and/or the trial predicted outcome may be determined based on an amount and/or composition of the residual fuel and/or the predicted degree of mixing of the amount of the first fuel and the amount of the second fuel and any residual fuel.

The one or more utility values for each mission may comprise a plurality of utility values. The method may comprise, for each mission of the plurality of missions, determining a relationship between proportion of the second fuel within the amount of fuel to be allocated to the mission and utility value. Determining the overall fuel allocation may comprise determining the overall fuel allocation based on the relationship between proportion of the second fuel within the amount of fuel to be allocated to the mission and utility value for each mission. Determining the overall fuel allocation may comprise determining for each mission a proportion of the second fuel within the amount of fuel to be allocated to the mission. The proportion of the second fuel within the amount of fuel to be allocated to each mission may not be constrained to being the same for each mission, such that the proportion of the second fuel within the amount of fuel to be allocated to each mission may vary between the missions.

The method may comprise determining an ordering of the missions of the plurality of missions based on the or each utility value of each mission. Determining the overall fuel allocation may comprise determining the overall fuel allocation based on the ordering of the missions.

Determining the overall fuel allocation may comprise:
i) determining a remaining amount of the second fuel of the fuel source;
ii) selecting a proposed proportion of the second fuel within the amount of fuel to be allocated to the mission for each mission of the plurality of missions, wherein the proposed proportion is the same for each mission;
iii) for each mission, in the ordering of the missions:
   determining a first proposed amount of the second fuel based on the proposed proportion of the second fuel and a total amount of fuel required to carry out the mission;
   determining a second proposed amount of the second fuel based on the first proposed amount of the second fuel and the remaining amount of the second fuel of the fuel source; and
   updating the remaining amount of the second fuel of the fuel source by subtracting the second proposed amount from the remaining amount of the fuel source;
iv) for each mission:
   determining a baseline proportion of the second fuel within the amount of fuel to be allocated to the mission;
   determining an updated proposed proportion of the second fuel within the amount of fuel to be allocated to the mission based on the second proposed amount of the second fuel and the total amount of fuel required to carry out the mission;
   determining a baseline predicted outcome based on the baseline proportion of the second fuel, wherein the baseline predicted outcome is based on the one or more of the predicted contrail outcome and the predicted local air quality outcome for the baseline proportion of the second fuel;
   determining a proposed predicted outcome based on the updated proposed proportion of the second fuel, wherein the proposed predicted outcome is based on the one or more of the predicted contrail outcome and the predicted local air quality outcome for the updated proposed proportion of the second fuel;
   performing a comparison of the baseline predicted outcome and the proposed predicted outcome; and
   determining a further utility value based on the comparison of the baseline predicted outcome and the proposed predicted outcome;
v) determining the sum of the further utility values for the plurality of missions;
vi) repeating steps i) to v) for one or more further predetermined proposed proportions of the second fuel; and
vii) selecting an optimum proportion of the second fuel within the amount of fuel to be allocated to each mission based on the proposed proportion which provides the greatest sum of the further utility values for the plurality of missions.

In another example implementation, determining the overall fuel allocation may comprise:
i) determining a remaining amount of the second fuel of the fuel source;
ii) selecting a proposed proportion of the second fuel within the amount of fuel to be allocated to the mission for each mission of the plurality of missions, wherein the proposed proportion is the same for each mission;
iii) for each mission, in the ordering of the missions:
   determining a first proposed amount of the second fuel based on the proposed proportion of the second fuel and a total amount of fuel required to carry out the mission;
   determining a second proposed amount of the second fuel based on the first proposed amount of the second fuel and the remaining amount of the second fuel of the fuel source; and
   updating the remaining amount of the second fuel of the fuel source by subtracting the second proposed amount from the remaining amount of the fuel source;
iv) for each mission:
   determining a baseline proportion of the second fuel within the amount of fuel to be allocated to the mission;
   determining an updated proposed proportion of the second fuel within the amount of fuel to be allocated to the mission based on the second proposed amount of the second fuel and the total amount of fuel required to carry out the mission;
   determining a baseline predicted outcome based on the baseline proportion of the second fuel, wherein the baseline predicted outcome is based on the one or more of the predicted contrail outcome and the predicted local air quality outcome for the baseline proportion of the second fuel;
   determining a proposed predicted outcome based on the updated proposed proportion of the second fuel, wherein the proposed predicted outcome is based on the one or more of the predicted contrail outcome and the predicted local air quality outcome for the updated proposed proportion of the second fuel;
   performing a comparison of the baseline predicted outcome and the proposed predicted outcome;
   determining a further utility value based on the comparison of the baseline predicted outcome and the proposed predicted outcome;
v) determining the sum of the further utility values for the plurality of missions; and
vi) repeating steps i) to v) for one or more further proposed proportions of the second fuel, wherein the one or more further proposed proportions of the second fuel are determined using an optimisation algorithm; and
vi) selecting an optimum proportion of the second fuel within the amount of fuel to be allocated to each mission based on the proposed proportion which provides the greatest sum of the further utility values for the plurality of missions.

The optimisation algorithm may be any suitable optimisation algorithm, such as those described elsewhere herein.

The method may comprise determining a respective utility value per unit amount of the second fuel. The method may comprise for each mission, for the or each trial or proposed proportion of the second fuel, determining a baseline amount of the second fuel based on the baseline proportion of the second fuel and a total amount of fuel required to carry out the mission, determining a trial or proposed amount of the second fuel based on the trial or proposed proportion of the second fuel and the total amount of fuel required to carry out the mission, determining a difference between the trial or proposed amount of the second fuel and the baseline amount of the second fuel, and determining the utility value per unit of the difference between the trial or proposed amount of the second fuel and the baseline amount of the second fuel. Determining the ordering of the missions may comprise determining the ordering of the missions based on the utility value per unit of the difference between the trial amount of the second fuel and the baseline amount of the second fuel of each mission.

The total amount of fuel required to carry out a respective mission may comprise residual and/or reserve fuel stored in a fuel tank of an aircraft configured to carry out the respective mission, the respective proposed amount of the second fuel based on the respective proposed proportion of the second fuel, and a corresponding amount of the first fuel based on the respective proposed proportion of the second fuel. It will be appreciated that the total amount of fuel required to carry out the respective mission will depend on the amount and composition of the residual and/or reserve fuel, the respective proposed amount of the second fuel and the composition of the second fuel, and the corresponding amount of the first fuel and the composition of the first fuel. The total amount of fuel required to carry out the respective mission may be determined or estimated based on estimated proportions of the second fuel, the first fuel, and the residual and/or reserve fuel in the total amount of fuel required to carry out the respective mission. The estimated proportions may be determined using a suitable iterative approach, taking into account any suitable assumptions.

Determining the overall fuel allocation may comprise, for each mission:
determining an optimum proportion of the first fuel within the amount of fuel to be allocated to the mission based on the optimum proportion of the second fuel;
allocating an amount of the second fuel to each mission of the plurality of missions based on the optimum proportion of the second fuel; and
allocating an amount of the first fuel to each mission based on the optimum proportion of the first fuel.

Determining the overall fuel allocation may comprise performing a constrained optimisation. The overall fuel allocation may be determined based on an objective function to be maximised by the constrained optimisation. Constraints of the constrained optimisation may include:
(i) the amount of the second fuel of the fuel source;
(ii) an amount of energy, and therefore of fuel, to be allocated to each mission; and
(iii) a tolerance to the second fuel of an aircraft arranged to carry out a respective mission .

The objective function to be maximised by the constrained optimisation may be the sum of the utility values for the plurality of missions.

The one or more fuel characteristics are associated with a different environmental impact.

The first fuel may be a default fuel and the second fuel may be a non-default fuel. The non-default fuel may have a higher proportion of sustainable aviation fuel (SAF) than the non-default fuel and/or the non-default fuel may have a higher proportion of a fuel which has been treated to alter its environmental impact than the default fuel.

The predicted contrail outcome may comprise a total contrail energy forcing and/or a contrail energy forcing per unit of fuel consumed during the respective mission.

The predicted local air quality outcome may comprise a total number of nvPM particles emitted by the respective mission below a predetermined altitude and/or a measure of toxicity of nvPM particles emitted by the respective mission. An example of a measure of toxicity of nvPM particles may be size of nvPM particles. For example, smaller nvPM particles may be considered to represent a higher toxicity than larger nvPM particles. Another example of a measure of toxicity of nvPM particles may be surface area per unit mass of nvPM particles.

The method may comprise determining the predicted contrail outcome using a contrail model and/or determining the predicted local air quality model using a local air quality model. The contrail model and/or the local air quality model may be configured to determine the predicted contrail outcome and/or the predicted local air quality outcome in dependence on a fuel composition comprising the respective proportion of the second fuel and a corresponding proportion of the first fuel and one or more of:
i) hydrogen mass fraction of the fuel composition;
ii) aromatic mass fraction of the fuel composition;
iii) naphthalenic mass fraction of the fuel composition;
iv) sulphur mass fraction of the fuel composition;
v) specific energy of the fuel composition;
vi) a planned route of the respective mission;
vii) a planned altitude of the respective mission;
viii) a meteorological forecast for the respective mission;
ix) a payload mass of the respective mission;
x) one or more characteristics of an aircraft carrying out the respective mission;
xi) one or more characteristics of an engine of an aircraft carrying out the respective mission; and
xii) the effects of an overlap between one or more contrails produced by an aircraft carrying out the respective mission and one or more contrails produced by an aircraft carrying out another mission.

The method may comprise selecting missions to include in the plurality of missions based on one or more selection criterion comprising one or more of:
i) missions forming part of one or more selected banks of operations, optionally two or more selected consecutive banks of operations;
ii) missions scheduled to depart during one or more predetermined time periods, optionally two or more predetermined consecutive time periods, optionally wherein the one or more predetermined time periods comprise one or more predetermined time periods during which missions forming part of one or more selected banks of operations are scheduled to depart;
iii) missions to be supplied with fuel from the fuel source, wherein the amount of the second fuel of the fuel source corresponds to a predetermined single delivery of an amount of the second fuel;
iv) missions to be supplied with fuel from the fuel source, wherein the fuel source is a common fuel supply point or the fuel source comprises a common supply point of the second fuel;
v) missions scheduled to depart from one or more predetermined terminals or one or more predetermined airports;
vi) missions scheduled to depart from two or more airports sharing the fuel source or a part of the fuel source comprising the second fuel;
vii) missions operated by one or more predetermined operators;
viii) missions carried out by one or more predetermined categories of aircraft;
ix) missions carried out by one or more predetermined families of aircraft, one or more predetermined sub-families of aircraft, and/or one or more predetermined types of aircraft; and
x) missions carried out by one or more aircraft comprising one or more predetermined engine families, one or more predetermined engine types, and/or one or more engines operating one or more predetermined combustion technologies.

The or each utility value for each mission may be further based on a predicted CO₂ outcome of the respective mission. Each utility value for the plurality of missions may be further based on the predicted CO₂ outcome for the respective missions.

The method may comprise loading fuel onto one or more aircraft carrying out a plurality of missions according to the overall fuel allocation.

Another aspect provides a method of loading fuel onto one or more aircraft carrying out a plurality of missions, the plurality of missions being supplied with fuel from a fuel source comprising an amount of a first fuel and an amount of a second fuel, the method comprising:
determining an overall fuel allocation for the plurality of missions using the method of the preceding aspect; and
loading fuel onto the or each aircraft according to the overall fuel allocation.

The method may comprise blending together the second fuel and the first fuel allocated to each mission of the plurality of missions prior to loading the fuel onto the aircraft carrying out the respective mission.

Another aspect provides a fuel allocation determination system for determining an overall fuel allocation for a plurality of missions carried out by one or more aircraft, the plurality of missions being supplied with fuel from a fuel source comprising an amount of a first fuel and an amount of a second fuel, the overall fuel allocation indicating an amount of the first fuel and an amount of the second fuel to be allocated to each of the plurality of missions, the first fuel and the second fuel having one or more fuel characteristics different from each other, the system comprising:
a utility value determination module configured to determine one or more utility values for each mission of the plurality of missions, wherein the or each utility value for each mission is based on the same one or more of a predicted contrail outcome and a predicted local air quality outcome and each utility value for the plurality of missions is based on the same one or more of the predicted contrail outcome and the predicted local air quality outcome for the respective missions; and
a fuel allocation determination module configured to determine the overall fuel allocation for the plurality of missions based on the or each utility value for each mission.

The system may comprise an initialisation module, wherein the initialisation module may be configured to, for each mission of the plurality of missions:
determine a baseline proportion of the second fuel within the amount of fuel to be allocated to the mission; and
select one or more trial proportions of the second fuel within the amount of fuel to be allocated to the mission; wherein the utility value determination module is configured to:
   determine a baseline predicted outcome based on the baseline proportion of the second fuel, wherein the baseline predicted outcome is based on the one or more of the predicted contrail outcome and the predicted local air quality outcome for the baseline proportion of the second fuel; and
   for the or each trial proportion of the second fuel:
      determine a trial predicted outcome based on the trial proportion of the second fuel, wherein the trial predicted outcome is based on the one or more of the predicted contrail outcome and the predicted local air quality outcome for the trial proportion of the second fuel;
      perform a comparison of the baseline predicted outcome and the trial predicted outcome; and
      determine the utility value based on the comparison of the baseline predicted outcome and the trial predicted outcome.

The fuel allocation determination module may be configured to determine an ordering of the missions of the plurality of missions based on the or each utility value of each mission. The fuel allocation determination module may be configured to determine the overall fuel allocation based on the ordering of the missions.

The initialisation module may be configured to:
i) determine a remaining amount of the second fuel of the fuel source; and
ii) select a proposed proportion of the second fuel within the amount of fuel to be allocated to the mission for each mission of the plurality of missions. The proposed proportion may be the same for each mission. The utility value determination module may be configured to:
iii) for each mission, in the ordering of the missions:
   determine a first proposed amount of the second fuel based on the proposed proportion of the second fuel and a total amount of fuel required to carry out the mission;
   determine a second proposed amount of the second fuel based on the first proposed amount of the second fuel and the remaining amount of the second fuel of the fuel source; and
   update the remaining amount of the second fuel of the fuel source by subtracting the second proposed amount from the remaining amount of the fuel source;
iv) for each mission:
   determine a baseline proportion of the second fuel within the amount of fuel to be allocated to the mission;
   determine an updated proposed proportion of the second fuel within the amount of fuel to be allocated to the mission based on the second proposed amount of the second fuel and the total amount of fuel required to carry out the mission;
   determine a baseline predicted outcome based on the baseline proportion of the second fuel, wherein the baseline predicted outcome is based on the one or more of the predicted contrail outcome and the predicted local air quality outcome for the baseline proportion of the second fuel;
   determine a proposed predicted outcome based on the updated proposed proportion of the second fuel, wherein the proposed predicted outcome is based on the one or more of the predicted contrail outcome and the predicted local air quality outcome for the updated proposed proportion of the second fuel;
   perform a comparison of the baseline predicted outcome and the proposed predicted outcome; and
   determine a further utility value based on the comparison of the baseline predicted outcome and the proposed predicted outcome;
v) determine the sum of the further utility values for the plurality of missions; and
vi) repeat steps i) to v) for one or more further predetermined proposed proportions of the second fuel; wherein the fuel allocation determination module is configured to:
vii) select an optimum proportion of the second fuel within the amount of fuel to be allocated to each mission based on the proposed proportion which provides the greatest sum of the further utility values for the plurality of missions.

In another example implementation, initialisation module may be configured to:
i) determine a remaining amount of the second fuel of the fuel source;
ii) select a proposed proportion of the second fuel within the amount of fuel to be allocated to the mission for each mission of the plurality of missions, wherein the proposed proportion is the same for each mission; wherein the utility value determination module is configured to:
iii) for each mission, in the ordering of the missions:
   determine a first proposed amount of the second fuel based on the proposed proportion of the second fuel and a total amount of fuel required to carry out the mission;
   determine a second proposed amount of the second fuel based on the first proposed amount of the second fuel and the remaining amount of the second fuel of the fuel source; and
   update the remaining amount of the second fuel of the fuel source by subtracting the second proposed amount from the remaining amount of the fuel source;
iv) for each mission:
   determine a baseline proportion of the second fuel within the amount of fuel to be allocated to the mission;
   determine an updated proposed proportion of the second fuel within the amount of fuel to be allocated to the mission based on the second proposed amount of the second fuel and the total amount of fuel required to carry out the mission;
   determine a baseline predicted outcome based on the baseline proportion of the second fuel, wherein the baseline predicted outcome is based on the one or more of the predicted contrail outcome and the predicted local air quality outcome for the baseline proportion of the second fuel;
   determine a proposed predicted outcome based on the updated proposed proportion of the second fuel, wherein the proposed predicted outcome is based on the one or more of the predicted contrail outcome and the predicted local air quality outcome for the updated proposed proportion of the second fuel;
   perform a comparison of the baseline predicted outcome and the proposed predicted outcome;
   determine a further utility value based on the comparison of the baseline predicted outcome and the proposed predicted outcome;
v) determine the sum of the utility values for the plurality of missions; and
vi) repeat steps i) to v) for one or more further proposed proportions of the second fuel, wherein the one or more further proposed proportions of the second fuel are determined using an optimisation algorithm; wherein the fuel allocation determination module is configured to:
vii) select an optimum proportion of the second fuel within the amount of fuel to be allocated to each mission based on the proposed proportion which provides the greatest sum of the utility values for the plurality of missions.

The fuel allocation determination module may be configured to, for each mission:
determine an optimum proportion of the first fuel within the amount of fuel to be allocated to the mission based on the optimum proportion of the second fuel;
allocate an amount of the second fuel to each mission of the plurality of missions based on the optimum proportion of the second fuel; and
allocate an amount of the first fuel to each mission based on the optimum proportion of the first fuel.

According to a further aspect, there is provided a computer implemented method of determining an overall fuel allocation for a plurality of missions carried out by at least one aircraft, the plurality of missions being supplied with fuel from a fuel source comprising an amount of a first fuel and an amount of a second fuel, the fuel allocation indicating an amount of the first fuel and an amount of the second fuel to be allocated to each of the plurality of missions, the first fuel and the second fuel having at least one fuel characteristic different from the other, the method comprising:
for each mission of the plurality of missions:
obtaining an initial proposed fuel allocation, the sum over all missions of the proposed fuel allocations being constrained by the amounts of the first fuel and the second fuel available from the fuel source; and
obtaining mission-specific data on the relationship between the fuel allocation for that mission and a utility value for that mission, the mission utility value being determined according to at least one of a predicted contrail outcome and a predicted local air quality outcome for the use of the given fuel allocation on that mission.

The method further comprises:
defining an incremental amount of the second fuel, the incremental amount of the second fuel being significantly less than an available amount of the second fuel under the initial proposed fuel allocation;
performing an iterative procedure comprising:
   identifying the mission which has the greatest increase in its mission utility value from changing that mission's allocation by the incremental amount of the second fuel, based on the relationship between the fuel allocation for that mission and the mission utility value;
   changing the allocation of the second fuel to the identified mission, the amount of the change being no larger than the incremental amount, thereby updating the proposed fuel allocation for the identified mission, and a corresponding overall proposed fuel allocation, accordingly; and
   determining a remaining available amount of the second fuel under the updated overall proposed fuel allocation.
The iterative procedure is continued until the determined remaining available amount of the second fuel is less than the defined incremental amount. The method further comprises determining the overall fuel allocation for the plurality of missions based on a final overall proposed fuel allocation output from the iterative procedure.

The method may further comprise fuelling the at least one aircraft in accordance with the determined overall fuel allocation.

The method may be a method of determining an overall fuel allocation for a plurality of missions carried out by a plurality of aircraft, and the overall fuel allocation may be referred to as a fleetwide fuel allocation accordingly (as it is applied to a fleet of aircraft).

The incremental amount of the second fuel may be intended to be taken from second fuel unassigned under the initial proposed fuel allocation, such that the available amount is defined as the amount of the second fuel unassigned under the initial proposed fuel allocation. Alternatively or additionally, the incremental amount of the second fuel may be intended to be taken from second fuel currently assigned to a mission, so deallocating the incremental amount of second fuel from that mission, such that the available amount is defined as the amount of the second fuel in that mission's allocation under the initial proposed fuel allocation.

The initial proposed fuel allocation may be entirely the first fuel, with none of the second fuel allocated. This may especially be the case where the first fuel is a widely-available default aviation fuel, and the second fuel is a non-default fuel having at least one different fuel characteristic which influences at least one environmental outcome of use of the fuel in an aircraft. The initial proposed fuel allocation for use in this aspect may instead be an output from the approach of an earlier aspect.

In the step of changing the allocation of the second fuel to the identified mission, the amount of the change may be positive or negative (i.e. an allocation of additional fuel, or a deallocation of fuel). The amount of the change may be selected to be the smallest of:
i) the incremental amount;
ii) the remaining available amount of the second fuel; and
iii) where the change is an allocation of additional second fuel to the mission, an amount of the second fuel which is the maximum amount of additional second fuel the mission can accept without exceeding limitations.

The steps of obtaining an initial proposed fuel allocation and performing the iterative procedure may be repeated with different initial proposed fuel allocations. The method may further comprise:
for each different initial proposed fuel allocation, outputting an overall utility value determined by summing the utility values of all missions in the final updated overall proposed fuel allocation provided by the iterative procedure; and
comparing the output overall utility values, and choosing the final updated overall proposed fuel allocation with the highest overall utility value as the overall fuel allocation. It will be appreciated that, depending on the definition of the utility value, a lowest overall utility value may equivalently be selected instead of a highest overall utility value.

The iterative procedure may include at least one of:
identifying the mission which has the greatest increase, or smallest decrease if none has an increase, in its mission utility value from adding the incremental amount of the second fuel to that mission's allocation, and increasing the proportion of the second fuel allocated to the identified mission in the proposed fuel allocation accordingly; and
identifying the mission which has the greatest increase, or smallest decrease if none has an increase, in its mission utility value from removing the incremental amount of the second fuel from that mission's allocation, and decreasing the proportion of the second fuel allocated to the identified mission in the proposed fuel allocation accordingly, the available amount of the second fuel being the amount of the second fuel allocated to that mission.

The at least one identifying step may comprise: obtaining a mission-specific curve of mission utility value as a function of amount of the second fuel assigned to the mission, for all missions of the plurality of missions; and comparing curve gradients at the currently-allocated amount of the second fuel for each respective mission.

The method may further comprise, if the step of identifying the mission which has the greatest increase in its mission utility value from adding the incremental amount of the second fuel fails to identify a mission, checking if the defined incremental amount of the second fuel can be increased without exceeding the amount of the second fuel still available, and, if so, increasing the increment and repeating the iterative procedure with the new incremental amount. This may assist in avoiding the approach being limited to a local maximum.

The second fuel may comprise a greater proportion of a Sustainable Aviation Fuel - SAF - than the first fuel. Additionally or alternatively, the second fuel may produce less volatile particulate matter (vPM) and/or less non-volatile particulate matter (nvPM) on combustion than the first fuel. Additionally or alternatively, the second fuel may have a greater paraffinic content and/or a higher hydrogen mass fraction than the first fuel. Additionally or alternatively, the second fuel may have a lower aromatic content and/or a lower polycyclic aromatic content and/or a lower sulphur mass fraction than the first fuel. The second fuel may differ from the first fuel in any one or more of the fuel characteristics identified above.

The method may comprise determining a predicted contrail outcome for a given mission and selected fuel allocation for that mission, optionally using a contrail model. In such implementations, the predicted contrail outcome may comprise at least one of (i) a total contrail energy forcing, and (ii) a contrail energy forcing per unit of fuel consumed during the respective mission. In implementations in which a contrail model is used, the contrail model may be arranged to, for each mission obtain weather forecast data of a weather forecast providing an indication of expected atmospheric conditions at least along a route of the mission, and use the weather forecast data in determining the predicted contrail outcome. Weather forecast data for a time period including and after the planned mission may be used, as contrails formed can linger for hours following the passage of an aircraft. Additionally or alternatively, weather forecast data for a region around the route, not just along the route itself, may be used, as contrail ice particles might move or be blown during their lifetime. Local atmospheric conditions, including wind direction and speed, may be assessed when deciding what weather forecast data to use accordingly. The model may be further arranged to, for at least one of the missions, before determining the predicted contrail outcome:
modify the weather forecast data to reflect uncertainties in the expected atmospheric conditions;
determine a modified contrail outcome for the at least one modification of the weather forecast data; and
update the predicted contrail outcome based on the at least one modified contrail outcome.

In implementations in which weather forecast data are modified, the modification of the weather forecast data for a mission may comprise modelling at least one of:
i) advancing or delaying the entire mission by an amount of time;
ii) advancing or delaying the weather forecast by an amount of time;
iii) geographically offsetting the weather forecast by a set distance;
iv) geographically offsetting the mission route by a set distance;
v) altering a cruise altitude of the mission by a set height;
vi) applying perturbations to sections of a mission expected to lie within ice-supersaturated regions; or
vii) randomly perturbing at least one waypoint of the mission.

In implementations in which weather forecast data are modified, the modification of the weather forecast data for a mission may comprise at least one of: (i) adjusting the weather forecast relative to the mission by a time- or space- perturbation amount; and (ii) adjusting the mission relative to the weather forecast by a time- or space- perturbation amount. The method may further comprise, if a perturbation amount below a perturbation threshold provides a modified contrail outcome significantly different from the predicted contrail outcome, giving a low weighting to that predicted contrail outcome.

The method may comprise selecting missions to include in the plurality of missions based on at least one selection criterion selected from:
i) missions forming part of one or more selected banks of operations, and optionally missions forming part or all of two or more selected consecutive banks of operations;
ii) missions scheduled to depart during one or more predetermined time periods, and optionally missions scheduled to depart during two or more predetermined consecutive time periods;
iii) missions to be supplied with fuel from the fuel source, wherein the amount of the second fuel of the fuel source corresponds to a predetermined single delivery of an amount of the second fuel;
iv) missions to be supplied with fuel from the fuel source, wherein the fuel source is a common fuel supply point or the fuel source comprises a common supply point of the second fuel;
v) missions scheduled to depart from one or more predetermined terminal or one or more predetermined airport;
vi) missions scheduled to depart from two or more airports sharing the fuel source or a part of the fuel source comprising the second fuel;
vii) missions operated by one or more predetermined operators;
viii) missions carried out by one or more predetermined categories of aircraft;
ix) missions carried out by one or more predetermined families of aircraft, one or more predetermined sub-families of aircraft, and/or one or more predetermined types of aircraft; and
x) missions carried out by one or more aircraft comprising one or more predetermined engine families, one or more predetermined engine types, and/or one or more engines operating one or more predetermined combustion technologies.

In implementations in which banks of operations are selected, an evening bank may be selected as being of more interest because the departing flights are more likely to form night-time contrails (exclusively warming) than daytime contrails (mixture of warming and cooling), for example. Given the task of allocating a certain amount of second fuel across a plurality of flights, a single bank of departures may be a natural grouping of flights in the same way that a single day's operations is another natural grouping. Calculations may be restricted to the next one or two banks of departures rather than trying to determine fuel allocation for an entire day's departures in one go, potentially to keep calculations simpler than otherwise, and/or to fit in with scheduled fuel deliveries.

The method may comprise selecting one or more missions to exclude from the plurality of missions based on one or more exclusion criterion comprising: missions scheduled for avoidance of ice-supersaturated regions.

The amount of the second fuel of the fuel source made available for use in the method may be a proportion of a total amount of the second fuel available at the fuel source, the proportion of the total amount being the amount available for supplying the plurality of missions. The method may comprise determining the proportion of the total amount based on one or more of:
i) one or more predetermined time periods during which the missions of the plurality of missions are scheduled to depart as a proportion of a total time period during which a total number of missions to be supplied with fuel from the fuel source are scheduled to depart;
ii) a total amount of fuel required by the plurality of missions as a proportion of a total amount of fuel required by a total number of missions to be supplied with fuel from the fuel source;
iii) a total amount of the second fuel required by the plurality of missions assuming each mission of the plurality of missions is supplied with a maximum possible amount of the second fuel as a proportion of a total amount of the second fuel required by a total number of missions to be supplied with fuel from the fuel source assuming each mission of the total number of missions is supplied with a maximum possible amount of the second fuel; and
iv) historical data comprising an average amount of second fuel consumed by at least one historical mission carried out under at least substantially the same conditions as at least one mission of the plurality of missions.

The method may further comprise comparing the overall utility value of the determined overall fuel allocation to a predetermined allocation utility threshold; and:
if the overall utility value is below the predetermined allocation utility threshold, rejecting the determined overall fuel allocation and retaining the second fuel for use for a different plurality of missions; or if the overall utility value is above the predetermined allocation utility threshold, accepting the determined overall fuel allocation.

The method may further comprise selecting missions to include in the plurality of missions, the selection optionally comprising excluding at least substantially all missions for which at least one of the following applies:
(i) a maximum allowed proportion of the second fuel for the mission is zero;
(ii) any contrails from the mission are expected to have a net cooling impact if the mission is performed on purely the first fuel; and
(iii) any contrails from the mission are expected not to form any long-lived contrails irrespective of a proportion of the second fuel used.

According to a further aspect, there is provided a method of loading fuel onto at least one aircraft, the at least one aircraft being scheduled to undertake a plurality of missions, the plurality of missions being supplied with fuel from a fuel source comprising an amount of a first fuel and an amount of a second fuel, the first fuel and the second fuel having at least one fuel characteristic different from the other. The method comprises:
determining the respective fuel allocation for each of the plurality of missions using the method of any preceding aspect; and
loading fuel onto the or each aircraft according to the respective determined fuel allocation.

The method may further comprise blending together the second fuel and the first fuel allocated to a given mission of the plurality of missions prior to loading the fuel onto the aircraft scheduled to perform the given mission.

According to a further aspect, there is provided a non-transitory computer readable medium having stored thereon instructions that, when executed by a processor, cause the processor to perform the method of the preceding aspect.

According to a further aspect, there is provided an overall fuel allocation determination system for determining an overall fuel allocation for a plurality of missions carried out by at least one aircraft, the plurality of missions being supplied with fuel from a fuel source comprising an amount of a first fuel and an amount of a second fuel, the fuel allocation indicating an amount of the first fuel and an amount of the second fuel to be allocated to each of the plurality of missions, the first fuel and the second fuel having at least one fuel characteristic different from the other. The system comprises:
an initialisation module arranged to obtain an initial proposed fuel allocation for each of the plurality of missions, the sum over all missions of the proposed fuel allocations being constrained by the amounts of the first fuel and the second fuel available from the fuel source;
a utility value management module arranged to, for each mission of the plurality of missions, obtain mission-specific data on the relationship between the fuel allocation for that mission and a utility value for that mission, the mission utility value being determined according to at least one of a predicted contrail outcome and a predicted local air quality outcome for the use of the given fuel allocation on that mission;
an iteration module arranged to perform an iterative procedure comprising:
identifying the mission which has the greatest increase in its mission utility value from changing that mission's allocation by a defined incremental amount of the second fuel, based on the relationship between the fuel allocation for that mission and the mission utility value;
changing the allocation of the second fuel to the identified mission, the amount of the change being no larger than the incremental amount, thereby updating the proposed fuel allocation for the identified mission, and a corresponding overall proposed fuel allocation, accordingly;
determining a remaining available amount of the second fuel under the updated overall proposed fuel allocation;
returning to the identifying step and repeating the iterative procedure until the determined remaining available amount of the second fuel is less than the defined incremental amount; and
an overall fuel allocation determination module arranged to determine the overall fuel allocation for the plurality of missions based on a final overall proposed fuel allocation output from the iterative procedure.

The system may further comprise a fuelling station arranged to provide fuel to the one or more aircraft in line with the determined overall fuel allocation.

The system may further comprise a modelling module comprising at least one of:
a contrail model arranged to model the predicted contrail outcome of performance of at least one mission of the plurality of missions, as dependent on the fuel allocation to that mission, and to output a contrail outcome for that mission and fuel allocation; and
a local air-quality model arranged to model the predicted local air-quality outcome of performance of at least one mission of the plurality of missions, as dependent on the fuel allocation to that mission, and to output a local air quality outcome for that mission and fuel allocation.

The at least one output outcome for a given mission may be used in determining the utility value of that mission.

According to a further aspect, there is provided a computer implemented method of determining an overall fuel allocation for a plurality of missions carried out by at least one aircraft, the plurality of missions being supplied with fuel from a fuel source comprising an amount of a first fuel and an amount of a second fuel, the fuel allocation indicating an amount of the first fuel and an amount of the second fuel to be allocated to each of the plurality of missions, the first fuel and the second fuel having at least one fuel characteristic different from the other. The method comprises:
obtaining an initial proposed fuel allocation for each of the plurality of missions, the sum over all missions of the proposed fuel allocations being constrained by the amounts of the first fuel and the second fuel available from the fuel source;
performing an overall optimisation in which the proposed fuel allocation of at least one of the plurality of missions is modified within the constraints of the total available first and second fuels from the fuel source to maximise an overall utility value over all of the plurality of missions, each of the plurality of missions being associated with a respective mission utility value for a given fuel allocation, the mission utility value being determined according to at least one of a predicted contrail outcome and a predicted local air quality outcome for the use of the given fuel allocation on that mission; and
determining the overall fuel allocation for the plurality of missions based on the overall optimisation.

The method may further comprise fuelling the at least one aircraft in accordance with the determined overall fuel allocation.

The method may be a method of determining an overall fuel allocation for a plurality of missions carried out by a plurality of aircraft, and the overall fuel allocation may be referred to as a fleetwide fuel allocation accordingly.

The fuel allocation for each of the plurality of missions may not be constrained to have the same proportion of the second fuel, such that a percentage of the second fuel in fuel provided for a mission can vary between missions. Alternatively, and as for aspects described above, the fuel allocation for each of the plurality of missions may have the same proportion of first fuel and second fuel, such that a percentage of non-default fuel in fuel provided for the mission is the same for every mission. In such implementations, only volumes of fuel supplied may vary between aircraft/missions on refuelling, with the fuel mix, also described as fuel composition, provided being the same in all cases.

The initial proposed fuel allocation may be entirely the first fuel and none of the second fuel, the first fuel being a default aviation fuel, and the second fuel being a non-default fuel. The non-default fuel may have at least one different fuel characteristic which influences at least one of the contrail outcome and the local air quality outcome of use of the fuel in an aircraft.

The step of performing the overall optimisation may comprise performing a constrained optimisation with the overall utility value defined as an objective function to be maximised (or minimised, as applicable, e.g. if a cost function is used) by the constrained optimisation. The constraints of the constrained optimisation may include one or more of:
(i) the amount of the second fuel available;
(ii) an amount of energy, and therefore of fuel, required to complete each mission; and
(iii) a tolerance to the second fuel of an aircraft arranged to undertake a given mission.

The steps of obtaining an initial proposed fuel allocation and performing an overall optimisation may be repeated with different initial proposed fuel allocations. The output overall utility values obtained using the different initial proposed fuel allocations may be compared before determining the overall fuel allocation.

The modification of the proposed fuel allocation may include at least one of:
(i) identifying the mission which has the greatest increase, or smallest decrease if none has an increase, in its mission utility value from adding a set amount of the second fuel to that mission's allocation, and increasing the proportion of the second fuel allocated to the identified mission in the proposed fuel allocation accordingly; and
(ii) identifying the mission which has the greatest increase, or smallest decrease if none has an increase, in its mission utility value from removing a set amount of the second fuel from that mission's allocation, and decreasing the proportion of the second fuel allocated to the identified mission in the proposed fuel allocation accordingly.

It will be appreciated that the above assumes a utility value is to be maximised to get the desired result - if utility values are instead defined such that a minimum is sought, the directions of the change in mission utility value may be adjusted accordingly.

In implementations in which missions with the desired change(s) in utility value are identified for allocation or deallocation of fuel, the at least one identifying step may comprise:
obtaining a mission-specific curve of mission utility value as a function of amount of the second fuel assigned to the mission, for all missions of the plurality of missions; and
comparing curve gradients at the currently-allocated amount of the second fuel for each respective mission.

The second fuel may comprise a greater proportion of a Sustainable Aviation Fuel - SAF - than the first fuel. Additionally or alternatively, the second fuel may produce less volatile particulate matter (vPM) and/or less non-volatile particulate matter (nvPM) on combustion than the first fuel. Additionally or alternatively, the second fuel may have a greater paraffinic content and/or a higher hydrogen mass fraction than the first fuel. Additionally or alternatively, the second fuel may have a lower aromatic content and/or a lower polycyclic aromatic content and/or a lower sulphur mass fraction than the first fuel. The second fuel may differ from the first fuel in any one or more of the fuel characteristics identified above.

In implementations (of this aspect and/or of one or more preceding aspects) in which a predicted contrail outcome is used, the predicted contrail outcome for a given mission and selected fuel allocation for that mission may be determined using a contrail model. The predicted contrail outcome may comprise at least one of a total contrail energy forcing, and a contrail energy forcing per unit of fuel consumed during the respective mission. The contrail model, where used, may be arranged to, for each mission:
obtain weather forecast data of a weather forecast providing an indication of expected atmospheric conditions at least along a route of the mission, and use the weather forecast data in determining the predicted contrail outcome, and
   for at least one of the missions, to, before determining the predicted contrail outcome:
modify the weather forecast data to reflect uncertainties in the expected atmospheric conditions;
determine a modified contrail outcome for the at least one modification of the weather forecast data; and
update the predicted contrail outcome based on the at least one modified contrail outcome.

In implementations (of this aspect and/or of one or more preceding aspects) in which weather forecast data are modified, the modification of the weather forecast data for a mission may comprise modelling at least one of:
i) advancing or delaying the entire mission by an amount of time;
ii) advancing or delaying the weather forecast by an amount of time;
iii) geographically offsetting the weather forecast by a set distance;
iv) geographically offsetting the mission route by a set distance;
v) altering a cruise altitude of the mission by a set height;
vi) applying perturbations to sections of a mission expected to lie within ice-supersaturated regions; and
vii) randomly perturbing at least one waypoint of the mission.

In implementations in which weather forecast data are modified, the modification of the weather forecast data for a mission may comprise at least one of:
i) adjusting the weather forecast relative to the mission by a time- or space- perturbation amount; and
ii) adjusting the mission relative to the weather forecast by a time- or space-perturbation amount.

The method may further comprise, if a perturbation amount below a perturbation threshold provides a modified contrail outcome significantly different from the predicted contrail outcome, giving a low weighting to that predicted contrail outcome.

The amount of the second fuel of the fuel source made available for use in the method may be a proportion of a total amount of the second fuel available at the fuel source, the proportion of the total amount being the amount available for supplying the plurality of missions. The method may comprise determining the proportion of the total amount based on one or more of:
i) one or more predetermined time periods during which the missions of the plurality of missions are scheduled to depart as a proportion of a total time period during which a total number of missions to be supplied with fuel from the fuel source are scheduled to depart;
ii) a total amount of fuel required by the plurality of missions as a proportion of a total amount of fuel required by a total number of missions to be supplied with fuel from the fuel source;
iii) a total amount of the second fuel required by the plurality of missions assuming each mission of the plurality of missions is supplied with a maximum possible amount of the second fuel as a proportion of a total amount of the second fuel required by a total number of missions to be supplied with fuel from the fuel source assuming each mission of the total number of missions is supplied with a maximum possible amount of the second fuel; and
iv) historical data comprising an average amount of second fuel consumed by at least one historical mission carried out under at least substantially the same conditions as at least one mission of the plurality of missions.

The method may further comprise comparing the overall utility value of the determined overall fuel allocation to a predetermined allocation utility threshold; and:
if the overall utility value is below the predetermined allocation utility threshold, rejecting the determined overall fuel allocation and retaining the second fuel for use for a different plurality of missions; or
if the overall utility value is above the predetermined allocation utility threshold, accepting the determined overall fuel allocation.

The method may further comprise selecting missions to include in the plurality of missions, the selection comprising excluding at least substantially all missions for which at least one of the following applies:
(i) a maximum allowed proportion of the second fuel for the mission is zero;
(ii) any contrails from the mission are expected to have a net cooling impact if the mission is performed on purely the first fuel; and
(iii) any contrails from the mission are expected not to form any long-lived contrails irrespective of a proportion of the second fuel used.

According to a further aspect, there is provided a method of loading fuel onto at least one aircraft, the at least one aircraft being scheduled to undertake a plurality of missions, the plurality of missions being supplied with fuel from a fuel source comprising an amount of a first fuel and an amount of a second fuel, the first fuel and the second fuel having at least one fuel characteristic different from the other. The method comprises:
determining the respective fuel allocation for each of the plurality of missions using the method of any other aspect; and
loading fuel onto the at least one aircraft according to the respective determined fuel allocation.

The method may further comprise blending together the second fuel and the first fuel allocated to a given mission of the plurality of missions prior to loading the fuel onto the aircraft scheduled to perform the given mission.

According to a further aspect, there is provided a non-transitory computer readable medium having stored thereon instructions that, when executed by a processor, cause the processor to perform the method of the preceding aspect.

According to a further aspect, there is provided an overall fuel allocation determination system for determining an overall fuel allocation for a plurality of missions carried out by at least one aircraft, the plurality of missions being supplied with fuel from a fuel source comprising an amount of a first fuel and an amount of a second fuel, the fuel allocation indicating an amount of the first fuel and an amount of the second fuel to be allocated to each of the plurality of missions, the first fuel and the second fuel having at least one fuel characteristic different from the other. The system comprises:
an initialisation module arranged to obtain an initial proposed fuel allocation for each of the plurality of missions, the sum over all missions of the proposed fuel allocations being constrained by the amounts of the first fuel and the second fuel available from the fuel source;
an optimisation module arranged to perform an overall optimisation in which the proposed fuel allocation of at least one of the plurality of missions is modified within the constraints of the total available first and second fuel from the fuel source to maximise an overall utility value over all of the plurality of missions, each of the plurality of missions being associated with a respective mission utility value for a given fuel allocation, the mission utility value being determined according to at least one of a predicted contrail outcome and a predicted local air quality outcome for the use of the given fuel allocation on that mission; and
an overall fuel allocation determination module arranged to determine the overall fuel allocation for the plurality of missions based on the overall optimisation.

The system may further comprise a fuelling station arranged to provide fuel to the one or more aircraft in line with the determined overall fuel allocation.

The system may further comprise a modelling module comprising at least one of:
a contrail model arranged to model the predicted contrail outcome of performance of at least one particular mission of the plurality of missions, as dependent on the fuel allocation to that mission, and to output a predicted contrail outcome for the at least one selected mission and fuel allocation; and
a local air-quality model arranged to model the predicted local air-quality outcome of performance of at least one particular mission of the plurality of missions, as dependent on the fuel allocation to that mission, and to output a predicted local air quality outcome for the at least one selected mission and fuel allocation.

The at least one output outcome for a given mission may be used in determining the utility value of that mission.

In some implementations of one or more of the above aspects, the fuel allocation for each of the plurality of missions has the same proportion of first fuel and second fuel, such that a percentage of second fuel in fuel provided for a mission is the same for every mission. Each aircraft is therefore provided with the same blend, and only volume of the fuel provided varies between aircraft/missions.

In other implementations of one or more of the above aspects, the fuel allocation for each of the plurality of missions is not constrained to have the same proportion of first fuel and second fuel, such that a percentage of second fuel in fuel provided for a mission can vary between missions. Each aircraft is therefore provided with a blend chosen for that aircraft/mission (multiple aircraft/missions may be assigned the same blend, but others will be assigned other blends). Volume of the fuel provided again varies between aircraft/missions. The fuel allocation for each of the plurality of missions may therefore differ between missions, such that a proportion of the second fuel within the amount of fuel supplied to at least one mission of the plurality of missions is different from the proportion of the second fuel within the amount of fuel supplied to at least one other mission of the plurality of missions. The method of such examples comprises assessing a relationship between proportion of second fuel for a given mission and the mission utility value of the given mission independently for each mission, and determining a mission-specific proportion of second fuel accordingly.

The overall, or fleetwide, fuel allocation may therefore comprise an individual mission fuel blend definition (e.g. proportion of the second fuel, the remainder being first fuel) for each individual mission of the plurality of missions, or a single fuel blend definition for all missions. In the below, the term "fleetwide utility" is used interchangeably with "overall utility"- however, it will be appreciated that whilst the allocations are typically done on a fleetwide basis for multiple aircraft, the allocations can instead be done for multiple separate refuellings of the same single aircraft for different missions. The term "overall utility", or "overall fuel allocation" is therefore used to explicitly capture such single-aircraft implementations.

As used herein, a "mission" refers to all actions performed powered by fuel in the fuel tank(s) of an aircraft between refuellings of the aircraft. A mission is therefore associated with a specific aircraft selected to perform that mission. For example, an aircraft may be fuelled at airport A, fly from airport A to airport B, and then be fuelled again at airport B. The flight from airport A to airport B is considered a "mission". In another example, an aircraft may be fuelled at airport A, fly a first leg from airport A to airport B, fly a second leg from airport B to airport C, and then be fuelled again at airport C. The first and second legs will together be considered a single "mission".

For example, a mission may consist of a single flight, including the associated engine idling, taxiing, take-off, landing, and also any and all heating, air-conditioning, lighting and/or other power-consuming activities performed by burning the fuel stored in the fuel tank(s) of the aircraft. The aircraft may then be refuelled before a subsequent flight, such that the subsequent flight is a part of a next mission. Alternatively, a mission may comprise multiple flights, and the associated taxiing etc. for each flight, and the aircraft may only be refuelled after having completed the multiple flights, rather than before each flight. It will be appreciated that the propulsion of the aircraft is by far the most power-demanding, and therefore fuel-hungry, part of a mission, and that the flight path(s) associated with a mission therefore at least substantially determine(s) the fuel usage, with additional systems such as lighting (where powered using the fuel) taking only a small fraction of the power / fuel. Whilst these smaller additional power demands must be accounted for in assigning fuel to a mission by providing a small additional allowance for them, the discussion below therefore focuses on propulsive power. Providing fuel to power secondary activities may be reflected in a slight increase to a safety margin of additional fuel supplied beyond that expected to be needed to complete the flight path(s), for example.

In some cases, the same aircraft may return to the same fuel source for fuelling twice (or more) during a time period in which fuel is being provided for the plurality of missions. Two (or more) separate missions to be performed by the same aircraft may therefore be included in the plurality of missions - the "fleet" to be fuelled may therefore include multiple instances of the same aircraft instead of, or as well as, multiple different aircraft.

Although the example implementations described herein relate to a plurality of missions carried out by one or more aircraft, it will be appreciated that other example implementations may relate to a plurality of missions or journeys carried out by one or more vehicles other than an aircraft. In such implementations, the term 'mission(s)' as used herein may be replaced with 'journey(s)' and the term 'aircraft' as used herein may be replaced with 'vehicle'.

As noted elsewhere herein, the present disclosure may apply to any relevant configuration of gas turbine engine. Such a gas turbine engine may be, for example, a turbofan gas turbine engine, an open rotor gas turbine engine (in which the propeller is not surrounded by a nacelle), a turboprop engine or a turbojet engine. Any such engine may or may not be provided with an afterburner. Such a gas turbine engine may be, for example, configured for land or marine-based power generation applications.

A gas turbine engine in accordance with any aspect of the present disclosure may comprise an engine core comprising a turbine, a combustor, a compressor, and a core shaft connecting the turbine to the compressor. Such a gas turbine engine may comprise a fan (having fan blades). Such a fan may be located upstream of the engine core. Alternatively, in some examples, the gas turbine engine may comprise a fan located downstream of the engine core, for example where the gas turbine engine is an open rotor or a turboprop engine (in which case the fan may be referred to as a propeller).

An engine according to the present disclosure may be a gas turbine engine. Such an engine may be a direct drive turbofan engine in which the fan is directly connected to the fan-drive turbine, for example without a gearbox, via a core shaft. In such a direct drive turbofan engine, the fan may be said to rotate at the same rotational speed as the fan-drive turbine. Purely by way of example, the fan-drive turbine may be a first turbine, the core shaft may be a first core shaft, and the gas turbine engine may further comprise a second turbine and a second core shaft connecting the second turbine to the compressor. The second turbine, the compressor, and second core shaft may be arranged to rotate at a higher rotational speed than the first core shaft. In such an arrangement, the second turbine may be positioned axially upstream of the first turbine. The compressor may be a first compressor and the gas turbine engine may further comprise a second compressor. The gas turbine engine may further comprise a third turbine and a third core shaft connecting the third turbine to the second compressor. The third turbine, the second compressor, and the third core shaft may be arranged to rotate at a higher rotational speed than the second core shaft. In such an arrangement, the third turbine may be positioned axially upstream of the second turbine.

An engine according to the present disclosure may be a geared gas turbine engine. In such an arrangement, the engine has a fan that is driven via a gearbox. Accordingly, such a gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only by the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. Such a gearbox may be a single stage. Alternatively, such a gearbox may be a compound gearbox, for example a compound planetary gearbox (which may have the input on the sun gear and the output on the ring gear, and thus be referred to as a "compound star" gearbox), for example having two stages of reduction.

The gearbox may have any desired gear ratio (defined as the rotational speed of the input shaft divided by the rotational speed of the output shaft). For example the gear ratio may be greater than, or may be any of, the following: 2.5, 2.6, 2.7, 2.8, 2.9, 3.0, 3.1, 3.2, 3.3, 3.4, 3.5, 3.6, 3.7, 3.8, 3.9, 4.0, 4.1 or 4.2. The gear ratio may be in an inclusive range bounded by any two of the values in the previous sentence (i.e. the values may form upper or lower bounds). The gear ratio may be, for example, greater than 2.5, for example in the range of from 3.0 to 4.2, or from 3.2 to 3.8. Purely by way of example, the gearbox may be a "star" gearbox having a gear ratio in the range of from 3.1 or 3.2 to 3.8. Purely by way of further example, the gearbox may be a "star" gearbox having a reduction ratio in the range 3.0 to 3.1. Purely by way of further example, the gearbox may be a "planetary" gearbox having a reduction ratio in the range of from 3.3 to 3.6, or from 3.6 to 4.2. Purely by way of further example, the gearbox may be a compound gearbox, for example a compound star gearbox, having a gear ratio of, or at least: 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0. The gear ratio of a compound gearbox, for example a compound star gearbox, may be in an inclusive range bounded by any two of the values in the previous sentence (i.e. the values may form upper or lower bounds), for example in the range of from 4.0 to 14.0, or 6.0 to 12.0, or 8.0 to 10.0. In some arrangements, the gear ratio may be outside these ranges.

In any gas turbine engine as described and/or claimed herein, fuel of a given composition or blend is provided to a combustor, which may be provided downstream of the fan and compressor(s) with respect to the flowpath (for example axially downstream). For example, the combustor may be directly downstream of (for example at the exit of) the second compressor, where a second compressor is provided. By way of further example, the flow at the exit from the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other. For example, the gas turbine engine may be a direct drive turbofan gas turbine engine comprising 11, 12, 13, 14, or 15 compressor stages (in addition to the fan). Such an engine may, for example, comprise 3 stages in the first (or "low pressure") compressor and either 8, 9, 10 or 11 stages in the second (or "high pressure") compressor. Alternatively, such an engine may, for example, comprise 4 stages in the first (or "low pressure") compressor and either 8, 9, 10 or 11 stages in the second (or "high pressure) compressor. Alternatively, such an engine may, for example, comprise 7, 8 or 9 stages in a first (or "intermediate pressure") compressor and 5, 6 or 7 stages in the second (or "high pressure) compressor. By way of further example, the gas turbine engine may be a "geared" gas turbine engine (in which the fan is driven by a first core shaft via a reduction gearbox) comprising 11, 12, 13, 14 or 15 compressor stages (in addition to the fan). Such an engine may comprise 3 or 4 stages in the first (or "low pressure") compressor and 8, 9, or 10 stages in the second (or "high pressure") compressor. By way of further example, the gas turbine engine may be a "geared" gas turbine engine having 4 stages in the first (or "low pressure") compressor and 10 stages in the second (or "high pressure") compressor.

The or each turbine (for example the first turbine and second turbine as described above) may comprise any number of stages, for example multiple stages. Each stage may comprise a row of rotor blades and a row of stator vanes, or vice versa, as required. The respective rows of rotor blades and stator vanes may be axially offset from each other. In each stage, the row of rotor blades may be arranged downstream from the respective row of stator vanes. By way of example, the gas turbine engine may comprise 5, 6, 7, 8, or 9 turbine stages. For example, the gas turbine engine may be a "geared" gas turbine engine comprising 5, 6, or 7 turbine stages. Such a geared gas turbine engine may comprise a second ("high pressure") turbine having 2 stages. Such a geared gas turbine engine may comprise a first (or "low pressure") turbine having 3, or 4 stages. By way of further example, the gas turbine engine may be a direct drive gas turbine engine comprising a first (or "low pressure") turbine having 3, 4, 5, 6 or 7 stages. Such a direct drive gas turbine engine may comprise a second (or "high pressure") turbine having 2 stages. Alternatively, such an engine may, for example, comprise a second (or "intermediate pressure") turbine having 1, 2 or 3 stages. Such a direct drive gas turbine engine may also comprise a third (or "high pressure") turbine having 1, 2 or 3 stages. By way of further example, the first (or "low pressure") turbine may comprise 6 stages and the third (or "high pressure") turbine may comprise 1 stage.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than, or may be any of: 0.50, 0.49, 0.48, 0.47, 0.46, 0.45, 0.44, 0.43, 0.42, 0.41, 0.40, 0.39, 0.38, 0.37, 0.36, 0.35, 0.34, 0.33, 0.32, 0.31, 0.30, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32, or from 0.29 to 0.30. These ratios may commonly be referred to as the hub-to-tip ratio. Purely by way of non-limitative example, the hub-to-tip ratio may be in the range of from 0.40 to 0.50, from 0.42 to 0.48, or from 0.43 to 0.47. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than , or may be any of: 140 cm, 170 cm, 180 cm, 190 cm, 200 cm, 205 cm, 206 cm, 207 cm, 208 cm, 209 cm, 210 cm, 211 cm, 212 cm, 213 cm, 214 cm, 215 cm, 216 cm, 217 cm, 218 cm, 219 cm, 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 345 cm, 350 cm, 355 cm, 360 cm (around 140 inches), 370 cm (around 145 inches), 380 cm (around 150 inches), 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 210 cm to 240 cm, from 250 cm to 280 cm, from 320 cm to 380 cm, or 380 cm to 420 cm. Purely by way of non-limitative example, the fan diameter may be in the range of from 170 cm to 180 cm, 190 cm to 200 cm, 200 cm to 210 cm, 210 cm to 220 cm, 210cm to 230cm, 220 cm to 230 cm, 260 to 270 cm, 280 cm to 290cm, 290 cm to 300 cm, or 340 cm to 360 cm.

The rotational speed of the fan may vary in use. Generally, the rotational speed is lower for fans with a higher diameter. Purely by way of non-limitative example, the rotational speed of the fan at cruise conditions may be less than, or may be any of the following: 3500 rpm, 3450 rpm, 3400 rpm, 3350 rpm, 3300 rpm, 3250 rpm, 3200 rpm, 3150 rpm, 3100 rpm, 3050 rpm, 3000 rpm, 2950 rpm, 2900 rpm, 2850 rpm, 2800 rpm, 2750 rpm, 2700 rpm, 2650 rpm, 2600 rpm, 2550 rpm, 2500 rpm, 2450 rpm, 2400 rpm, 2350 rpm, 2300 rpm, 2250 rpm, 2200 rpm, 2150 rpm, 2100 rpm, 2050 rpm, 2000 rpm, 1950 rpm, 1900 rpm, 1850 rpm, 1800 rpm, 1750 rpm, 1700 rpm, 1650 rpm, 1600 rpm, 1550 rpm, 1500 rpm, 1450 rpm, 1400 rpm, 1350 rpm, 1300 rpm, 1250 rpm, 1200 rpm, 1150 rpm, 1100 rpm, 1050 rpm, 1000 rpm, or 950 rpm. The rotational speed of the fan at cruise conditions may be in an inclusive range bounded by any two of the values in the previous sentence (i.e. the values may form upper or lower bounds). Purely by way of further non-limitative example, the rotational speed of the fan at cruise conditions for a "geared" gas turbine engine having a fan diameter in the range of from 200 cm to 210 cm may be in the range of from 2750 to 2900 rpm, from 2750 rpm to 2800 rpm, or 2800 rpm to 2900 rpm. Purely by way of further non-limitative example, the rotational speed of the fan at cruise conditions for a "geared" gas turbine engine having a fan diameter in the range of from 210 cm to 230 cm may be in the range of from 2500 rpm to 2800 rpm, or from 2500 rpm to 2750 rpm. Purely by way of further non-limitative example, the rotational speed of the fan at cruise conditions for a "geared" gas turbine engine having a fan diameter in the range of from 340 cm to 360 cm may be in the range of from 1500 rpm to 1800 rpm, or from 1500 rpm to 1700 rpm. Purely by way of further non-limitative example, the rotational speed of the fan at cruise conditions for a "geared" gas turbine engine having a fan diameter in the range of from 380 cm to 420 cm may be in the range of from 950 rpm to 1500 rpm, from 950 rpm to 1200 rpm, from 950 rpm to 1100 rpm, from 950 rpm to 1050 rpm, from 950 rpm to 1000 rpm, or from 1000 rpm to 1050 rpm. Purely by way of further non-limitative example, the rotational speed of the fan at cruise conditions for a direct drive engine having a fan diameter in the range of from 170 cm to 200 cm may be in the range of from 3400 to 4600 rpm, for example from 3600 to 4600 rpm, or from 3600 to 3900 rpm. Purely by way of further non-limitative example, the rotational speed of the fan at cruise conditions for a direct drive engine having a fan diameter in the range of from 300 cm to 350 cm may be in the range of from 1800 to 3200 rpm, or from 1950 to 2900 rpm. Purely by way of further non-limitative example, the rotational speed of the fan at cruise conditions for a direct drive engine having a fan diameter in the range of from 270 cm to 290 cm may be in the range of from 1800 to 2900 rpm, or from 2050 to 2700 rpm. Purely by way of further non-limitative example, the rotational speed of the fan at cruise conditions for a direct drive engine having a fan diameter in the range of from 290 cm to 310 cm may be in the range of from 1800 to 2950 rpm, or from 2100 to 2700 rpm.

In use of the gas turbine engine, the fan (with associated fan blades) rotates about a rotational axis. This rotation results in the tip of the fan blade moving with a velocity Utip. The work done by the fan blades on the flow results in a rise dH in specific enthalpy of the flow. A fan tip loading may be defined as dH/Utip2, where dH is the rise in specific enthalpy (for example the 1-D average specific enthalpy rise) across the fan and Utip is the (translational) velocity of the fan tip, for example at the leading edge of the tip (which may be defined as fan tip radius at leading edge multiplied by angular speed). The fan tip loading at cruise conditions may be greater than, or may be any of the following: 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39 or 0.40 (all values being dimensionless). The fan tip loading may be in an inclusive range bounded by any two of the values in the previous sentence (i.e. the values may form upper or lower bounds), for example in the range of from 0.15 to 0.20, from 0.28 to 0.35, from 0.29 to 0.35, from 0.29 to 0.30, or from 0.30 to 0.35 (for example for a geared gas turbine engine).

In use of the gas turbine engine, the fan has a fan tip pressure ratio being defined as the ratio of the total pressure of the flow downstream of the fan that subsequently flows through the bypass duct to the total pressure of the flow at the inlet to the fan. The fan tip pressure ratio at cruise conditions may be greater than 1.30, 1.31, 1.32, 1.33, 1.34, 1.35, 1.36, 1.37, 1.38, 1.39, 1.40, 1.41, 1.42, 1.43, 1.44, 1.45, 1.46, 1.47, 1.48, 1.49, 1.50. The fan tip loading may be in an inclusive range bounded by any two of the values in the previous sentence (i.e. the values may form upper or lower bounds), for example in the range of from 1.30 to 1.50, from 1.37 to 1.50, from 1.42 to 1.50.

Gas turbine engines in accordance with the present disclosure may have any desired bypass ratio (BPR), where the bypass ratio is defined as the ratio of the mass flow rate of the flow through the bypass duct to the mass flow rate of the flow through the core. In some arrangements the bypass ratio at cruise conditions may be greater than, or may be any of the following: 8.0, 8.5, 9.0, 9.5, 10.0, 10.1, 10.2, 10.3, 10.4, 10.5, 10.6, 10.7, 10.8, 10.9, 11.0, 11.1, 11.2, 11.3, 11.4, 11.5, 11.6, 11.7, 11.8, 11.9, 12.0, 12.1, 12.2, 12.3, 12.4, 12.5, 13.0, 13.5, 14.0, 14.5, 15.0, 15.5, 16.0, 16.5, 17.0, 17.5, 18.0, 18.5, 19.0, 19.5 or 20.0. The bypass ratio at cruise conditions may be in an inclusive range bounded by any two of the values in the previous sentence (i.e. the values may form upper or lower bounds), for example in the range of from 10.0 to 16.0, from 12.0 to 16.0, 13.0 to 15.0, or from 13.0 to 14.0. Purely by way of non-limitative example, the bypass ratio at cruise conditions of a direct drive gas turbine engine according to the present disclosure may be in the range of from 8 to 1, from 8 to 10, from 9 to 11, from 9 to 10, from 10 to 16, from 12 to 16, from 13 to 15, or from 13 to 14. Purely by way of further non-limitative example, the bypass ratio at cruise conditions of a geared gas turbine engine according to the present disclosure may be in the range of from 10.0 to 12.0, from 12.0 to 15.0, or from 12.5 to 15.0. The bypass duct may be at least substantially annular. The bypass duct may be radially outside the core engine. The radially outer surface of the bypass duct may be defined by a nacelle and/or a fan case.

The overall pressure ratio (OPR) of a gas turbine engine as described and/or claimed herein may be defined as the ratio of the stagnation pressure at the exit of the highest pressure compressor (before entry into the combustor) to the stagnation pressure upstream of the fan. By way of non-limitative example, the overall pressure ratio of a gas turbine engine as described and/or claimed herein at cruise conditions may be greater than, or may be any of the following: 25, 30, 35, 36, 37, 38, 39, 40, 41, 42, 43, 44, 45, 46, 47, 48, 49, 50, 51, 52, 53, 54, 55, 56, 57, 58, 59, 60, 65, 70, 75. The overall pressure ratio at cruise conditions may be in an inclusive range bounded by any two of the values in the previous sentence (i.e. the values may form upper or lower bounds), for example in the range of from 50 to 70. Purely by way of non-limitative example, the overall pressure ratio at cruise conditions of a geared gas turbine engine having a fan diameter in the range of from 200 cm to 210 cm may be in the range of from 40 to 44. Purely by way of non-limitative example, the overall pressure ratio at cruise conditions of a geared gas turbine engine having a fan diameter in the range of from 210 cm to 230 cm may be in the range of from 44 to 55. Purely by way of non-limitative example, the overall pressure ratio at cruise conditions of a geared gas turbine engine having a fan diameter in the range of from 340 cm to 360 cm may be in the range of from 50 to 60. Purely by way of non-limitative example, the overall pressure ratio at cruise conditions of a direct drive gas turbine engine having a fan diameter in the range of from 170 cm to 200 cm may be in the range of from 35 to 60, or from 40 to 50. Purely by way of non-limitative example, the overall pressure ratio at cruise conditions of a direct drive gas turbine engine having a fan diameter in the range of from 300 cm to 350 cm may be in the range of from 35 to 60, or from 40 to 50. Purely by way of non-limitative example, the overall pressure ratio cruise conditions of a direct drive gas turbine engine having a fan diameter in the range of from 260 cm to 285 cm may be in the range of from 35 to 60, or from 35 to 50. Purely by way of further non-limitative example, the overall pressure ratio at cruise conditions for a direct drive engine having a fan diameter in the range of from 270 cm to 290 cm may be in the range of from 35 to 60, or from 37 to 47. Purely by way of further non-limitative example, the overall pressure ratio at cruise conditions for a direct drive engine having a fan diameter in the range of from 290 cm to 310 cm may be in the range of from 35 to 60, or from 37 to 47.

Specific thrust of an engine may be defined as the net thrust of the engine divided by the total mass flow through the engine. In some examples, specific thrust may depend, for a given thrust condition, upon the specific composition of fuel provided to the combustor. At cruise conditions, the specific thrust of an engine described and/or claimed herein may be less than, or may be any of the following: 150 Nkg⁻¹s, 145 Nkg⁻¹s, 140 Nkg⁻¹s, 135 Nkg⁻¹s, 130 Nkg⁻¹s, 125 Nkg⁻¹s, 120 Nkg⁻¹s, 115 Nkg⁻¹s, 110 Nkg-1s, 105 Nkg-1s, 100 Nkg-1s, 99 Nkg-1s, 98 Nkg-1s, 97 Nkg-1s, 96 Nkg-1s, 95 Nkg-1s, 94 Nkg-1s, 93 Nkg-1s, 92 Nkg-1s, 91 Nkg-1s, 90 Nkg-1s, 89 Nkg-1s, 88 Nkg-1s, 87 Nkg-1s, 86 Nkg-1s, 85 Nkg-1s, 80 Nkg-1s, 75 Nkg⁻¹s, 70 Nkg⁻¹s, 65 Nkg⁻¹s, 60 Nkg⁻¹s, 55 Nkg⁻¹s, 50 Nkg⁻¹s, 45 Nkg⁻¹s, 40 Nkg⁻¹s, 35 Nkg⁻¹s, 30 Nkg⁻¹s, 25 Nkg⁻¹s, 20 Nkg⁻¹s or 15 Nkg⁻¹s. The specific thrust at cruise conditions may be in an inclusive range bounded by any two of the values in the previous sentence (i.e. the values may form upper or lower bounds), for example in the range of from 80 Nkg-1s to 100 Nkg-1s, from 85 Nkg-1s to 100 Nkg-1s, or from 92 Nkg⁻¹s to 100 Nkg-1s. Such engines may be particularly efficient in comparison with conventional gas turbine engines. Purely by way of non-limitative example, the specific thrust at cruise conditions of a geared gas turbine engine having a fan diameter in the range of from 200 cm to 210 cm may be in the range of from 90 Nkg-1s to 98 Nkg-1s, or from 92 Nkg⁻¹s to 98 Nkg-1s. Purely by way of non-limitative example, the specific thrust at cruise conditions of a geared gas turbine engine having a fan diameter in the range of from 210 cm to 230 cm may be in the range of from 90 Nkg-1s to 100 Nkg-1s, or from 95 Nkg-1s to 100 Nkg-1s. Purely by way of non-limitative example, the specific thrust at cruise conditions of a geared gas turbine engine having a fan diameter in the range of from 340 cm to 360 cm may be in the range of from 70 Nkg-1s to 95 Nkg-1s, from 80 Nkg-1s to 95 Nkg-1s, or from 85 Nkg-1s to 95 Nkg-1s. Purely by way of non-limitative example, the specific thrust at cruise conditions of a direct drive gas turbine engine having a fan diameter in the range of from 170 cm to 200 cm may be in the range of from 20 Nkg⁻¹s to 90 Nkg-1s, from 20 Nkg⁻¹s to 80 Nkg-1s, or from 25 Nkg⁻¹s to 70 Nkg-1s. Purely by way of non-limitative example, the specific thrust at cruise conditions of a direct drive gas turbine engine having a fan diameter in the range of from 300 cm to 350 cm may be in the range of from 90 Nkg-1s to 120 Nkg-1s, or from 100 Nkg-1s to 115 Nkg-1s. Purely by way of non-limitative example, the specific thrust at cruise conditions of a direct drive gas turbine engine having a fan diameter in the range of from 260 cm to 285 cm may be in the range of from 20 Nkg-1s to 120 Nkg-1s, from 30 Nkg-1s to 115 Nkg-1s, or from 40 Nkg-1s to 115 Nkg-1s. Purely by way of non-limitative example, the specific thrust at cruise conditions of a direct drive gas turbine engine having a fan diameter in the range of from 270 cm to 290 cm may be in the range of from 90 Nkg-1s to 120 Nkg-1s, or from 95 Nkg-1s to 115 Nkg-1s. Purely by way of non-limitative example, the specific thrust at cruise conditions of a direct drive gas turbine engine having a fan diameter in the range of from 290 cm to 310 cm may be in the range of from 95 Nkg-1s to 130 Nkg-1s, or from 105 Nkg-1s to 125 Nkg-1s.

A gas turbine engine as described and/or claimed herein may have any desired maximum thrust. Purely by way of non-limitative example, a gas turbine as described and/or claimed herein may be capable of producing a maximum thrust of at least, or may be any of the following: 60 kN, 70 kN, 80 kN, 90 kN, 100 kN, 105 kN, 110 kN, 115 kN, 120 kN, 125 kN, 130 kN, 131 kN, 132 kN, 133 kN, 134 kN, 135 kN, 136 kN, 137 kN, 138 kN, 139 kN, 140 kN, 141 kN, 142 kN, 143 kN, 144 kN, 145 kN, 146 kN, 147 kN, 148 kN, 149 kN, 150 kN, 151 kN, 152kN, 153 kN, 154 kN, 155 kN, 160 kN, 170 kN, 180 kN, 190 kN, 200 kN, 250 kN, 300 kN, 350 kN, 375 kN, 400 kN, 425 kN, 450 kN, 475 kN, 500 kN, 525 kN, 550 kN, 575 kN, 600 kN, 625 kN, 650 kN, or 700 kN. The maximum thrust may be in an inclusive range bounded by any two of the values in the previous sentence (i.e. the values may form upper or lower bounds). Purely by way of non-limitative example, a gas turbine as described and/or claimed herein may be capable of producing a maximum thrust in the range of from 65 kN to 150 kN, from 105 kN to 150 kN, from 155 kN to 170 kN, 330 kN to 420 kN, or 350 kN to 400 kN. Purely by way of non-limitative example, the maximum thrust of a geared gas turbine engine having a fan diameter in the range of from 200 cm to 210 cm may be in the range of from 130kN to 160kN, or from 130 kN to 150 kN. Purely by way of non-limitative example, the maximum thrust of a geared gas turbine engine having a fan diameter in the range of from 210 cm to 230 cm may be in the range of from 130 kN to 200 kN, or 135 kN to 180 kN, or 135 kN to 170 kN, or 135 kN to 160 kN, or 135 kN to 150 kN, or 135 kN or 145 kN. Purely by way of non-limitative example, the maximum thrust of a geared gas turbine engine having a fan diameter in the range of from 340 cm to 360 cm may be in the range of from 370 kN to 500 kN. Purely by way of non-limitative example, the maximum thrust of a direct drive gas turbine engine having a fan diameter in the range of from 170 cm to 200 cm may be in the range of from 100 kN to 200 kN, from 110 kN to 180 kN, or from 120 kN to 170 kN. Purely by way of non-limitative example, the maximum thrust of a direct drive gas turbine engine having a fan diameter in the range of from 300 cm to 350 cm may be in the range of from 250 kN to 600 kN, from 270 kN to 550 kN, from 300 kN to 500 kN, from 300 kN to 400 kN or from 425 kN to 525 kN. Purely by way of non-limitative example, the maximum thrust of a direct drive gas turbine engine having a fan diameter in the range of from 260 cm to 285 cm may be in the range of from 250 kN to 450 kN, from 250 kN to 400 kN, or from 250 kN to 350 kN. Purely by way of non-limitative example, the maximum thrust of a direct drive gas turbine engine having a fan diameter in the range of from 270 cm to 290 cm may be in the range of from 250 kN to 500 kN, from 275 kN to 400 kN, or from 275 kN to 375 kN. Purely by way of non-limitative example, the maximum thrust of a direct drive gas turbine engine having a fan diameter in the range of from 290 cm to 310 cm may be in the range of from 250 kN to 550 kN, from 300 kN to 525 kN, or from 300 kN to 500 kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as turbine entry temperature, or TET, may be measured at the exit to the combustor, for example immediately upstream of the first turbine vane, which itself may be referred to as a nozzle guide vane. In some examples, the TET may depend, for a given thrust condition, upon the specific composition of fuel provided to the combustor.

At cruise conditions, the TET may be at least, or may be any of the following: 1400K, 1450K, 1455K, 1460K, 1465K, 1470K, 1475K, 1480K, 1490K, 1495K, 1500K, 1505K, 1510K, 1515K, 1520K, 1525K, 1530K, 1535K, 1540K, 1545K, 1550K, 1555K, 1560K, 1565K, 1570K, 1575K, 1580K, 1585K, 1590K, 1595K, 1600K, 1650K, 1700K, or 1750K. The TET at cruise conditions may be in an inclusive range bounded by any two of the values in the previous sentence (i.e. the values may form upper or lower bounds). Thus, purely by way of non-limitative example, the TET at cruise conditions of a geared gas turbine engine having a fan diameter in the range of from 200 cm to 210 cm may be in the range of from 1540K to 1600K, or 1570K to 1590K. Purely by way of non-limitative example, the TET at cruise conditions of a geared gas turbine engine having a fan diameter in the range of from 210 cm to 230 cm may be in the range of from 1525K to 1650K. Purely by way of non-limitative example, the TET at cruise conditions of a geared gas turbine engine having a fan diameter in the range of from 340 cm to 360 cm may be in the range of from 1550K to 1660K, or 1550K to 1600K. Purely by way of non-limitative example, the TET at cruise conditions of a direct drive gas turbine engine having a fan diameter in the range of from 170 cm to 200 cm may be in the range of from 1400K to 1650K, or from 1425K to 1625K. Purely by way of non-limitative example, the TET at cruise conditions of a direct drive gas turbine engine having a fan diameter in the range of from 300 cm to 350 cm may be in the range of from 1400K to 1650K, from 1425K to 1575K, from 1425K to 1525K, or from 1475K to 1550K. Purely by way of non-limitative example, the TET at cruise conditions of a direct drive gas turbine engine having a fan diameter in the range of from 260 cm to 285 cm may be in the range of from 1400K to 1650K, or from 1425K to 1625K. Purely by way of non-limitative example, the TET at cruise conditions of a direct drive gas turbine engine having a fan diameter in the range of from 270 cm to 290 cm may be in the range of from 1400K to 1600K, from 1425K to 1575K, or from 1450K to 1550K. Purely by way of non-limitative example, the TET at cruise conditions of a direct drive gas turbine engine having a fan diameter in the range of from 290 cm to 310 cm may be in the range of from 1400K to 1650K, from 1450K to 1600K, or from 1475K to 1575K. The TET at cruise conditions may be in an inclusive range bounded by any two of the values of TET in the present paragraph (i.e. the values may form upper or lower bounds), for example 1530K to 1600K.

The maximum TET in use of the engine may be at least, or may be any of the following: 1700K, 1750K, 1755K, 1760K, 1765K, 1770K, 1775K, 1780K, 1785K, 1790K, 1795K, 1800K, 1805K, 1810K, 1815K, 1820K, 1825K, 1830K, 1835K, 1840K, 1845K, 1850K, 1855K, 1860K, 1865K, 1870K, 1875K, 1880K, 1885K, 1890K, 1895K, 1900K, 1905K, 1910K, 1915K, 1920K, 1925K, 1930K, 1935K, 1940K, 1945K, 1950K, 1955K, 1960K, 1965K, 1970K, 1975K, 1980K, 1985K, 1990K, 1995K, 2000K, 2050K, or 2100K. The maximum TET in use of the engine may be in an inclusive range bounded by any two of the values of TET in the present paragraph (i.e. the values may form upper or lower bounds). Thus, purely by way of non-limitative example, the maximum TET of a geared gas turbine engine having a fan diameter in the range of from 200 cm to 210 cm may be in the range of from 1800K to 1960K, from 1850K to 1960K, from 1875K to 1960K, from 1900K to 1960K, or from 1900K to 1950K. Purely by way of non-limitative example, the maximum TET of a geared gas turbine engine having a fan diameter in the range of from 210 cm to 230 cm may be in the range of from 1700K to 1960K, from 1750K to 1900K, from 1750K to 1850K, or from 1750K to 1800K. Purely by way of non-limitative example, the maximum TET of a geared gas turbine engine having a fan diameter in the range of from 340 cm to 360 cm may be in the range of from 1800K to 1960K, from 1800K to 1900K, or from 1850K to 1900K. Purely by way of non-limitative example, the maximum TET of a direct drive gas turbine engine having a fan diameter in the range of from 170 cm to 200 cm may be in the range of from 1700K to 1950K, or from 1750K to 1900K . Purely by way of non-limitative example, the maximum TET of a direct drive gas turbine engine having a fan diameter in the range of from 300 cm to 350 cm may be in the range of from 1700K to 1950K, from 1750K to 1900K, or from 1775K to 1900K. Purely by way of non-limitative example, the maximum TET of a direct drive gas turbine engine having a fan diameter in the range of from 260 cm to 285 cm may be in the range of from 1700K to 1950K, or from 1750K to 1900K. Purely by way of non-limitative example, the maximum TET of a direct drive gas turbine engine having a fan diameter in the range of from 270 cm to 290 cm may be in the range of from 1750K to 1950K, or from 1800K to 1900K. Purely by way of non-limitative example, the maximum TET of a direct drive gas turbine engine having a fan diameter in the range of from 290 cm to 310 cm may be in the range of from 1750K to 2000K, or from 1800K to 1950K. The maximum TET may occur, for example, at a high thrust condition, for example at a maximum take-off (MTO) condition.

A gas turbine engine as described and/or claimed herein may have any desired high-pressure compressor size, also known as core size. The core size defines the size of the core of the engine. Engine core size can be defined as: $Core size = {\dot{m}}_{2} \frac{\sqrt{{T}_{3}}}{{P}_{3}}$ where *ṁ*₂ = the mass flow rate, in lbs per second, of air on entry to the high-pressure compressor, *T*₃ = the temperature, in Kelvin, of air on exit from the high-pressure compressor, and *P*₃ *=* the pressure, in lb inches per second squared per inch squared, of air on exit from the high-pressure compressor. A unit of core size is therefore expressed as: $s ⋅ {K}^{\frac{1}{2}} ⋅ in$

At cruise conditions, the core size may be at least, or may be any of the following: 2.0, 2.5, 3, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, or 20.0. The core size at cruise conditions may be in an inclusive range bounded by any two of the values in the previous sentence (i.e. the values may form upper or lower bounds). Thus, purely by way of non-limitative example, the core size at cruise conditions of a geared gas turbine engine having a fan diameter in the range of from 200 cm to 210 cm may be in the range of from 3.0 to 8.0, 3.5 to 7.0, 4.0 to 6.5, 4.5 to 6.5, or 5.0 to 6.0. Purely by way of non-limitative example, the core size at cruise conditions of a geared gas turbine engine having a fan diameter in the range of from 210 cm to 230 cm may be in the range of from 7.0 to 15.0, 8.0 to 14.0, 9.0 to 13.0, 10.0 to 12.5 or 11.0 to 12.0. Purely by way of non-limitative example, the core size at cruise conditions of a geared gas turbine engine having a fan diameter in the range of from 340 cm to 360 cm may be in the range of from 5.0 to 13.0, 6.5 to 12.5, 7.5 to 11.5, 8.5 to 10.5, or 9.0 to 10.0.

Purely by way of non-limitative example, the core size at cruise conditions of a direct drive gas turbine engine having a fan diameter in the range of from 170 cm to 200 cm may be in the range of from 3 to 12, 3.5 to 11, 3.5 to 10, 3.5 to 9, 3.5 to 8, 4 to 7, 4 to 6.5, 4.5 to 6.5, or 5 to 6. Purely by way of non-limitative example, the core size at cruise conditions of a direct drive gas turbine engine having a fan diameter in the range of from 300 cm to 350 cm may be in the range of from 9 to 17, 10 to 16, 11 to 16, 13 to 14.5 or 13 to 14. Purely by way of non-limitative example, the core size at cruise conditions of a direct drive gas turbine engine having a fan diameter in the range of from 260 cm to 285 cm may be in the range of from 3 to 12, 3.5 to 11, 3.5 to 10, 3.5 to 9, 3.5 to 8, 4 to 7, 4 to 6.5, 4.5 to 6.5, or 5 to 6. Purely by way of non-limitative example, the core size at cruise conditions of a direct drive gas turbine engine having a fan diameter in the range of from 270 cm to 290 cm may be in the range of from may be in the range of from 9 to 13, 10.5 to 12.5, or 11 to 12. Purely by way of non-limitative example, the core size at cruise conditions of a direct drive gas turbine engine having a fan diameter in the range of from 290 cm to 310 cm may be in the range of from 11 to 16, 12 to 15, 13 to 15, or 13 to 14.5. The core size at cruise conditions may be in an inclusive range bounded by any two of the values of core size above (i.e. the values may form upper or lower bounds), for example 4.5 to 9.5.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre composite. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge. The fan blade may have a weight of at least, or may be any of the following: 3.0 kg, 3.5 kg, 4.0 kg, 4.5 kg, 5.0 kg, 5.5 kg, 6.0 kg, 6.5 kg, 7.0 kg, 7.5 kg, 8.0 kg, 8.5 kg, 9.0 kg, 9.5 kg, 10.0 kg, 10.5 kg, 11.0 kg, 11.5 kg, 12.0 kg, 12.5 kg, 13.0 kg, 13.5 kg, 14.0 kg, 14.5 kg, 15.0 kg, 15.5 kg, 16.0 kg, 16.5 kg, 17.0 kg, 17.5 kg, 18.0 kg, 18.5 kg, 19.0 kg, 19.5 kg, or 20.0 kg. The weight of the fan blade may be in an inclusive range bounded by any two of the values of fan blade weight in the previous sentence (i.e. the values may form upper or lower bounds). For example, the weight of the fan blade for a "geared" gas turbine engine having a fan diameter in the range of from 200 cm to 230 may be in the range of from 3.0 kg to 6.0 kg, or 4.0 kg to 6.0 kg, or from 5.0 kg to 5.5 kg.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades may be formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades. Where the fan blades have a carbon fibre composite body, there may be 14, 16 or 18 fan blades. Where the fan blades have a metallic body (for example aluminium-lithium or titanium-alloy), there may be 18, 20 or 22 fan blades.

Where the gas turbine engine is an open rotor or a turboprop engine, the gas turbine engine may comprise two contra-rotating propeller stages attached to and driven by a free power turbine via a shaft. The propellers may rotate in opposite senses so that one rotates clockwise and the other anticlockwise around the engine's rotational axis. Alternatively, the gas turbine engine may comprise a propeller stage and a guide vane stage configured downstream of the propeller stage. The guide vane stage may be of variable pitch. Accordingly, high pressure, intermediate pressure, and free power turbines respectively may drive high and intermediate pressure compressors and propellers by suitable interconnecting shafts. Thus, the propellers may provide the majority of the propulsive thrust.

Where the gas turbine engine is an open rotor or a turboprop engine, one or more of the propeller stages may be driven by a gearbox. The gearbox may be of the type described herein.

As used herein, the terms idle, taxi, take-off, climb, cruise, descent, approach, and landing (or one or more portions thereof) have the conventional meaning and would be readily understood by the skilled person. Thus, for a given gas turbine engine for an aircraft, the skilled person would immediately recognise each term to refer to the entirety, or one or more portions, of an operating phase of the engine within a given mission of an aircraft to which the gas turbine engine is designed to be attached.

Purely by way of non-limitative example, ground idle may refer to an operating phase of the engine where the aircraft is stationary and in contact with the ground, but where there is a requirement for the engine to be running. For example, during idle, the engine may be producing between 3% and 9% of the available thrust of the engine. In further non-limitative examples, the engine may be producing between 5% and 8% of available thrust. In further non-limitative examples, the engine may be producing between 6% and 7% of available thrust. Purely by way of non-limitative example, taxi may refer to an operating phase of the engine where the aircraft is being propelled along the ground by the thrust produced by the engine. For example, during taxi, the engine may be producing between 5% and 15% of available thrust. In further non-limitative examples, the engine may be producing between 6% and 12% of available thrust. In further non-limitative examples, the engine may be producing between 7% and 10% of available thrust. Purely by way of non-limitative example, take-off may refer to an operating phase of the engine where the aircraft is being propelled by the thrust produced by the engine. At an initial stage within the take-off phase, the aircraft may be propelled whilst the aircraft is in contact with the ground. At a later stage within the take-off phase, the aircraft may be propelled whilst the aircraft is not in contact with the ground. For example, during take-off, the engine may be producing between 90% and 100% of available thrust. In further non-limitative examples, the engine may be producing between 95% and 100% of available thrust. In further non-limitative examples, the engine may be producing 100% of available thrust.

Purely by way of non-limitative example, climb may refer to an operating phase of the engine where the aircraft is being propelled by the thrust produced by the engine. For example, during climb, the engine may be producing between 75% and 100% of available thrust. In further non-limitative examples, the engine may be producing between 80% and 95% of available thrust. In further non-limitative examples, the engine may be producing between 85% and 90% of available thrust. For example, climb may refer to an operating phase within an aircraft flight cycle between take-off and the arrival at cruise conditions, the arrival at cruise conditions thus defining the onset of the cruise phase, or a portion thereof, of the aircraft flight. Additionally or alternatively, climb may refer to, for example, a nominal point in, or one or more nominal periods during, an aircraft flight cycle between take-off and landing, where a relative increase in altitude is required, which may require an additional thrust demand of the engine.

As used herein, cruise conditions, which may define the cruise phase, have the conventional meaning and would be readily understood by the skilled person. Thus for a given gas turbine engine for an aircraft, cruise conditions may refer to the operating point of the engine at mid-cruise of a given mission (which may be referred to in the industry as the "economic mission") of an aircraft to which the gas turbine engine is designed to be attached. In this regard, mid-cruise may be regarded as the point in an aircraft flight cycle at which 50% of the total fuel that is burned between top of climb and start of descent has been burned (which may be approximated by the midpoint - in terms of time and/or distance - between top of climb and start of descent). Cruise conditions may thus define an operating point of the gas turbine engine that provides a thrust that would ensure steady state operation (i.e. maintaining a constant altitude and/or a constant Mach Number), or at least a substantially steady state operation (i.e. maintaining an at least substantially constant altitude and/or an at least substantially constant Mach Number) at mid-cruise of an aircraft to which it is designed to be attached, taking into account the number of engines provided to that aircraft. For example, where an engine is designed to be attached to an aircraft that has two engines of the same type, at cruise conditions the engine may provide half of the total thrust that would be required for steady state operation, or at least a substantially steady state operation, of that aircraft at mid-cruise.

In other words, for a given gas turbine engine for an aircraft, cruise conditions may be defined as the operating point of the engine that provides a specified thrust (required to provide - in combination with any other engines on the aircraft - a steady state operation, or at least a substantially steady state operation, of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions may be clearly defined.

Purely by way of non-limitative example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.78, 0.79, or 0.8, on the order of Mach 0.85 or in the range of from 0.8 to 0.85. Any single speed within these ranges may be part of the cruise condition. For some aircraft, the cruise conditions may be outside these ranges, for example, below Mach 0.7 or above Mach 0.9.

Purely by way of non-limitative example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of non-limitative example, the cruise conditions may correspond to a forward Mach number of 0.8 and standard atmospheric conditions (according to the International Standard Atmosphere) at an altitude of 35000ft (10668m). At such cruise conditions, the engine may provide a known required net thrust level. The known required net thrust level is, of course, dependent on the engine and its intended application and may be, for example, a value in the range of from 20kN to 40kN.

Purely by way of further example, the cruise conditions may correspond to a forward Mach number of 0.85 and standard atmospheric conditions (according to the International Standard Atmosphere) at an altitude of 38000ft (11582m). At such cruise conditions, the engine may provide a known required net thrust level. The known required net thrust level is, of course, dependent on the engine and its intended application and may be, for example, a value in the range of from 35kN to 65kN.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

Furthermore, the skilled person would immediately recognise either or both of descent and approach to refer to an operating phase within an aircraft flight cycle between cruise and landing of the aircraft, with approach in particular forming part of the landing and take-off (LTO) phase. Purely by way of non-limitative example, during either or both of descent and approach, the engine may be producing less than 50% of available thrust. In further non-limitative examples, the engine may be producing between 25% and 40% of available thrust. In further non-limitative examples, the engine may be producing between 30% and 35% of available thrust. Additionally or alternatively, descent may refer to a nominal point in an aircraft flight cycle between take-off and landing, where a relative decrease in altitude is required, and which may require a reduced thrust demand of the engine.

In use, at any one of more of the operating conditions and/or thrust settings disclosed or described herein, a reduction in percentage CO₂ mass emissions index (EI), provided by any one or more of the gas turbine engine configurations disclosed or described herein, may be greater than or equal to any of the following: 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.22, 0.24, 0.26, 0.28, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.65, 0.70, 0.75, 0.80, 0.85, 0.90, 0.95, 1.00, 1.10, 1.20, 1.30, 1.40, 1.50, 1.60, 1.70, 1.80, 1.90, 2.00, 2.10, 2.20, 2.30, 2.40, 2.50, 2.60, 2.70, 2.80, 2.90, 3.00, 3.10, 3.20, 3.30, 3.40, 3.50, 3.60, 3.70, 3.80, 3.90, 4.00, 4.50, 5.00, 5.50, or 6.00, when the fuel provided to the combustor comprises sustainable aviation fuel, or a sustainable aviation fuel blend comprising up to 100% sustainable aviation fuel. The percentage CO₂ emissions index (EI) may be expressed in kg of CO₂ per kg of fuel. The percentage reduction provided may be in an inclusive range bounded by any two of the values in the previous sentence (i.e. the values may form upper or lower bounds), for example in the range of from 0.40 to 2.50, from 0.42 to 2.08, or from 0.43 to 2.08.

Purely by way of non-limitative example, the reduction in percentage CO₂ emissions index (EI) may result from the fuel provided to the combustor comprising a hydrogen mass fraction percentage of greater than any one of the following: 13.40, 13.41, 13.42, 13.43, 13.44, 13.45, 13.46, 13.47, 13.48, 13.49, 13.50, 13.51, 13.52, 13.53, 13.54, 13.55, 13.56, 13.57, 13.58, 13.59, 13.60, 13.65, 13.70, 13.75, 13.80, 13.85, 13.90, 13.95, 14.00, 14.10, 14.20, 14.30, 14.40, 14.50, 14.60, 14.70, 14.80, 14.90, 15.00, 15.10, 15.20, 15.30, 15.40, 15.50, 15.60, 15.70, 15.80, 15.90, 16.00, 16.50, 17.00, or 17.50. The hydrogen mass fraction % of the fuel may be in an inclusive range bounded by any two of the values in the previous sentence (i.e. the values may form upper or lower bounds), for example in the range of from 13.41 to 15.30, or from 13.42 to 15.30.

In use, at any one of more of the operating conditions and/or thrust settings disclosed or described herein, a reduction in percentage CO₂ per MJ of fuel energy, provided by any one or more of the gas turbine engine configurations disclosed or described herein, may be greater than or equal to any of the following: 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.22, 0.24, 0.26, 0.28, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.10, 1.20, 1.30, 1.40, 1.50, 1.60, 1.70, 1.80, 1.90, 2.00, 2.10, 2.20, 2.30, 2.40, 2.50, 2.60, 2.70, 2.80, 2.90, 3.00, 3.10, 3.20, 3.30, 3.40, 3.50, 3.60, 3.70, 3.80, 3.90, 4.00, 4.10, 4.20, 4.30, 4.40, 4.50, 4.60, 4.70, 4.80, 4.90, 5.00, 5.50, 6.50, 7.00, or 7.50, when the fuel provided to the combustor comprises sustainable aviation fuel, or a sustainable aviation fuel blend comprising up to 100% sustainable aviation fuel. The percentage reduction provided may be in an inclusive range bounded by any two of the values in the previous sentence (i.e. the values may form upper or lower bounds), for example in the range of from 0.80 to 5.00, from 0.88 to 4.75, or from 0.89 to 4.75.

Purely by way of non-limitative example, the reduction in percentage CO₂ per MJ of fuel energy may result from the fuel provided to the combustor comprising a specific fuel energy (in MJ per kg) of greater than any one of the following: 41.5, 41.6, 41.7, 41.8, 41.9, 42.0, 42.1, 42.2, 42.3, 42.4, 42.5, 42.6, 42.7, 42.8, 42.9, 43.0, 43.1, 43.2, 43.3, 43.4, 43.5, 43.6, 43.7, 43.8, 43.9, 44.0, 44.5, 45.0, 45.5, or 46.0. The specific fuel energy of the fuel may be in an inclusive range bounded by any two of the values in the previous sentence (i.e. the values may form upper or lower bounds), for example in the range of from 42.8 to 45.0, from 43.0 to 44.5, or from 43.0 to 44.0.

As used herein, unless otherwise stated, a range "from value X to value Y" or "between value X and value Y", or the likes, denotes an inclusive range; including the bounding values of X and Y.

According to an aspect, there is provided an aircraft comprising a gas turbine engine as described and/or claimed herein. The aircraft according to this aspect is the aircraft for which the gas turbine engine has been designed to be attached. Accordingly, cruise conditions according to this aspect may correspond to the mid-cruise of the aircraft, as defined elsewhere herein.

According to an aspect, there is provided a method of operating a gas turbine engine as described and/or claimed herein. The operation may be at any suitable condition, which may be as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at any suitable condition, for example the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter contained or described herein may be applied to any aspect and/or combined with any other feature or parameter contained or described herein.

Except where mutually exclusive, any parameter or value contained or described herein may be applied to and/or combined with any one or more further parameters and/or or values contained or described herein. For example, a first parameter or value contained or described herein (for example, parameter A) may be applied to and/or combined with any one or more further parameters and/or values contained or described herein (for example, any one or more of parameter B; parameter C; and parameter D, and so on) to express their relationship. For example, the Skilled Person would understand that where parameter A is disclosed in separation to parameter B, their relationship may be expressed as, for example, A+B, B-A, A-B, A/B, B/A, B*A, or any such further product, application, combination, function, or expression of parameter A relative to parameter B, or vice-versa, as required.

### BRIEF DESCRIPTION OF THE DRAWINGS

Embodiments will now be described by way of example only with reference to the accompanying drawings, which are purely schematic and not to scale, and in which:
FIG. 1 is a sectional side view of a gas turbine engine;
FIG. 2 is a close up sectional side view of an upstream portion of a geared gas turbine engine;
FIG. 3 is a partially cut-away view of a gearbox for a gas turbine engine;
FIG. 4 is a close up sectional side view of a direct drive gas turbine engine;
FIG. 5 is a view of an aircraft with a fuel system comprising multiple tanks;
FIG. 6 is a view of a fleet of aircraft and a fuel allocation system as described herein;
FIG. 7 is an illustration of a computational system for fuel allocation;
FIG. 8 is an illustration of a method for fuel allocation;
FIG. 9 is an illustration of sub-steps of the method for fuel allocation of FIG. 8, in which the proportion of the second fuel is constrained to be the same for each mission;
FIG. 10 is an illustration of further sub-steps of the method for fuel allocation of FIG. 8, in which the proportion of the second fuel is constrained to be the same for each mission;
FIG. 11 is an illustration of sub-steps of the method steps of FIG. 10 according to a first example implementation, in which the method is not constrained by a utility value threshold;
FIG. 12 is an illustration of sub-steps of the method steps of FIG. 10 according to a second example implementation, in which the method is constrained by a utility value threshold;
FIG. 13 is an illustration of a further computational system for fuel allocation;
FIG. 14 is an illustration of a further method for fuel allocation, in which the proportion of the second fuel is not constrained to be the same for each mission;
FIG. 15 is an illustration of a further method for fuel allocation, in which the proportion of the second fuel is not constrained to be the same for each mission;
FIG. 16 is an illustration of a further computational system for fuel allocation; and
FIG. 17 is an example plot of mission utility against proportion of second fuel assigned to that mission, the proportion being expressed here as a percentage.

### DETAILED DESCRIPTION OF THE DISCLOSURE

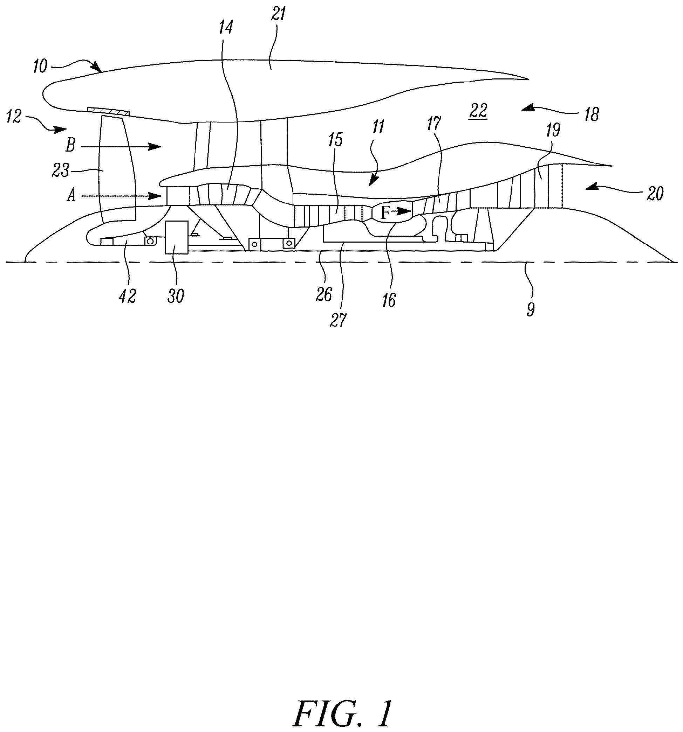

FIG. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a first, low pressure shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel F and the mixture is combusted. The combustion equipment 16 may be referred to as the combustor 16, with the terms "combustion equipment 16" and "combustor 16" used interchangeably herein. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting second, high pressure shaft 27. The fan 23 generally acts to impart increased pressure to the bypass airflow B flowing through the bypass duct 22, such that the bypass airflow B is exhausted through the bypass exhaust nozzle 18 to generally provide the majority of the propulsive thrust. The epicyclic gearbox 30 is a reduction gearbox.

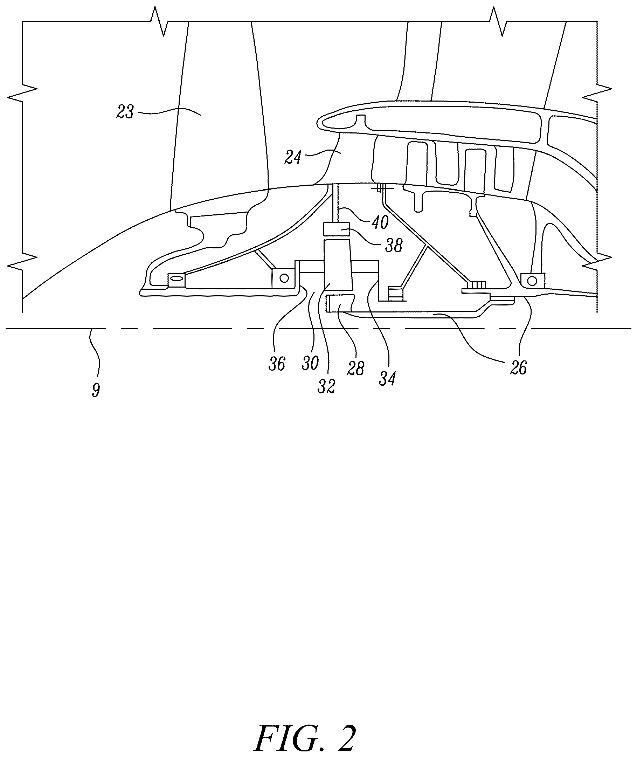

An exemplary arrangement for a geared fan gas turbine engine 10 is shown in FIG. 2. The low pressure turbine 19 (see FIG. 1) drives the low pressure shaft 26, which is coupled to a sun wheel, or sun gear, 28 of the epicyclic gearbox 30. The low pressure shaft 26 may be referred to as an input shaft for the epicyclic gearbox 30. Radially outward of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 through an output fan shaft 42 in order to drive the fan 23 in rotation about the engine axis 9. Radially outward of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft (26) with the lowest rotational speed in the engine (i.e. not including the output fan shaft 42 that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

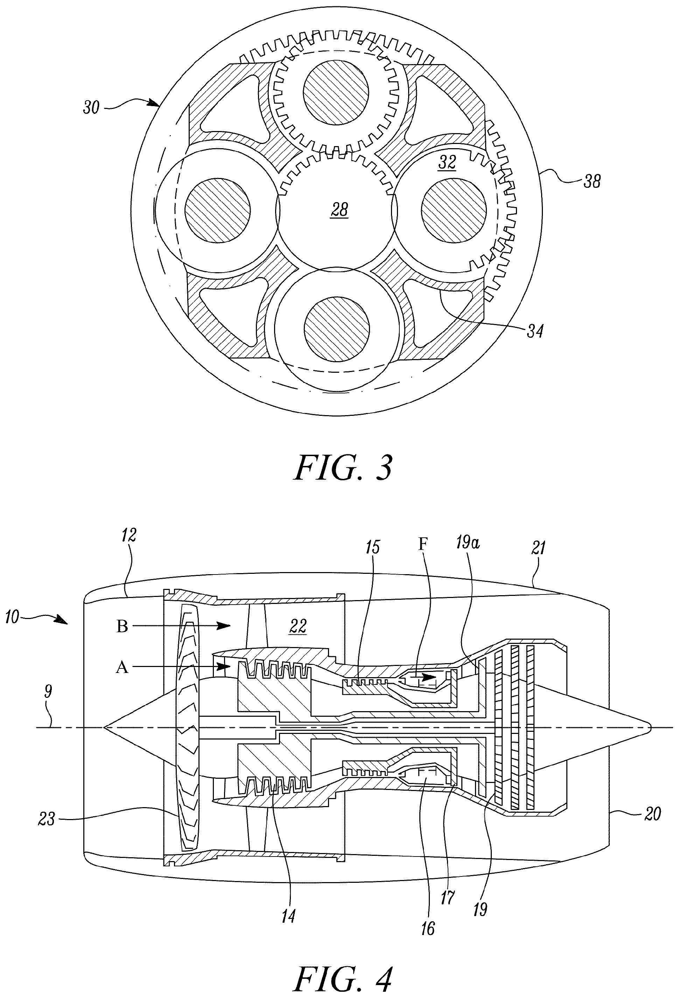

The epicyclic gearbox 30 is shown by way of example in greater detail in FIG. 3. Each of the sun gear 28, planet gears 32 and ring gear 38 comprise teeth about their periphery to intermesh with the other gears. However, for clarity only exemplary portions of the teeth are illustrated in FIG. 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32, for example five planet gears 32.

The epicyclic gearbox 30 illustrated by way of example in Figures 2 and 3 is of the planetary type, in that the planet carrier 34 is coupled to the output fan shaft 42 via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in FIG. 2 and FIG. 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the FIG. 2 example) between the gearbox 30 and other parts of the engine 10 (such as the input shaft 26, the output fan shaft 42 and the stationary supporting structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of FIG. 2. For example, where the gearbox 30 has a star arrangement (described above), the skilled person would readily understand that the arrangement of output and support linkages and bearing locations would typically be different to that shown by way of example in FIG. 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in FIG. 1 has a split flow nozzle 18, 20 meaning that the flow through the bypass duct 22 has its own nozzle (the bypass exhaust nozzle 18) that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

By way of further example, other gas turbine engines to which the present disclosure may be applied may have no gearbox for the main shaft(s), instead being direct drive engines. A cross-sectional view of one such engine is shown in FIG. 4.

With reference to FIG. 4, a gas turbine engine is generally indicated at 10, having a principal rotational axis 9. The engine 10 comprises, in axial flow series, an air intake 12, a propulsive fan 23, an intermediate pressure compressor 14, a high pressure compressor 15, combustion equipment 16, a high pressure turbine 17, an intermediate pressure turbine 19a, a low-pressure turbine 19 and an exhaust nozzle 20. A nacelle 21 surrounds the engine 10 and defines both the intake 12 and the exhaust nozzle 20.

In use, air entering the intake 12 is accelerated by the fan 23 to produce two air flows: a core airflow A and a bypass airflow B. The core airflow A flows into the intermediate pressure compressor 14, and the bypass air flow B passes through a bypass duct 22 to provide propulsive thrust. The intermediate pressure compressor 14 compresses the airflow A before delivering that air to the high pressure compressor 15 where further compression takes place.

The compressed air exhausted from the high-pressure compressor 15 is directed into the combustion equipment 16 where it is mixed with fuel F and the mixture is combusted. The combustion equipment 16 may be referred to as the combustor 16, with the terms "combustion equipment 16" and "combustor 16" used interchangeably herein. The resultant hot combustion products then expand through, and thereby drive, the high, intermediate, and low-pressure turbines 17, 19a, 19 before being exhausted through the nozzle 20 to provide additional propulsive thrust. The high 17, intermediate 19a and low 19 pressure turbines drive respectively the high pressure compressor 15, intermediate pressure compressor 14 and fan 23, each by a suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the principal rotational axis 9), a radial direction (in the bottom-to-top direction in FIG. 1), and a circumferential direction (perpendicular to the page in the FIG. 1 view). The axial, radial and circumferential directions are mutually perpendicular.

The fuel F provided to the combustion equipment 16 may comprise a fossil-based hydrocarbon fuel, such as Kerosene. Thus, the fuel F may comprise molecules from one or more of the chemical families of n-alkanes, iso-alkanes, cycloalkanes, and aromatics. As there is an expectation in the aviation industry of a trend towards the use of fuels different from the traditional kerosene-based jet fuels generally used at present, additionally or alternatively, when blended with, mixed with, or replaced by an alternative fuel, the fuel F may comprise renewable hydrocarbons produced from biological or non-biological resources, otherwise known as sustainable aviation fuel (SAF). In each of the provided examples, the fuel F may comprise one or more trace elements including, for example, sulphur, nitrogen, oxygen, inorganics, and metals.

SAF is understood by the Skilled Person to refer to, for example, a biofuel, renewable aviation fuel, renewable jet fuel, alternative fuel or biojet fuel, produced from biological or non-biological resources. SAF is understood to be commonly synthesised from carbon-containing gasses drawn out of the atmosphere and/or captured from industrial processes; or from a wide range of sustainable feedstocks such as, for example, waste oil and fats; municipal solid waste; cellulosic waste (such as corn stalks); cover crops such as camelina, carinata, and pennycress; non-biogenic alternative fuels; jatropha; halophytes and algae, rather than from fossil-based hydrocarbons. SAF is understood as not encompassing fossil fuels.

Functional performance of a given fuel composition, or blend of fuel F for use in a given mission, may be defined, at least in part, by the ability of the fuel to service the Brayton cycle of the gas turbine engine 10. Parameters defining functional performance may include, for example, specific energy; energy density; thermal stability; and, emissions including gaseous and/or particulate matter. In this regard, particulate matter emissions may include soot particles created by the combustion of said fuel **F,** also known as non-volatile particulate matter (nvPM). Any reference herein to soot or smoke may apply equally to other types of particulate matter emissions known within the art. Gaseous emissions may include any one or more of nitrogen oxides (NOx); carbon monoxide (CO); carbon dioxide (CO2); unburned hydrocarbons (UHC); sulphur oxides (SOx) including, for example, sulphur dioxide (SO2) and/or sulphur trioxide (SO3); and, volatile organic compounds (VOC) created by the combustion of said fuel F. Any reference herein to gaseous emissions may apply equally to other types of gaseous emissions known within the art.

A relatively higher specific energy (i.e. energy per unit mass), expressed as MJ/kg, may at least partially reduce take-off weight, thus potentially providing a relative improvement in fuel efficiency. A relatively higher energy density (i.e. energy per unit volume), expressed as MJ/L, may at least partially reduce take-off fuel volume, which may be particularly important for volume-limited missions or military operations involving refuelling. A relatively higher thermal stability (i.e. inhibition of fuel to degrade or coke under thermal stress) may permit the fuel to sustain elevated temperatures in the engine and fuel injectors, thus potentially providing relative improvements in combustion efficiency. Reduced emissions, including particulate matter, may permit reduced contrail formation, whilst reducing the environmental impact of a given mission. Other properties of the fuel may also be key to functional performance. For example, a relatively lower freeze point (°C) may allow long-range missions to optimise flight profiles; minimum aromatic concentrations (%) may ensure sufficient swelling of certain materials used in the construction of o-rings and seals that have been previously exposed to fuels with high aromatic contents; and, a maximum surface tension (mN/m) may ensure sufficient spray break-up and atomisation of the fuel.

The ratio of the number of hydrogen atoms to the number of carbon atoms in a molecule may influence the specific energy of a given composition, or blend of fuel. Fuels with higher ratios of hydrogen atoms to carbon atoms may have higher specific energies in the absence of bond strain. In some examples, fossil-based hydrocarbon fuels may comprise molecules with approximately 7 to 18 carbon atoms, with a significant portion of a given composition stemming from molecules with 9 to 15 carbons, with an average of 12 carbons.

A number of sustainable aviation fuel blends have been approved for use. For example, some approved blends comprise blend ratios of up to 10% sustainable aviation fuel, whilst other approved blends comprise blend ratios of up to 50% sustainable aviation fuel (the remainder comprising one or more fossil-based hydrocarbon fuels, such as Kerosene), with further compositions awaiting approval. However, there is an anticipation in the aviation industry that sustainable aviation fuel blends comprising up to (and including) 100% sustainable aviation fuel (SAF) will be eventually approved for use.

Sustainable aviation fuels may comprise one or more of n-alkanes, iso-alkanes, cyclo-alkanes, and aromatics, and may be produced, for example, from one or more of synthesis gas (syngas); lipids (e.g. fats, oils, and greases); sugars; and alcohols. Thus, sustainable aviation fuels may comprise either or both of a lower aromatic and sulphur content, relative to fossil-based hydrocarbon fuels. Additionally or alternatively, sustainable aviation fuels may comprise either or both of a higher iso-alkane and cycloalkane content, relative to fossil-based hydrocarbon fuels. In some examples, sustainable aviation fuels may comprise either or both of a density of below 100%, for example between 90% and 98%, that of kerosene and a specific energy of above 100%, for example between 101% and 105%, that of kerosene. For example, the calorific value of sustainable aviation fuels may be between 101% and 105% that of kerosene.

In some examples, the sustainable aviation fuel(s), or blend(s) provided to the combustion equipment 16 may be relatively lower in aromatic and/or other non-paraffinic content than that of kerosene. The sustainable aviation fuel may comprise an aromatic content of e.g. 30%, 20%, 15%, 10%, 8%, 5%, or less than 5%; e.g. 4%, 3%, 2%, 1%, or less than 1%; e.g. 0.75%, 0.5%, 0.25%, or less than 0.25%; e.g. 0.2%, 0.1%, or less than 0.1%; e.g. 0.01%, 0.001%, or 0%. The aromatic content of the sustainable aviation fuel may be in an inclusive figure or range bounded by or within any two of the values in the previous sentence (i.e. the values may form upper or lower bounds), e.g. 13.5%, 8.5%, 2.5%, 0.35%, 0.15%, 0.05%, 0.005%, or 0%; or 0% to 0.75%, 0% to 0.5%, or 0.1% to 0.25%; or 0.15% to 0.65%, 0.35% to 0.55%, or 0.035% to 0.055%; according to one or more of preference, fuel stock or supplier, and compositional variation therein.

Owing at least in part to the molecular structure of sustainable aviation fuels, sustainable aviation fuels may provide benefits including, for example, one or more of a higher specific energy (despite, in some examples, a lower energy density); higher specific heat capacity; higher thermal stability; higher lubricity; lower viscosity; lower surface tension; lower freeze point; lower soot emissions; lower NOx; and, lower CO₂ emissions, relative to fossil-based hydrocarbon fuels (e.g. when combusted in the combustion equipment 16). Accordingly, relative to fossil-based hydrocarbon fuels, such as Kerosene, sustainable aviation fuels may lead to either or both of a relative decrease in specific fuel consumption, and a relative decrease in maintenance costs.

The fuel allocation examples discussed below are described with reference to a first fuel, and a second fuel which is different from the first fuel. The first fuel may be a default fuel and the second fuel may be a non-default fuel. The non-default fuel may have a higher proportion of sustainable aviation fuel (SAF) than the non-default fuel and/or the non-default fuel may have a higher proportion of a fuel which has been treated to alter its environmental impact than the default fuel (for example by removal of sulphur).

As referred to herein, the default fuel may be more readily available (and/or cheaper) than the non-default fuel. The default fuel may comprise or consist essentially of fossil-derived kerosene, Jet-A1, or any other fossil-based fuel. The non-default fuel may comprise or consist essentially of a sustainable aviation fuel (SAF) or a blend of SAF and a fossil-based fuel. The default fuel may comprise or consist essentially of a blend of SAF and a fossil-based fuel, with a lower proportion of SAF than the non-default fuel. The non-default fuel may comprise or consist essentially of fossil-based fuel which has been treated to reduce its non-volatile particulate matter emissions index (ElnvPM) and/or to reduce the ease of activation as condensation nuclei of emitted soot particles, for example by removing some or all non-paraffinic hydrocarbons such as poly-aromatics and/or mono-aromatics and/or by converting some or all such non-paraffinic hydrocarbons to paraffinic forms. The treatment may also reduce the sulphur mass fraction of the resulting fuel relative to a standard fossil kerosene and/or relative to the default fuel type. The ElnvPM may be measured in number or mass of non-volatile particulates emitted per unit mass of fuel combusted. The non-default fuel may comprise or consist essentially of liquefied natural gas (LNG), non-liquified natural gas, gaseous methane, liquid methane, gaseous hydrogen (H2), or liquid hydrogen (LH2).

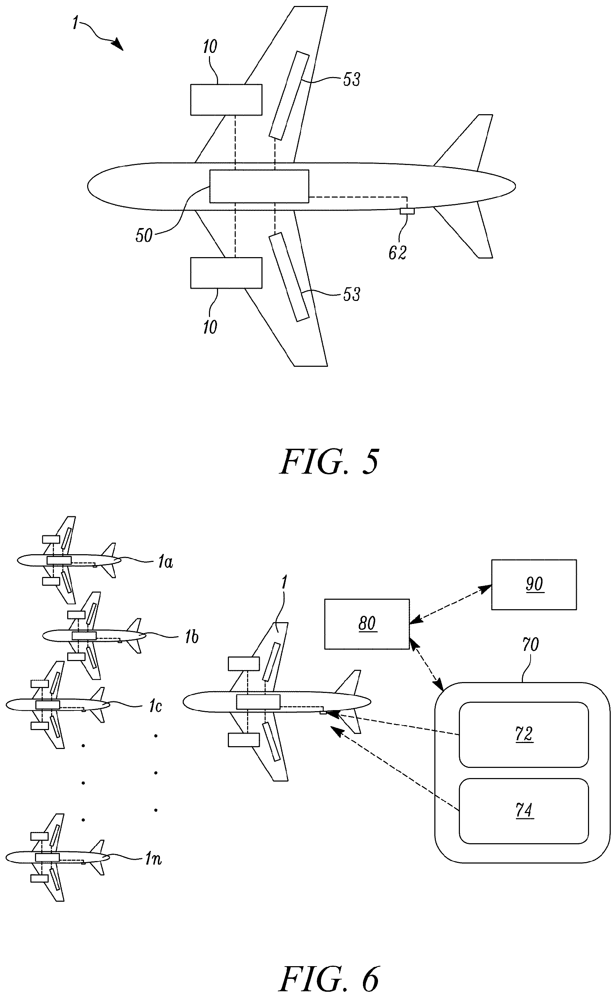

Figure 5 illustrates an aircraft 1 comprising two gas turbine engines 10, a main fuel tank 50 located within the fuselage of the aircraft 1, and a further fuel tank 53 located in each wing of the aircraft 1. The aircraft 1 may be refuelled by connecting a fuel storage vessel, such as that provided by an airport fuel truck or any other fuelling station (stationary or mobile), to a fuel line connection port 62 of the aircraft 1. A desired amount of fuel may be transferred from the fuel storage vessel to the one or more tanks 50, 53 of the aircraft 1 .It will be appreciated that the aircraft 1 of Figure 5 is merely illustrative and that the example methods and systems described herein may be applicable to any suitable aircraft or vehicle, for example to an aircraft 1 with only one fuel tank 50.

Figure 6 illustrates a fleet of aircraft 1a-n. Each aircraft 1a-n of the fleet of aircraft is an aircraft as illustrated in Figure 5. Although a fleet of aircraft is shown in Figure 6, it will be appreciated that other examples may be applicable to a single aircraft configured to carry out a plurality of missions.

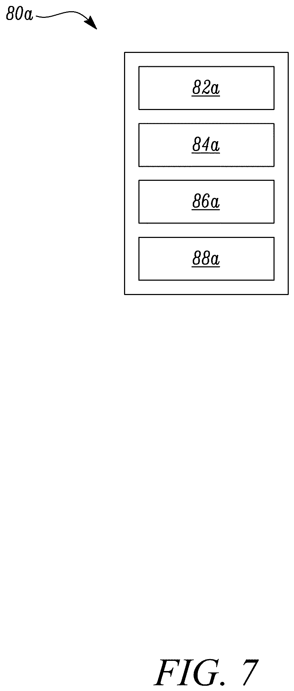

Figure 7 illustrates a computational system 80a for determining an overall fuel allocation for a plurality of missions (a...n) carried out by the aircraft 1a-n of Figure 6. In this example, each aircraft 1an is configured to carry out a different individual mission of the plurality of missions. In other examples, one or more aircraft may be configured to carry out multiple missions of the plurality of missions, including a single aircraft configured to carry out all of the plurality of missions. The plurality of missions (a...n) are supplied with fuel from a fuel source 70 comprising an amount of a first fuel 72 and an amount of a second fuel 74, the overall fuel allocation indicating an amount of the first fuel and an amount of the second fuel to be allocated to each of the plurality of missions, the first fuel and the second fuel having at least one fuel characteristic different from the other.

In this example, the computational system 80a comprises an initialisation module 82a, a modelling module 84a, a utility value determination module 86a, and an overall fuel allocation determination module 88a. Each module may comprise one or more local or distributed processors. Each module may be implemented in software and/or in hardware, and the functions of multiple modules may be provided by a single entity, or the function(s) of a single module may be split across multiple entities. It will be appreciated that the functionality is split into "modules" for ease of description only, and not to limit a computational implementation.

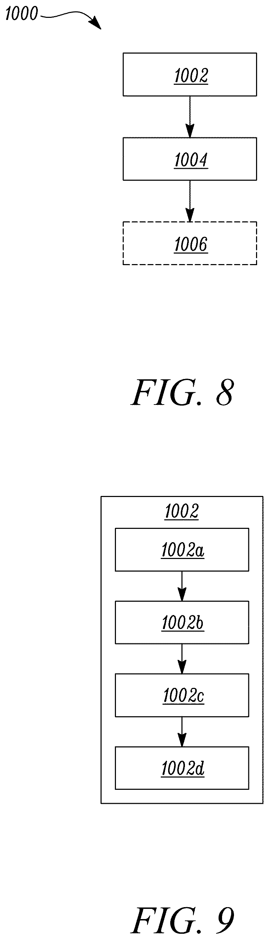

Figure 8 illustrates a method 1000 of determining an overall fuel allocation for the plurality of missions of Figure 6. In the implementation described here, the method 1000 is implemented by the computational system of Figure 7. The method 1000 comprises:
determining 1002 one or more utility values for each mission of the plurality of missions, wherein the or each utility value for each mission is based on the same one or more of a predicted contrail outcome and a predicted local air quality outcome; and
determining 1004 the overall fuel allocation for the plurality of missions based on the or each utility value for each mission.

The method 1000 may further comprise loading 1006 fuel onto the at least one aircraft 1a,...,1n according to the overall fuel allocation determined at step 1004. In such cases, the second fuel and the first fuel allocated to a given mission of the plurality of missions may be blended together prior to loading the fuel onto the respective aircraft 1, or they may be loaded separately and allowed to mix in the onboard fuel tank 50.

Figure 9 illustrates sub-steps of the step of determining 1002 one or more utility values of the method of Figure 8. In this example, determining 1002 one or more utility values comprises, for each mission of the plurality of missions:
determining 1002a a baseline proportion of the second fuel within the amount of fuel to be allocated to the mission;
determining 1002b a baseline predicted outcome based on the baseline proportion of the second fuel, wherein the baseline predicted outcome is based on the one or more of the predicted contrail outcome and the predicted local air quality outcome for the baseline proportion of the second fuel;
selecting 1002c one or more trial proportions of the second fuel within the amount of fuel to be allocated to the mission; and
for the or each trial proportion of the second fuel, determining 1002d the utility value based on the trial proportion of the second fuel. Step 1002d comprises:
   determining a trial predicted outcome based on the trial proportion of the second fuel, wherein the trial predicted outcome is based on the one or more of the predicted contrail outcome and the predicted local air quality outcome for the trial proportion of the second fuel;
   performing a comparison of the baseline predicted outcome and the trial predicted outcome; and
   determining the utility value based on the comparison of the baseline predicted outcome and the trial predicted outcome.

In the implementation described here, steps 1002a and 1002c are implemented by the initialisation module 82a of the computational system 80a of Figure 7. The initialisation module may receive the or each trial proportion and/or instructions indicative of the baseline proportion from the data source/user interface 90 of Figure 6. Steps 1002b and 1002d are implemented by the utility value determination module 86a of the computational system of Figure 7. In other implementations, any of the steps 1002a-d may be implemented by any of the modules of the computational system of Figure 7.

In this implementation, the baseline proportion of the second fuel determined at step 1002a is the same for each mission of the plurality of missions. In this implementation, the baseline proportion is zero, but in other implementations the baseline proportion may be equal to a uniform proportion of the second fuel within the amount of fuel to be allocated to each mission, wherein the uniform proportion is the same for each mission. In this implementation, a single trial proportion of the second fuel is selected at step 1002c, the single trial proportion being the same for each mission. In other implementations, one or more different trial proportions for each mission may be selected.

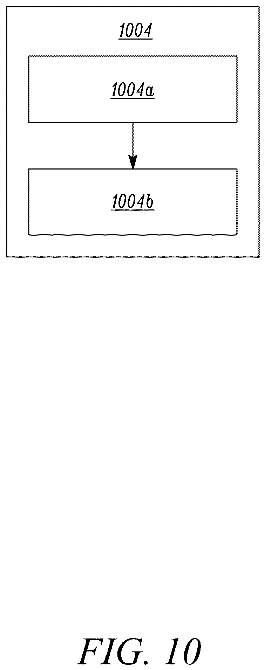

Figure 10 illustrates further steps of determining 1004 the overall fuel allocation of the method of Figure 8. In this example, determining 1004 the overall fuel allocation comprises:
determining 1004a an ordering of the missions of the plurality of missions based on the or each utility value of each mission; and
determining 1004b the overall fuel allocation based on the ordering of the missions.

In the implementation described here, steps 1004a and 1004b are implemented by the overall fuel allocation determination module 88a of the computational system of Figure 7. In other implementations, either of the steps 1004a and 1004b may be implemented by any of the modules of the computational system of Figure 7.

In this example, and optionally in any other example described herein, a positive utility value indicates an improvement in the trial predicted outcome relative to the baseline predicted outcome and a negative utility value indicates a worsening in the trial predicted outcome relative to the baseline predicted outcome. Determining 1004a the ordering of the missions comprises ordering the missions by utility value with the first mission in the ordering having the greatest positive utility value and the last mission in the ordering having the greatest negative utility value.

In implementations where there are only positive utility values, determining 1004a the ordering of the missions comprises ordering the missions with the first mission in the ordering having the greatest positive utility value and the last mission in the ordering having the smallest positive utility value. Where there are both positive and negative utility values, determining 1004a the ordering of the missions comprises ordering the missions with the first mission in the ordering having the greatest positive utility value and the last mission in the ordering having the greatest negative utility value. Where there are only negative utility values, determining the ordering of the missions comprises ordering the missions with the first mission in the ordering having the smallest negative utility value and the last mission in the ordering having the greatest negative utility value. In other implementations, positive and negative utility values may represent something different and the determining the ordering of the missions may be implemented differently as appropriate.

It will be appreciated that both the greatest positive utility value and the smallest positive utility value will both be positive values, with the greatest positive utility value having a greater magnitude than the smallest positive utility value. Similarly, both the greatest negative utility value and the smallest negative utility value will both be negative values, with the greatest negative utility value having a greater magnitude than the smallest negative utility value.

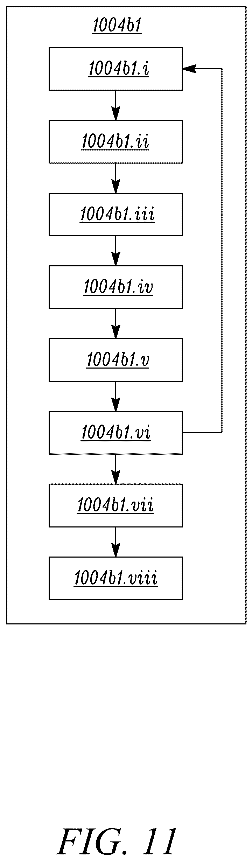

Figure 11 illustrates sub-steps of the step of determining 1004b the overall fuel allocation based on the ordering of the missions of Figure 10 according to a first example implementation 1004b1. In the first example implementation, determining 1004b the overall fuel allocation comprises:
determining 1004b1.i a remaining amount of the second fuel of the fuel source 70;
selecting 1004b1.ii a proposed proportion of the second fuel within the amount of fuel to be allocated to the mission for each mission of the plurality of missions, wherein the proposed proportion is the same for each mission;
performing 1004b1.iii for each mission, in the ordering of the missions, steps comprising:
   determining a first proposed amount of the second fuel based on the proposed proportion of the second fuel and a total amount of fuel required to carry out the mission;
   determining a second proposed amount of the second fuel based on the first proposed amount of the second fuel and the remaining amount of the second fuel of the fuel source; and
   updating the remaining amount of the second fuel of the fuel source by subtracting the second proposed amount from the remaining amount of the fuel source;
determining 1004b1.iv a further utility value for each mission, step 1004b1.iv comprising:
   determining a baseline proportion of the second fuel within the amount of fuel to be allocated to the mission (this baseline proportion may be the same as the baseline proportion described above with reference to Figures 8 and 9, or may be a second, different, baseline proportion);
   determining an updated proposed proportion of the second fuel within the amount of fuel to be allocated to the mission based on the second proposed amount of the second fuel and the total amount of fuel required to carry out the mission;
   determining a baseline predicted outcome based on the baseline proportion of the second fuel, wherein the baseline predicted outcome is based on the one or more of the predicted contrail outcome and the predicted local air quality outcome for the baseline proportion of the second fuel (this baseline predicted outcome may be the same as the baseline predicted outcome described above with reference to Figures 8 and 9, or may be a second, different, baseline predicted outcome);
   determining a proposed predicted outcome based on the updated proposed proportion of the second fuel, wherein the proposed predicted outcome is based on the one or more of the predicted contrail outcome and the predicted local air quality outcome for the updated proposed proportion of the second fuel;
   performing a comparison of the baseline predicted outcome and the proposed predicted outcome; and
   determining a further utility value based on the comparison of the baseline predicted outcome and the proposed predicted outcome;
determining 1004b1.v the sum of the further utility values for the proposed proportion of the second fuel for the plurality of missions;
repeating 1004b1.vi steps 1004b1.i to 1004b1.v for one or more further predetermined proposed proportions of the second fuel; and
selecting 1004b1.vii an optimum proportion of the second fuel within the amount of fuel to be allocated to each mission based on the proposed proportion which provides the greatest sum of the further utility values for the plurality of missions. The sum of the further utility values across all missions for a given proposed proportion of the second fuel or a given fuel allocation may be referred to as a fleetwide utility value.

In the first example implementation 1004b1, steps 1004b1.i and 1004b1.ii are implemented by the initialisation module 82a of the computational system of Figure 7. The initialisation module may receive the or each proposed proportion of the second fuel and/or instructions indicative of the baseline proportion from data source/user interface 90 of Figure 6. Steps 1004b1.iii to 1004b1.vi are implemented by the utility value determination module of the computational system of Figure 7, and step 1004b1.vii is implemented by the overall fuel allocation determination module of the computational system of Figure 7. In other examples, any of the steps 1004b1.i to 1004b1.vii may be implemented by any other module of the computational system of Figure 7.

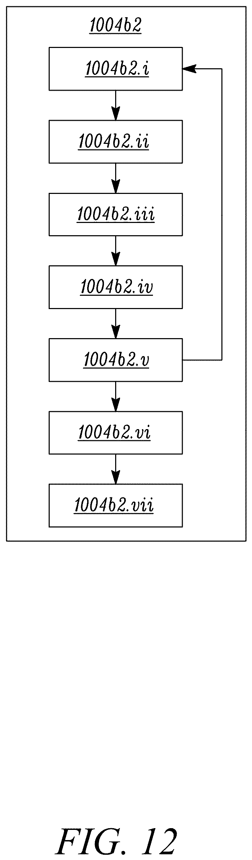

Figure 12 illustrates sub-steps of the step of determining 1004b the overall fuel allocation based on the ordering of the missions of Figure 10 according to a second example implementation 1004b2. In the second example implementation 1004b2, determining 1004b the overall fuel allocation comprises:
determining 1004b2.i a remaining amount of the second fuel of the fuel source;
selecting 1004b2.ii a proposed proportion of the second fuel within the amount of fuel to be allocated to the mission for each mission of the plurality of missions, wherein the proposed proportion is the same for each mission;
performing 1004b2.iii for each mission, in the ordering of the missions, steps comprising:
   determining a first proposed amount of the second fuel based on the proposed proportion of the second fuel and a total amount of fuel required to carry out the mission;
   determining a second proposed amount of the second fuel based on the first proposed amount of the second fuel and the remaining amount of the second fuel of the fuel source; and
   updating the remaining amount of the second fuel of the fuel source by subtracting the second proposed amount from the remaining amount of the fuel source;
for each mission:
   determining a baseline proportion of the second fuel within the amount of fuel to be allocated to the mission;
   determining an updated proposed proportion of the second fuel within the amount of fuel to be allocated to the mission based on the second proposed amount of the second fuel and the total amount of fuel required to carry out the mission;
   determining a baseline predicted outcome based on the baseline proportion of the second fuel, wherein the baseline predicted outcome is based on the one or more of the predicted contrail outcome and the predicted local air quality outcome for the baseline proportion of the second fuel;
   determining a proposed predicted outcome based on the updated proposed proportion of the second fuel, wherein the proposed predicted outcome is based on the one or more of the predicted contrail outcome and the predicted local air quality outcome for the updated proposed proportion of the second fuel;
   performing a comparison of the baseline predicted outcome and the proposed predicted outcome;
   determining a further utility value based on the comparison of the baseline predicted outcome and the proposed predicted outcome;
determining 1004b2.iv the sum of the further utility values for the plurality of missions; and
repeating 1004b2.v steps 1004b2.i to 1004b2.iv for one or more further proposed proportions of the second fuel, wherein the one or more further proposed proportions of the second fuel are determined using an optimisation algorithm; and
selecting 1004b2.vi an optimum proportion of the second fuel within the amount of fuel to be allocated to the mission based on the proposed proportion which provides the greatest sum of the further utility values for the plurality of missions.

In the second example implementation 1004b2, steps 1004b2.i and 1004b2.ii are implemented by the initialisation module of the computational system of Figure 7. The initialisation module may receive the or each proposed proportion and/or instructions on the baseline proportion from the data source/user interface 90 of Figure 6. Steps 1004b2.iii to 1004b2.v are implemented by the utility value determination module of the computational system of Figure 7, and step 1004b2.vi is implemented by the overall fuel allocation determination module of the computational system of Figure 7. In other examples, any of the steps 1004b2.i to 1004b2.vi may be implemented by any other module of the computational system of Figure 7.

In both the first and second example implementations 1004b1, 1004b2, the predicted contrail outcome and/or the predicted air quality outcome, as applicable, is obtained by the utility value determination module from the modelling module of Figure 7. The modelling module comprises a contrail model and/or a predicted air quality module, as applicable, as described elsewhere herein.

In either the first example implementation 1004b1 or the second example implementation 1004b2, the baseline proportion of the second fuel determined at step 1004b1.iv and step 1004b2.iii, respectively, may be the same as the baseline proportion selected in determining one or more utility values as described above with reference to Figures 8 and 9. In such cases, the sub-steps of determining a baseline proportion and determining a baseline predicted outcome in step 1004b1.iv and step 1004b2.iii, respectively, may be omitted and the baseline predicted outcome determined as described above with reference to Figures 8 and 9 may instead be used in the comparison sub-step of step 1004b1.iv and step 1004b2.iii, respectively. In such cases, the baseline predicted outcome used to determine the ordering of the missions may be reused in determining the overall fuel allocation based on the ordering of missions.

In either the first example implementation 1004b1 or the second example implementation 1004b2, the proposed proportion of the second fuel selected at step 1004b1.ii and step 1004b2.ii, respectively, may be the same as the trial proportion, or one of the trial proportions, as applicable, selected in determining one or more utility values as described above with reference to Figures 8 and 9. In such cases, the trial proportion of the second fuel used to determine the ordering of the missions may be reused as the proposed proportion in determining the overall fuel allocation based on the ordering of missions.

In any implementation described here, a further utility value may be compared to a predetermined threshold. For example, in step 1004b1.iv or step 1004b2.iii described above, the further utility value may be compared to a predetermined threshold. If the further utility value does not exceed the predetermined threshold, the method may be terminated for the respective proposed proportion of the second fuel. The method may then return to step 1004b1.ii or step 1004b2.ii, as applicable, and continue for a further proposed proportion of the second fuel. In some examples, the predetermined threshold may be based on a cost associated with the selected proposed proportion of the second fuel. The cost may be defined per unit mass or per unit volume of the second fuel. The cost may be defined individually for each mission of the plurality of missions. The cost may be defined with respect to the baseline proportion of the second fuel within the amount of fuel supplied to the respective mission. The predetermined threshold may be equal to the cost or equal to the cost multiplied by a predetermined factor. The predetermined threshold may be based on historical data. The predetermined threshold may be determined in dependence on the amount of the second fuel of the fuel source. The predetermined threshold may be decreased in response to an increase in the amount of the second fuel of the fuel source. The predetermined threshold may be increased in response to a decrease in the amount of the second fuel of the fuel source.

In the first example implementation 1004b1, step 1004b1.iii comprises comparing the first proposed amount of the second fuel to the remaining amount of the second fuel of the fuel source. In the second example implementation 1004b2, step 1004b2.iii further comprises comparing the first proposed amount of the second fuel to the remaining amount of the second fuel of the fuel source. In both the first and second example implementations 1004b1, 1004b2, if the first proposed amount of the second fuel is less than or equal to the remaining amount of the second fuel of the fuel source, then the second proposed amount of the second fuel is determined as equal to the first proposed amount of the second fuel.

In both the first and second example implementations 1004b1, 1004b2, if the first proposed amount of the second fuel is greater than the remaining amount of the second fuel of the fuel source for a respective mission, the method comprises one or more of :
i) determining the respective second proposed amount of the second fuel or proposed amount of the second fuel for the respective mission to be zero, optionally determining the respective second proposed amount of the second fuel or proposed amount of the second fuel for the respective mission to be zero if the remaining amount of the second fuel of the fuel source does not exceed a predetermined threshold;
ii) terminating step 1004b1.iii or step 1004b2.iii;
iii) continuing step 1004b1.iii or step 1004b2.iii, respectively, with the next mission in the ordering of the missions;
iv) if a ratio of the first proposed amount of the second fuel to the remaining amount of the second fuel of the fuel source is greater than a predetermined threshold, determining the respective second proposed amount of the second fuel or proposed amount of the second fuel for the respective mission to be equal to the remaining amount of the second fuel of the fuel source;
v) determining the respective second proposed amount of the second fuel or proposed amount of the second fuel for the respective mission to be equal to a maximum portion of the remaining amount of the second fuel of the fuel source which does not result in the respective second proposed amount of the second fuel or proposed amount exceeding a maximum allowable amount of the second fuel;
vi) increasing the respective second proposed amount of the second fuel or proposed amount of the second fuel for one or more preceding missions in the ordering of the missions by a portion of the remaining amount of the second fuel of the fuel source, optionally wherein the portion of the remaining amount of the second fuel is the same for the or each preceding mission in the ordering of the missions; and
vii) identifying the mission for which the utility value is increased by the greatest amount if the respective second proposed amount of the second fuel or proposed amount of the second fuel for the mission is increased by the remaining amount of the second fuel of the fuel source or a maximum portion of the remaining amount of the second fuel of the fuel source which does not result in the respective second proposed amount of the second fuel or proposed amount exceeding a maximum allowable amount of the second fuel and increasing the respective second proposed amount of the second fuel or proposed amount of the second fuel for the identified mission by the respective remaining amount of the second fuel of the fuel source or maximum portion of the remaining amount of the second fuel of the fuel source.

When determining a proposed amount of the second fuel, both the first and second example implementations 1004b1, 1004b2 take into account any residual amount of the second fuel previously supplied to an aircraft 1 carrying out the respective mission, i.e., any residual amount of the second fuel within one or more fuel tanks of the aircraft. In the described examples, step 1004b1.iii comprises determining the second proposed amount of the second fuel based on any residual amount of the second fuel previously supplied to an aircraft carrying out the respective mission and step 1004b2.iii comprises determining the proposed amount of the second fuel based on any residual amount of the second fuel previously supplied to an aircraft carrying out the respective mission.

After an optimum proportion of the second fuel within the amount of fuel supplied to each mission is selected in step 1004b1.vii or 1004b2.vi, the final stage 1004b1.viii, 1004b2.vii of determining the overall fuel allocation is carried out. The final stage comprises, for each mission of the plurality of missions:
determining an optimum proportion of the first fuel within the amount of fuel suppled to the mission based on the optimum proportion of the second fuel;
allocating an amount of the second fuel to each mission of the plurality of missions based on the optimum proportion of the second fuel; and
allocating an amount of the first fuel to each mission based on the optimum proportion of the first fuel.

In the implementation described here, the final stage of determining the overall fuel allocation is implemented by the overall fuel allocation determination module of the computational system of Figure 7.

Illustrative examples are provided below for reference:

### Example 1

Input parameters in this example include the following:
∘ First ("default") fuel type: 100% fossil kerosene
∘ Second ("non-default") fuel type: 50% SAF, 50% fossil kerosene
∘ Maximum permitted SAF blend percentage: 50%
∘ Onsite blending capability at airport: no
∘ Choice to rely on mixing within aircraft fuel tank: no
∘ Identification of any volumetrically-limited missions: none

Here, "volumetrically-limited" missions are missions for which the amount of fuel needed could exceed the volumetric capacity of the tank if more than a certain proportion of a fuel with a lower energy per unit volume were assigned to that mission. For example, various "non-default" fuels may have a lower volumetric energy density than standard aviation fuels, and so a larger volume of fuel would be needed to supply the same amount of energy.

In this case, the constraints within which it is sought to maximise the overall, or fleetwide, utility are very limiting - the lack of onsite blending and decision not to rely on in-tank mixing means that each mission must be allocated either 100% of the first fuel or 100% of the second fuel, with no other option available. The value of the proportion of second fuel, x, assigned to a given mission, *i, xᵢ,* is therefore binary.

For each mission, the outcome (contrail outcome and/or predicted local air quality outcome) is determined for x=0 (all first fuel) and for x=100 (all second fuel), allowing utility values to be determined, and the missions are assembled into an ordered list according to the improvement per unit amount of second fuel type, with the missions that show the highest benefit from the second fuel usage at the top of the list. Second fuel is then assigned to each mission in turn, working down the list, until the remaining amount of the second fuel is insufficient to fully fuel the next mission in the list. All remaining missions in the list are assigned the first fuel, and any small amount of remaining second fuel is retained in the airport storage tank 70 for another set of missions (e.g. another day). The allocations are then implemented, by refuelling the one or more aircraft 1 accordingly.

### Example 2

Input parameters in this example include the following:
- First ("default") fuel type: 95% fossil kerosene, 5% SAF
- Second ("non-default") fuel type: 100% SAF
- Maximum permitted SAF blend percentage: 50% (N.B. this may vary by mission in some implementations)
- Onsite blending capability at airport: yes
- Choice to rely on mixing within aircraft fuel tank: N/A
- All targeted missions to be constrained to use same blend ratio: yes
- Identification of any volumetrically-limited missions: none

In this case, the constraints are less limiting, and a more extensive approach is therefore required. First, the maximum allowed proportion of second fuel, *xₘₐₓ* is determined - this is 47.37% for all missions in this example. Different trial values, or proposed values, of x in the range 0< xₜᵣᵢₐₗ ≤xₘₐₓ are then evaluated. For each value of *xₜᵣᵢₐₗ* to be evaluated, the most advantageous distribution of the second fuel among the plurality of missions is determined, and the overall fleetwide utility value is calculated. The value of *xₜᵣᵢₐₗ* corresponding to the best fleetwide utility value is selected. The selected value of xₜᵣᵢₐₗ is then implemented, by refuelling the one or more aircraft 1 accordingly. This implementation typically comprises obtaining a blended fuel composition containing the first and second fuels in a ratio corresponding to the selected value of *xₜᵣᵢₐₗ.* In some cases, this obtaining step is simply selecting the second fuel, if the selected value of *xₜᵣᵢₐₗ* is 100%. If a subset of the overall plurality of missions was selected for allocation of the second fuel (using methods described above), this subset of missions is identified and supplied with the obtained fuel comprising (or consisting of) the second fuel. Any remaining missions from the plurality of missions (not within the selected subset) are fuelled with the first fuel.

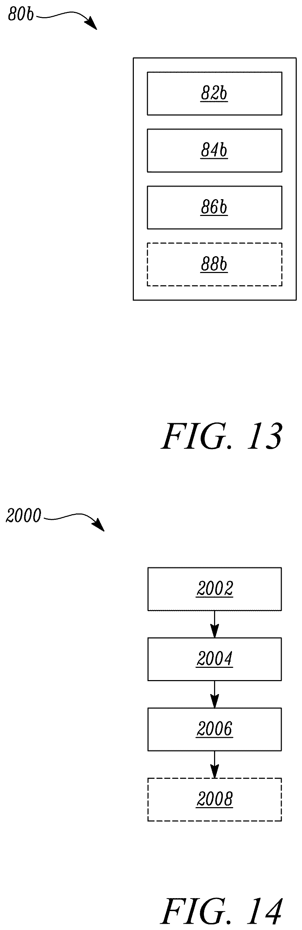

In various implementations, the following approach 2000 may be followed to determine a fleetwide fuel allocation for a plurality of missions as illustrated in Figure 6, carried out by at least one aircraft 1, and generally by a plurality of aircraft. The plurality of missions (a...n) are supplied with fuel from a fuel source 70 comprising an amount of a first fuel 72 and an amount of a second fuel 74, the fleetwide fuel allocation indicating an amount of the first fuel and an amount of the second fuel to be allocated to each of the plurality of missions. The first fuel and the second fuel have at least one fuel characteristic different from the other, and the method 2000, as shown in Figure 14, comprises:
obtaining 2002 an initial proposed fuel allocation for each of the plurality of missions (a to n), the sum over all missions of the proposed fuel allocations being constrained by the amounts of the first fuel and the second fuel available from the fuel source 70;
performing 2004 a fleetwide optimisation in which the proposed fuel allocation of each of the plurality of missions is modified within the constraints of the total available first and second fuels from the fuel source 70 to maximise a fleetwide utility value over all of the plurality of missions, each of the plurality of missions being associated with a respective mission utility value for a given fuel allocation, the mission utility value for each mission being determined according to at least one of a predicted contrail outcome and a predicted local air quality outcome for the use of the given fuel allocation on that mission (noting that utility is defined in the same way for all missions in any given implementation, such that e.g. the utility value is determined based on predicted contrail outcome alone for all missions, on predicted local air quality outcome alone for all missions, or on both together for all missions); and
determining 2006 the fleetwide fuel allocation for the plurality of missions based on the fleetwide optimisation.

The method 2000 may further comprise loading fuel 2008 onto the at least one aircraft 1a,...,1n according to the respective determined fuel allocation. In such cases, the second fuel and the first fuel allocated to a given mission of the plurality of missions may be blended together prior to loading the fuel onto the aircraft 1, or they may be loaded separately and allowed to mix in the onboard fuel tank 50.

Optimisation algorithms are a class of algorithms designed to find the best possible solution to a given problem. The goal of an optimisation algorithm is to find the optimal solution that minimises or maximises a given objective function - here, the objective function is the fleetwide utility value, which is typically defined as a sum of all mission utility values. In the implementations described herein, the utility value reflects a positive change / improvement in an environmental outcome compared to a baseline (the environmental outcome comprising at least one of a predicted contrail outcome and a predicted local air quality outcome), and a higher value indicates a better environmental outcome (e.g. less contrail-induced heating or improved local air quality). The utility value (for each mission, and overall) may be negative if the tested fuel allocation gives a worse outcome than the baseline. It will be appreciated that the objective function could easily be defined differently, for example such that it is always a positive value, and/or such that it is a reflection of negative environmental impact and is to be minimised rather than maximised. Typically in optimisation, the objective function is either (i) a cost function, which is to be minimised, or (ii) a reward function or utility function, which is to be maximised. Fleetwide utility, or overall utility, as discussed herein is the latter, but it will be appreciated that the objective function could equivalently be defined as a fleetwide (or overall) environmental cost to be minimised. Constrained optimisation is the process of optimising an objective function with respect to some variables in the presence of constraints on those variables - here, the variables are amounts of the first and second fuels for each mission, and the constraints include technical and regulatory limits on the amount(s) and type(s) of fuel that can be used for each mission.

The steps of this method 2000 may be performed by a computational system 80, 80b comprising one or more - local or distributed - processors. As illustrated in Figure 13, the computational system 80b may comprise an initialisation module 82b arranged to obtain the initial proposed fuel allocation for each of the plurality of missions (e.g. sent from a data source 90 in communication with the computational system 80b, or entered at a user interface 90).

The computational system 80b may comprise an optimisation module 84b arranged to perform the fleetwide optimisation, and a fleetwide fuel allocation determination module 86b arranged to determine the fleetwide fuel allocation for the plurality of missions based on the fleetwide optimisation.

Each module may be implemented in software and/or in hardware, and the functions of multiple modules may be provided by a single entity or the function(s) of a single module may be split across multiple entities. It will be appreciated that the functionality is split into "modules" for ease of description only, and not to limit computational implementations.

The computational system 80b may further comprise, or have associated therewith, a modelling module 88b comprising a contrail model arranged to model the predicted contrail outcome of performance of at least one particular mission of the plurality of missions, as dependent on the fuel allocation to that mission, and to output a predicted contrail outcome for the at least one selected mission and fuel allocation; and/or a local air-quality model arranged to model the predicted local air-quality outcome of performance of at least one particular mission of the plurality of missions, as dependent on the fuel allocation to that mission, and to output a predicted local air quality outcome for the at least one selected mission and fuel allocation. The one or more outcomes for a given mission output by the modelling module 88b may be used in determining the utility value of that mission.

In the majority of the implementations discussed above, the fuel allocation for each of the plurality of missions is constrained to have the same proportion of the second fuel (at least for missions to which any of the second fuel is assigned). This reduces computational complexity, by reducing degrees of freedom for the determination of the desired fleetwide fuel allocation, and also potentially increases operational ease by allowing the fuel blend to be mixed in advance for provision to all aircraft 1. However, the inventors appreciated that improved environmental outcomes could be obtained if the proportion of the second fuel (the non-default fuel) is adjusted for each mission individually.

Examples of implementations in which the fuel allocation for each of the plurality of missions is not constrained to have the same proportion of the second fuel, such that a percentage of the second fuel in fuel provided for a mission can vary between missions, are discussed in more detail below.

In such approaches, individual missions are allowed to be allocated a mission-specific fuel composition, thus the search space for the optimised fuel allocation across all missions is multidimensional.

The initialisation module 82b is arranged to obtain the initial proposed fuel allocation for each of the plurality of missions - this may be obtained from another entity by being communicated to the initialisation module 82b, or may be generated by the initialisation module 82b. In some simple implementations, the initial proposed fuel allocation (e.g. in terms of percentage of the second fuel) is the same for each mission, and for example is either (i) 100% of the first fuel and 0% of the second fuel for each mission, or (ii) a total available amount of the second fuel evenly split between missions based on their energy requirements, with the remainder of the fuel for each being the first fuel. In other implementations, the initial proposed fuel allocation may still be the same for each mission, but may be generated as an optimal blend to use across all missions, as discussed above with respect to Figures 7 and 8. The implementation presently being described may therefore be provided with the output of a previous optimisation process as its input, for further refinement.

In various implementations, a standard known, "off-the-shelf", optimiser 84b may be used to perform the fleetwide optimisation 2004. The optimiser 84b in the implementation described below is arranged to perform a constrained optimisation with the fleetwide utility value (which is dependent on the fleetwide fuel allocation) defined as an objective function to be maximised by the constrained optimisation. The constraints of the constrained optimisation include the amount of the second ("non-default") fuel 74 available from the fuel source 70 (the amount of the first ("default) fuel 72 being large enough not to be a limiting factor in this example), an amount of energy required to complete each mission (noting that different fuels have different energy densities and/or specific energies, so this amount of energy does not translate directly to a set volume or mass of fuel, and also noting that a safety margin is generally provided for), and a tolerance of the aircraft arranged to undertake a given mission to the second fuel 74 (this tolerance may be set based on either or both of regulatory and technical considerations).

A parameter vector can be defined for the optimiser 84b, the parameter vector comprising an entry for each mission over which the fleetwide fuel allocation is to be optimised. Each entry may be (i) a proportion, or percentage, of the second fuel type within a blended fuel composition to be allocated to that individual mission ("the ith mission"), *xᵢ*; or (ii) an amount of the second fuel to be allocated to that individual mission, *f_{nd,i}*.

The overall amount *f_{nd,available}* of the second fuel type acts a constraint which creates a relationship between the values within the parameter vector. For example if some of the elements of the parameter vector contain values which collectively add up to *f_{nd,available}* (if the parameter vector uses *f_{nd}* directly), or are collectively equivalent to *f_{nd,available}* (if the parameter vector uses x, this must be multiplied by the respective fuel amount for each mission), then the remaining elements must be set to zero.

Evaluation of the parameter vector by the optimiser 84b of this implementation comprises the following steps:
- For each mission, taking the current value of *x* (or *f_{nd}* as applicable) for that mission and obtaining the corresponding utility value; and
- Summing the utility values from each of the missions to produce an overall fleetwide utility value.

In the implementation being described, the mission utility values, *u*, are simply summed to generate the fleetwide utility value. In other implementations, a weighting, *w*, may be provided for each mission (i) of the n missions, and the fleetwide utility value, *U*, may be defined as follows: $U = {\sum }_{i = 1}^{n} {w}_{i} \times {u}_{i}$

The weighting may relate to a confidence associated with the utility value, *u*, for example such that a utility value for which the uncertainty is high (for example due to uncertainties in weather data, as discussed below) may have its impact on the summation reduced.

In the implementation being described, the steps of obtaining 2002 an initial proposed fuel allocation and performing 2004 a fleetwide optimisation are repeated with different initial proposed fuel allocations, and the output fleetwide utility values are compared before determining 2006 the fleetwide fuel allocation. This may reduce the risk of the output being a local maximum rather than a global maximum. Additionally or alternatively, multiple different optimisation algorithms may be used, and their outputs compared, to reduce the risk of the final output not being the global maximum. If a cost function is used in place of a utility function, the process instead seeks to find the minimum value for that cost function. More generally, this may be referred to as seeking an optimum value of the function to be optimised - the function is a utility function for which a higher value is preferable in the specific examples being described, but the skilled person will appreciate that this is not limiting.

Various implementations may use the approach laid out below instead of a standard optimiser 84b.

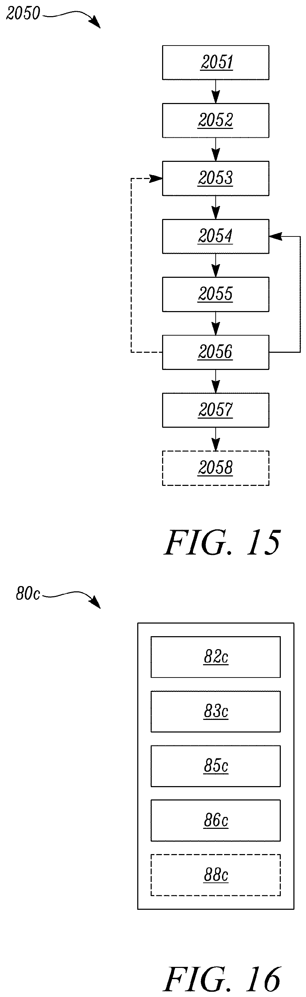

The approach 2050 for determining a fleetwide fuel allocation for a plurality of missions carried out by at least one aircraft 1 shown in Figure 15, comprises:
for each mission of the plurality of missions:
obtaining 2051 an initial proposed fuel allocation, the sum over all missions of the proposed fuel allocations being constrained by the amounts of the first fuel 72 and the second fuel 74 available from the fuel source 70; and
obtaining 2052 mission-specific data on the relationship between the fuel allocation for that mission and a utility value, *u,* for that mission (a, ..., n), the mission utility value being determined according to a predicted environmental outcome for the use of the given fuel allocation on that mission, the predicted environmental outcome comprising at least one of a predicted contrail outcome and a predicted local air quality outcome for the use of the given fuel allocation on that mission.

In the implementations being described, the utility value is not an absolute measure of the predicted environmental outcome, but rather is defined relative to a baseline predicted environmental outcome. The baseline predicted environmental outcome may be the predicted environmental outcome for the/an initial proposed fuel allocation, which may therefore be referred to as a baseline fuel allocation. Optionally, the baseline predicted environmental outcome may be the predicted environmental outcome for use of 100% of the first fuel for all missions. The utility value for a given mission, *i,* with a given second fuel allocation, *xᵢ*, may therefore be determined based on a comparison of the baseline predicted environmental outcome for mission *i* using the value of *x* defined for that mission in the baseline, and the predicted environmental outcome for mission *i* with a proportion *x*ᵢ of the second fuel.

An incremental amount of the second fuel is then defined 2053. The incremental amount of the second fuel is set to be significantly less than a remaining amount of the second fuel under the initial proposed fuel allocation (e.g. a maximum of one fiftieth or one hundredth of the remaining amount, or a set mass or volume such as 1kg or 10 kg or 100 kg), and allocations of this incremental amount are considered in the following iterative procedure:
- identifying 2054 the mission which has the greatest increase in its mission utility value from changing that mission's allocation by the incremental amount of the second fuel, based on the relationship between the fuel allocation for that mission and the mission utility value (e.g. by identifying 2054 the mission which has the greatest increase in its mission utility value from adding the incremental amount of the second fuel to that mission's allocation);
- changing 2055 the allocation of the second fuel to the identified mission, the magnitude of the change being no larger than the incremental amount, thereby updating the proposed fuel allocation for the identified mission, and updating a corresponding fleetwide proposed fuel allocation, accordingly; and
- determining 2056 a remaining amount of the second fuel under the updated fleetwide proposed fuel allocation.

This iterative procedure 2054, 2055, 2056 is continued until the determined remaining amount of the second fuel is less than the defined incremental amount.

In some implementations, the method 2050 may then return to the step 2053 of defining the increment size, and the subsequent steps 2054, 2055, 2056 may be performed again for the new increment size (re-starting at the same initial allocation). In additional or alternative implementations, the method 2050 may then return to the step 2051 of defining the initial proposed fuel allocation, and the subsequent steps 2054, 2055, 2056 may be performed again for the new initial conditions.

A fleetwide fuel allocation for the plurality of missions is then determined 2057 based on a final fleetwide proposed fuel allocation output from the iterative procedure. The aircraft 1 arranged to perform the missions may then be refuelled in line with the output fleetwide fuel allocation.

The method 2050 may further comprise loading 2058 fuel onto the at least one aircraft 1a,...,1n according to the respective determined fuel allocation. In such cases, the second fuel and the first fuel allocated to a given mission of the plurality of missions may be blended together prior to loading the fuel onto the aircraft 1, or they may be loaded separately and allowed to mix in the onboard fuel tank 50.

When it is determined, at step 2056, that the remaining amount of the second fuel under the updated fleetwide proposed fuel allocation is less than the defined incremental amount, the utility values, u, of each mission may be summed across all missions so as to generate a fleetwide utility value, *U.* If the steps 2053 to 2056 or 2051 to 2056 are repeated - e.g. due to trying different initial conditions and/or different increment sizes - *U* may be calculated each time it is determined, at step 2056, that the remaining amount of the second fuel under the updated fleetwide proposed fuel allocation is less than the defined incremental amount and the proposed fleetwide fuel allocation with the highest value of *U* may be retained as the final fleetwide proposed fuel allocation output from the iterative procedure. It will be appreciated that utility is set to be maximised in the implementations being described, but that this is equivalent to a differently-defined function being minimised - this is simply a matter of definition.

In some implementations, a negative incremental amount may be set - i.e. an amount of the second fuel may be de-allocated from an identified mission. In such implementations, the remaining amount of the second fuel under the initial proposed fuel allocation considered at step 2053 is the amount of the second fuel currently allocated to that mission, rather than an amount of the second fuel available from a dedicated fuel source. In implementations in which the increment is defined as a proportion of the remaining amount, a larger proportion may be used when the "remaining amount" is fuel allocated to a mission rather than fuel in the dedicated fuel source (e.g. a maximum of 10% rather than 1%, or a smaller set mass or volume). The mission which has the largest increase, or, failing that, the smallest decrease in its mission utility value from removing the incremental amount of the second fuel from that mission's allocation may be identified 2054 as the mission from which second fuel is to be de-allocated.

The identifying step 2054 may comprise obtaining a mission-specific curve of mission utility value as a function of proportion of the second fuel assigned to the mission, for all missions of the plurality of missions; and comparing curve gradients at the currently-allocated proportion of the second fuel for each respective mission. The mission with the steepest positive gradient (i.e. most increase in utility) for the proposed direction of change in fuel allocation, or, failing that, with the shallowest negative gradient (i.e. smallest decrease in utility) for the proposed direction of change in fuel allocation, may be the mission selected.

The method 2050 may be performed by a computational system 80, 80c comprising one or more - local or distributed - processors. As illustrated in Figure 16, the computational system 80c may comprise an initialisation module 82c arranged to obtain the initial proposed fuel allocation for each of the plurality of missions (e.g. sent from a data source 90 in communication with the computational system 80c, or entered at a user interface 90).

The computational system 80c of this implementation further comprises a utility value management module 83c and an iteration module 85c. The utility value management module 83c is arranged to, for each mission of the plurality of missions, obtain mission-specific data on the relationship between the fuel allocation for that mission and a utility value for that mission (the mission utility value is determined according to at least one of a predicted contrail outcome and a predicted local air quality outcome for the use of the given fuel allocation on that mission). The iteration module 85c is arranged to identify 2054 the mission which has the greatest increase in its mission utility value from changing that mission's allocation by a defined incremental amount of the second fuel (e.g. the mission which has the greatest increase in its mission utility value from adding a defined incremental amount of the second fuel to that mission's allocation), based on the relationship between the fuel allocation for that mission and the mission utility value. The iteration module 85c is further arranged to change 2055 the allocation of the second fuel to the identified mission, the magnitude of the change being no larger than the incremental amount, thereby updating the proposed fuel allocation for the identified mission. The corresponding fleetwide proposed fuel allocation is therefore updated accordingly. The iteration module 85c is further arranged to determine 2056 a remaining amount of the second fuel under the updated fleetwide proposed fuel allocation, and then to return to the identifying step 2054 and repeating the iterative procedure 2054-2056 until the determined remaining amount of the second fuel is less than the defined incremental amount.

The computational system 80c of this implementation further comprises a fleetwide fuel allocation determination module 86c arranged to determine 2057 the fleetwide fuel allocation for the plurality of missions based on a final fleetwide proposed fuel allocation output from the iterative procedure. As discussed above, the method 2050 may be run once, with a single starting condition and increment size, or may be run multiple times with different starting conditions and/or increment sizes. In implementations in which the method 2050 is run multiple times, fleetwide utility values, U, may be calculated and compared each time the remaining amount of the second fuel is less than the defined incremental amount, and the proposed fleetwide fuel allocation with the highest value of *U* may be selected as the fleetwide fuel allocation to use for the plurality of missions. The computational system 80c may further comprise, or have associated therewith, a modelling module 88c equivalent to that 88b discussed above.

In the specific implementation described below, the initial proposed fuel allocation is set to be 0% of the second fuel (100% of the first fuel) for all missions. This may be a typical initial proposed fuel allocation where the first fuel is a widely-available default aviation fuel, and the second fuel is a non-default fuel having at least one different fuel characteristic which improves at least one environmental outcome of use of the fuel in an aircraft, but which is more expensive and/or of which there is less available. It will be appreciated that alternative initialisation conditions could be used in other implementations. In these implementations described below, the utility values reflect a difference in predicted environmental impact of contrails (or the lack thereof), between a predicted environmental impact when using a baseline fuel allocation and a predicted environmental impact when using a proposed fuel allocation, the predictions typically being provided by a contrail model described elsewhere herein. In alternative or additional implementations, a local air quality model may be used and the utility values may reflect the impact on the local air quality, optionally in addition to the differences in environmental impact of any contrails between the baseline and proposed fuel allocations, and/or one or more other environmental considerations.

In this implementation, a set of candidate missions, selected from within the plurality of missions, is identified to be considered for an allocation of the second fuel type. The set of candidate missions initially contains all missions within the plurality of missions except for the following:
1. missions for which the maximum allowed value of x is equal to zero (e.g. due to regulatory or technical constraints);
2. missions which are expected to have a contrail net cooling impact when running on the first (default) fuel type; and
3. missions which are not expected to form long-lived contrails when running on the first (default) fuel type, nor when running on a fuel blend characterised by the highest permissible proportion of the second (non-default) fuel type (i.e. the highest allowed value of x for that mission).

In other implementations, for example where the data needed to determine (2) and (3) are not easily available, only condition (1), or only two of the three conditions, may be used to reduce the set of missions to be analysed. In still further implementations, other conditions may be used, or no refining of the set of missions may be performed. It will be appreciated that cutting missions out of the set of candidate missions may reduce the computational cost of the subsequent steps. The cardinality of this set of candidate missions is defined as *C_{c}*, for purposes of discussion herein.

A mission-specific curve of utility value, *u,* for each mission within this set of candidate missions as a function of *x* (or as a function of *f_{nd}*, as appropriate) is then obtained. In the implementation being described, obtaining the curve comprises:
∘ Selecting multiple values of *x;*
∘ Running, for each selected value of *x,* the contrail model for all missions within the set of candidate missions for which the selected value of *x* does not exceed the maximum, *xₘₐₓ,* for that mission;
∘ Storing, for each such mission, the selected values of *x* and the corresponding utility values, *u,* for each mission at the selected values of *x.*

It will be appreciated that the equivalent could be done for local air quality, in implementations using that instead of, or as well as, contrail effects.

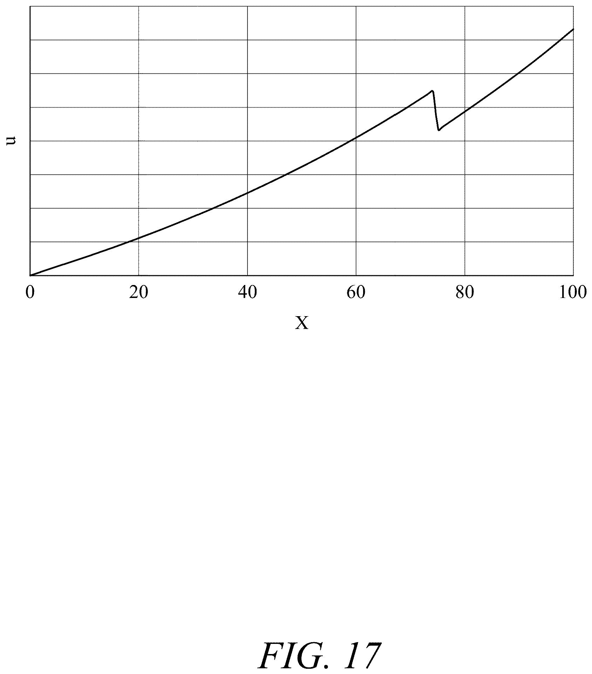

Additional values of *x* may then be selected to fill in more detail in parts of the resulting curves warranting higher resolution, and the contrail model may be run again at the selected additional values of *x,* so adding additional data for the curves. It will be appreciated that the data on the variation of *u* with *x* is described as a "curve" to reflect how it would generally appear to an observer if plotted (see e.g. Figure 17), but that the method is performed electronically and the computing process has no requirement for a visual representation so the curve may never be visualised. With reference to the example of Figure 17, following evaluation of the contrail model for values of (e.g.) x = 0,20,40,60,80,100, it could be decided to evaluate additional values of *x* lying between 60 and 80 in order to better define the detail in that region. The selection of additional values of *x* (and the running of the contrail model at those additional values of x) could be performed for individual missions or for groups of missions only, or even for all of the missions within the set of candidate missions, for example depending on available time or computational power.

A further additional value of *x* corresponding to the highest allowable value of *x* for a given mission (i.e. *x = xₘₐₓ*) may also be selected, and the contrail model run at *xₘₐₓ* for each mission, to define the utility value for that mission at the highest allowable value of x for that mission.

Interpolation (and optionally also extrapolation) may be used to allow a value of *u* for any mission to be inferred at values of x for which the model was not run. For example, linear interpolation between adjacent (*x, u*) point pairs may be used. Optionally, a parameterised representation of the underlying relationship between *x* and *u* can be determined and subsequently used to obtain an estimate of the utility value for any proportion of the second fuel.

An iterative procedure is then used to revise the values of *x* in the parameter vector from the initial proposed fuel allocation towards an optimal fleetwide fuel allocation. A threshold amount of remaining second fuel, below which the following iterative procedure will terminate, may be set. The threshold is zero in the specific implementation being described, but may be some other non-negative amount in other implementations (for example to conserve some of the second fuel for other missions beyond the set in current consideration). An incremental amount of the second fuel type (increment) to be used in the iterative procedure is defined, the incremental amount of the second fuel being substantially less than the starting value of *f_{nd,remaining},* which is *f_{nd,available}.* Optionally the incremental amount of the second fuel type could be (i) equal to a pre-determined amount, such as 1kg or 10 kg or 100 kg, or (ii) calculated by applying a pre-determined multiplication factor to the starting value of *f_{nd,remaining}* (e.g. 0.001 or 0.01). Optionally the procedure could be carried out many times with different sizes of increment (for example by selecting different multiplication factors), and the best overall result selected for implementation. Additionally or alternatively, the increment size may be adapted within the procedure as detailed below, in order to reduce the chance of being caught at a local maximum rather than an optimum value of a utility curve such as that shown in Figure 17 when making only small steps.

The iterative procedure of the implementation currently being described - referred to as the increment-changing iterative procedure - is then implemented as follows, starting by setting *f_{nd,remaining} = f_{nd,available}*:
- From within the set of candidate missions, select the mission whose utility value, *u,* is increased the most per unit amount of additional second fuel allocated to that mission, given a mission-specific amount, A, of additional second fuel. A is set to be the smallest of (i) the pre-defined increment, (ii) f_{nd,remaining}, or optionally f_{nd,remaining} minus a threshold where a threshold amount of the second fuel is to be held back, and (iii) a mission-specific amount of additional second fuel which is the maximum amount of additional second fuel that mission can accept without x exceeding *x*ₘₐₓ.
- Allocate to the selected mission the additional amount A of the second fuel, so increasing the selected mission's allocation of that fuel by A, and reduce *f_{nd,remaining}* by the amount A. If, as a result of this allocation, the selected mission now has *x=xₘₐₓ,* the selected mission can be removed from the set of candidate missions - *C_{c}* is thus reduced by one.
- The steps above are repeated until either *f_{nd,remaining}* reaches zero, or there are no missions for which an increase in *u* can be achieved (either because *C_{c}* has been reduced to zero, or because none of the missions give a higher value of u with their allocation adjusted).
- If the size of the increment can be increased without exceeding f_{nd,remaining} or a maximum allowed value of increment (where used), the increment is then increased and the previous steps repeated for the new increment. The increment may be increased for example by multiplying increment by a factor equal to the minimum of (i) *incrementₘₐₓ* / *increment,* (ii) *f_{nd,remaining}* / *increment,* or (iii) a predetermined factor such as 1.1 or 1.5 or 2, or for example by adding to the increment an amount equal to the minimum of (i) *incrementₘₐₓ - increment,* (ii) *f_{nd,remaining} - increment,* or (iii) a predetermined amount such as the initial value of increment (such as 1kg, or 0.001 x f_{nd,available}).
- The steps above are again repeated, with further increment sizes, until there are no missions for which an increase in *u* can be achieved.

In some alternative implementations, the increment size may be reviewed, and optionally changed, after each allocation. The resulting allocation of the second fuel for each mission can then be implemented, as described above but noting that in this case each mission has its own value of *x,* rather than a single value of *x* for all missions, so care must be taken in providing the correct blend to each aircraft 1.

The iterative procedure defined above is essentially a greedy uphill search through a landscape defined by a fitness function characterised by the overall utility (across the plurality of missions - the fleetwide utility, *U*) associated with a proposed allocation of an amount of a second fuel across some or all of those missions. The greedy nature of the search renders it susceptible to becoming stuck on a low peak (local maximum) even though there may be a higher peak (overall maximum) elsewhere. Changing the increment size is one way of reducing this risk, but in other implementations one or more additional processes may be used to further reduce the risk of an overall optimum being missed, for example:
- The search may be repeatedly initialised at different starting points, at least one of the startingpoints representing non-zero allocations of some or all of the available second fuel to at least some missions; and
- The search may comprise repeatedly not only adding an additional amount of second fuel to the mission which can make best use of it to improve its own utility, but also removing (or de-allocating) a corresponding amount of second fuel from the mission which suffers the least detriment from that removal or de-allocation.

In one such approach, the iterative procedure is as described below, referred to as a two-part iterative procedure as it comprises two parts - an initialisation part and a re-allocation part. The procedure is started by choosing an increment size as described above (noting that, whilst not described in this implementation, the adjustment of increment size mid-process as described above could also be implemented here), and setting *f_{nd,remaining} = f_{nd,available}.* Again, as described above, a subset of missions suitable for using the second fuel may be selected from a total plurality of missions, and the two-part iterative procedure may be performed only for that subset.

Each part of the two-part iterative procedure may be continued/repeated until a termination criterion for that part is satisfied, the termination criterion for each optionally being selected from:
- a pre-determined number of iterations has been carried out;
- a pre-determined amount of computational execution time has been reached or exceeded;
- a pre-determined amount of elapsed time has been reached or exceeded; or
- the average per-iteration improvement (in the fleetwide utility value) observed over the last *n* iterations has fallen to or below a pre-determined threshold value (the pre-determined threshold value may be zero (no improvement), and may be expressed as an absolute value or as a percentage improvement).

In some implementations, the initialisation part comprises using the approach 1000 described above with respect to Figures 8 to 11 for proposing a single blend to use for all missions. For example, the search can be initialised (for at least one iteration of the below, noting that the below approach requires use of multiple different initial proposed fuel allocations) by selecting a single value of *x* - optionally at random - for all missions (subject to ensuring that x does not exceed *xₘₐₓ* for any of the missions) and performing one iteration of the method 1000 described above. Optionally, the method 1000 described above could be used to allocate a selected proportion of *f_{nd,available}* (rather than allocating all the available second fuel), such that some of the second fuel is left available for mission-specific allocation in the re-allocation part of the implementation currently being described.

Alternatively, the search of this implementation can optionally be initialised (for at least one iteration) by performing the entirety of the approach 1000 described above. Again, optionally, the approach 1000 described above could be adapted to allocate only a proportion of the available second fuel in this initial allocation proposal. After this initial allocation is complete, the proportion of *f_{nd,available}* that was actually allocated to form this initial fuel allocation, *P,* is noted.

Alternatively, a different, dedicated, approach may be used for this initialisation part. The below approach is used in the implementation currently being described, noting that randomisation is deliberately used in this example implementation to reduce the chances of sticking at a local maximum (or equivalently local minimum, in implementations in which the optimum value is a minimum value) without requiring any data on the curve, but that pre-set choices may be used in other implementations, for example where knowledge of local maxima of the curve is available:
- Randomly distribute some or all of the available amount *f_{nd,available}* of the second fuel between missions;
- Determine a proportion, P, of the available second fuel which is to be allocated among the missions. *P* may be equal to 1 (corresponding to allocating all of the available second fuel), but the optimal solution may not require all of the available second fuel to be used, so optionally P may be set to (i) a pre-determined value in the range 0 < P ≤1, (ii) a randomly-selected value in the range 0 < P ≤1, or (iii) a randomly-selected value in a range k₁ ≤ P ≤ k₂, where 0<k₁<k₂≤1 (e.g. P may take a value in the range 0.8 ≤P ≤1).
   ∘ Optionally, the proportion of iterations for which *P* is set to a value less than one might be pre-determined. E.g., on successive iterations *P* might be set to cycle between, or randomly select from, being i) 1, ii) a randomly selected number in the range 0<*P*≤ 1, and iii) a randomly-selected number in the range *k₁≤P≤k₂.*
- Set *f_{nd,remaining} = P x f_{nd,available}*
- Select a mission from the subset of missions.
- Determine how much of the second fuel to add to the selected mission. By default, the determined amount is equal to the increment, but the actual additional amount allocated, A, will be reduced below the increment if *f_{nd,remaining}* is less than increment, and/or if increasing the selected mission's allocation of second fuel by the incremental amount would result in *x* for the selected mission exceeding *xₘₐₓ* for that mission, as described above for the previous implementation.
- Allocate to the selected mission the determined amount of second fuel, so increasing the overall allocation of second fuel to that mission by the amount, *A* (*x* is increased by adding the amount A to the allocation for that mission).
- Reduce *f_{nd,remaining}* by the determined amount of the second fuel, and return to the mission selection step above.

In the mission selection step, a mission may be selected randomly from the subset of missions. The probability of selecting an individual mission may be equal for all missions within the subset, or may be weighted, for example according to (i) the total amount of fuel required for that mission (such that a mission which requires more fuel has a higher selection probability, e.g. defining the probability of selecting an individual mission as the fuel requirement for that mission divided by the total fuel requirement for all missions of the subset); (ii) the maximum amount of second fuel that could be used on that mission (such that a mission which can accommodate more second fuel has a higher probability of being selected, e.g. defining the probability of selecting an individual mission as the maximum permissible second fuel usage for that mission divided by the maximum permissible second fuel usage for all missions); (iii) the amount of fuel burn expected to take place in ice-supersaturated air on that mission given the intended route and the forecast meteorological conditions; or (iv) the maximum permissible amount of second fuel that could be consumed in ice-supersaturated air on that mission given the intended route and the forecast meteorological conditions.

The initial fleetwide fuel allocation output from the initialisation part is then used in the subsequent re-allocation part. In the example described in detail below, *P*=*1* and all available second fuel has been assigned in the initial proposed allocation. The same approach may also be used for *P*<*1* (i.e. when some unassigned second fuel may still be available). Optionally the incremental amount used in the initialisation part of the procedure may be different from the incremental amount used in the re-allocation part of the same procedure, but they are taken to be the same for the implementation currently being described.

The re-allocation part of this approach, which is described herein as an iterative procedure for fuel re-allocation, is performed as follows:
- From within the subset, *S,* of missions, a first further subset, S*_{FS1}*, of missions whose current mission-specific allocation of the second fuel, *f_{nd}*, which amount can also be represented as the proportion *x* of the second fuel in the total amount of fuel assigned to that mission, is greater than zero is identified (this may be all missions in some implementations). The first further subset represents missions from which second fuel could be de-allocated as part of the iterative re-allocation procedure set out below. The cardinality of the first further subset of missions is denoted by *C_{FS1}.*
- From within the subset, *S,* of missions, a second further subset, *S_{FS2}*, of missions whose current allocation of second fuel as a proportion of their total fuel allocation is smaller than *xₘₐₓ* for that mission is identified. *S_{FS2}* contains all missions which can still receive additional second fuel. The cardinality of the second further subset of missions is denoted by *C_{FS2}.*

There may be considerable overlap between the first and second further subsets of missions. Indeed, in some cases the two further subsets may at this stage be identical to each other (i.e. all missions having 0*<xᵢ*≤ *x_{max,i}*). The following iterative re-allocation procedure is then followed:
- From within S*_{FS1},* the mission ("mission *i*") whose utility value is increased the most (or, failing that, decreased the least) per unit amount of second fuel de-allocated (i.e. removed) from that mission is identified, given a mission-specific amount, *D,* of the second fuel de-allocated from that mission, where *D* is the smallest of the set increment and the amount of second fuel currently allocated to mission *i, f_{nd,i}.*
- From within *S_{FS2}* (except for the *i*th mission, which is specifically excluded), the mission ("mission *j* ") whose utility value is increased the most (or, failing that, decreased the least) per unit amount of additional second fuel allocated (i.e. added) to that mission is identified, given a mission-specific additional amount A of the second fuel added to that mission, where A is the smallest of the amount D determined above, and the maximum additional amount of second fuel that the *j*th mission is able to accept without causing *xⱼ* to exceed *x_{max,j}.*
- If *A<D,* such that mission *j* now has *xⱼ=x_{max,j},* and an amount of available second fuel remains unallocated, then the following steps are performed:
   ∘ From within a subset of missions within S*_{FS1}*, the subset containing only missions of S*_{FS1}* with a current allocation of second fuel equal to or greater than amount A, the mission ("mission *k*") whose utility value is increased the most (or, failing that, decreased the least), with the amount, A, of the second fuel de-allocated from that mission, is identified. In some cases, where the ith mission is still the best choice, *k=i.* (alternatively, all missions of S*_{FS1}* may be considered and the amount to be deallocated may be reduced below A if the selected mission's initial allocation of second fuel is less than A);
   o From within S*_{FS2}* (except for the ith mission, the *j*th mission, and any other missions which are unable to accept an additional amount D of the second fuel without exceeding the respective value of *xₘₐₓ*), the mission ("mission *l*') whose utility value is increased the most (or, failing that, decreased the least), given the additional amount D of the second fuel added to that mission, is identified.
   ∘ Two options are then considered and compared, in terms of the overall utility function, *U*, and the mission-specific utility functions *u₁*, ..., *uₙ.* The mission-specific utility function for mission *i, uᵢ* is a function of the amount of the second fuel assigned to the ᵢth mission, and can therefore be written as *uᵢ*(*f_{nd,i}*), with the value in the brackets representing the input value for the function.
      • First option: re-allocating an amount *A* of the second fuel from the *k*^{th} mission to the *j*^{*t*h} mission. The increase in utility associated with such an action is calculated as:
         - $Δ {U}_{first} = Δ {u}_{k} + Δ {u}_{j}$
            ∘ $Δ {u}_{k} = {u}_{k} \left({f}_{nd , k}-A\right) - {u}_{k} \left({f}_{nd , k}\right)$
            ∘ $Δ {u}_{j} = {u}_{j} \left({f}_{nd , j}+A\right) - {u}_{j} \left({f}_{nd , j}\right)$
      ▪ Second option: re-allocating an amount *D* of the second fuel from the *i*^{th} mission to the *l*^{th} mission. The increase in utility associated with such an action is calculated as:
         - $Δ {U}_{second} = Δ {u}_{i} + Δ {u}_{l}$
            ∘ $Δ {u}_{i} = {u}_{i} \left({f}_{nd , i}-D\right) - {u}_{i} \left({f}_{nd , i}\right)$
            ∘ $Δ {u}_{l} = {u}_{l} \left({f}_{nd , l}+D\right) - {u}_{l} \left({f}_{nd , l}\right)$
   ∘ If *ΔU_{first}* ≥ *ΔU_{second},* then a proposed reallocation amount, *Q*, to be transferred from the *m*^{th} mission to the *n*^{th} mission is set as equal to *A*, the *m*^{th} mission from which second fuel is to be deallocated is set as the *k*^{th} mission, and the *n*^{th} mission to which additional second fuel is to be allocated is set as the *j*^{th} mission. Otherwise, if *ΔU_{first} < ΔU_{second},* the proposed reallocation amount, *Q,* to be transferred from the *m*^{th} mission to the *n*^{th} mission is set as equal to *D,* the *m*^{th} mission from which second fuel is to be deallocated is set as the *i*^{th} mission, and the *n*^{th} mission to which additional second fuel is to be allocated is set as the *l*^{th} mission.
- If on the other hand *A=D,* the proposed reallocation amount, *Q,* to be transferred from the *m*^{th} mission to the *n*^{th} mission is set as equal to *A,* the *m*^{th} mission from which second fuel is to be deallocated is set as the *i*^{th} mission, and the *n*^{th} mission to which additional second fuel is to be allocated is set as the *j*^{th} mission.
- If the proposed re-allocation of an amount *Q* of the second fuel transferred from the *m*^{th} mission to the *n*^{th} mission does not result in a net benefit (i.e. does not increase the fleetwide utility, *U*, or in some cases only increases *U* by less than a pre-set threshold amount), then the proposed re-allocation is not performed, and the iterative procedure is terminated. More formally:
   ∘ The change in mission utility value for the mth mission arising from the proposed de-allocation of the amount *Q* of second fuel from the mth mission (i.e. changing the mth mission's allocation of second fuel from *f_{nd,m}* to *f_{nd,m}-Q*) is defined as *Δuₘ = uₘ*(*f_{nd,m}-Q*) *- uₘ*(*f_{nd,m}*).
   ∘ Similarly, the change in mission utility value for the nth mission, arising from allocating the additional amount *Q* of second fuel to the nth mission (i.e. changing the *n*th mission's allocation of second fuel from *f_{nd,n}* to *f_{nd,n}+Q*) is defined as *Δuₙ = uₙ*(*f_{nd,n}+Q*) *- uₙ*(*f_{nd,n}*).
   ∘ If (*Δuₙ* + *Δ uₘ*) ≤ *0,* then in some implementations the increment size may be increased as discussed above, and the iterative procedure repeated with a new increment size. However, if increment size cannot be increased, or if optional increment size increase is not a part of the implementation (as for the implementation currently being described) then the iterative procedure is terminated.
- Otherwise, if the proposed re-allocation of an amount *Q* of the second fuel transferred from the *m*^{th} mission to the *n*^{th} mission does result in a net benefit (i.e. does increase the fleetwide utility, *U,* or in some cases increases *U* by more than the pre-set threshold amount) such that the iterative procedure is not terminated, then the amount *Q* of the second fuel is reallocated from the *m*th mission to the nth mission.
   ∘ If, as a result of transferring the amount *Q* of the second fuel from the mth mission to the nth mission, the mth mission now has zero allocation of second fuel (i.e. *f_{nd,m}=0*), the *m*th mission is removed from the first further subset of missions. *C*_{FS1} is thus reduced by one.
   ∘ If, as a result of transferring the amount *Q* of the second fuel from the *m*th mission to the nth mission, the *n*th mission now has an allocation of second fuel corresponding to *xₙ=x_{max,n}*, the *n*th mission is removed from the second further subset of missions. C_{FS2} is thus reduced by one.
- The steps above (of this iterative procedure for fuel re-allocation ) are then repeated until either *C_{FS1}=0 or C_{FS2}=0.*

If there are any remaining missions in the second further subset of missions S*_{FS2}* (the subset of missions whose current allocation of second fuel is smaller than *xₘₐₓ* for that mission) when this iterative procedure has terminated (due to (i) *C_{FS1}* reaching zero, or (ii) no benefit being obtained by the final proposed reallocation and an increment size increase not being an option), the increment-changing iterative procedure as described on pages 62 to 63 may be applied to the remaining missions in S*_{FS2}*. In such cases, *f_{nd,remaining}* is initialised as *(1-P)f_{nd,available}.* Additional second fuel may be allocated to one or more of the remaining missions within S_{FS2} only if the allocation results in an increase in utility that exceeds a pre-determined threshold. For example, if a level of benefit associated with the additional utility does not at least equal, or exceed, the additional cost of that same incremental amount of second fuel relative to the corresponding amount of the first (cheaper) fuel, then the additional incremental amount of second fuel may not be allocated, and may instead be kept for use as part of a further plurality of missions, such as the next day's missions.

The overall, fleetwide, utility value, *U,* (for the subset of missions considered, or for the full original plurality of missions) associated with the resulting allocation between missions of the second fuel is calculated. If the calculated *U* is the best (or only) discovered so far, it is recorded in association with the corresponding allocation between missions of the second fuel. The steps above of the iterative procedure for fuel re-allocation are then repeated with different initialisation parts until a selected termination criterion (see above) is met. The fleetwide fuel allocation with the highest value of *U* is selected.

The resulting allocation of the second fuel for each mission can then be implemented, as described above, noting again that in this case each mission has its own value of x, rather than a single value of x for all missions, so care must be taken in providing the correct blend to each aircraft 1.

In one or more example implementations described herein, the amount of the second fuel of the fuel source 70 available for use in the methods discussed may be a proportion of a total amount of the second fuel of the fuel source, rather than all of the second fuel of the fuel source. The proportion of the total amount may be the amount available for supplying the plurality of missions. In other implementations of any of the methods described herein, the method 1000, 2000, 2050 may further comprise determining the proportion of the total amount. In such implementations, the step of determining the proportion of the total amount may be implemented by the initialisation module 82a of the computational system 80a of Figure 7, or any other initialisation module 82 described herein, for example. The method 1000, 2000, 2050 may comprise determining the proportion of the total amount based on one or more of:
i) one or more predetermined time periods during which the missions of the plurality of missions are scheduled to depart as a proportion of a total time period during which a total number of missions to be supplied with fuel from the fuel source are scheduled to depart;
ii) a total amount of fuel required by the plurality of missions as a proportion of a total amount of fuel required by a total number of missions to be supplied with fuel from the fuel source;
iii) a total amount of the second fuel required by the plurality of missions assuming each mission of the plurality of missions is supplied with a maximum possible amount of the second fuel as a proportion of a total amount of the second fuel required by a total number of missions to be supplied with fuel from the fuel source assuming each mission of the total number of missions is supplied with a maximum possible amount of the second fuel; and
iv) historical data comprising an average amount of second fuel consumed by one or more historical missions carried out under the same or substantially the same conditions as one or more mission of the plurality of missions.

As referred to herein, a total amount of fuel required to carry out a mission of the plurality of missions may be determined using techniques known to persons skilled in the art based on, for example, the specific energy of the first fuel and/or the second fuel, the specific energy of a composition comprising the first fuel and the second fuel, and expected parameters of the mission, such as speed, distance, and altitude.

As referred to herein, in implementations in which a uniform proportion of the second fuel within the amount of fuel supplied to each mission is used, for example as a baseline, the uniform proportion may be based on one or more of:
i) a ratio of the (available) amount of the second fuel of the fuel source to an estimated total amount of fuel required to carry out the plurality of missions;
ii) a ratio of an estimated total amount of the second fuel required to carry out the plurality of missions to an estimated total amount of fuel required to carry out the plurality of missions;
iii) an average of a maximum allowable proportion of the second fuel within the amount of fuel supplied to each mission; and
iv) an average of two of more of i) to iii) as described in this paragraph.

As referred to herein, a maximum allowable proportion of the second fuel for a given mission may be based on a compatibility of an aircraft 1 carrying out the respective mission with the second fuel. For example, the compatibility of the aircraft 1 may be based on the tolerance of one or more engines 10 of the aircraft 1 to combustion of the second fuel.

An average of a maximum allowable proportion of the second fuel within the amount of fuel supplied to each mission, x_{max,ave}, may be calculated as: ${x}_{max , ave} = {f}_{nd , max} / \left({f}_{nd , max}+{f}_{d , max}\right)$ where:
f_{nd,max} is an estimated total amount of the second fuel required to carry out the plurality of missions if each mission is supplied with an amount of the second fuel based on a maximum allowable proportion of the second fuel within an amount of fuel supplied to the respective mission;
f_{d,max} is an estimated total amount of the first fuel required to carry out the plurality of missions if each mission is supplied with an amount of the first fuel based on a maximum allowable proportion of the second fuel within an amount of fuel supplied to the respective mission;

The uniform proportion of the second fuel, x_{uniform}, may be calculate as: ${x}_{uniform} = {x}_{max , ave} * \left({f}_{nd , available}/{f}_{nd , max}\right)$ where:
f_{nd,available} is the (available) amount of the second fuel of the fuel source.

Any proportion of the second fuel described herein may be constrained to be less than or equal to a maximum allowable proportion of the second fuel for the respective mission and/or greater than or equal to a uniform proportion which is the same for each mission.

In implementations in which the same proportion of the second fuel is allocated to each mission, any proportion of the second fuel described herein may be constrained to be less than or equal to the lowest value of the maximum allowable proportion of the second fuel for each mission of the plurality of missions. For example, the updated proportion determined in step 1004b1.iv of the implementation of Figure 11 may be constrained to be less than or equal to the maximum allowable proportion of the second fuel for the respective mission. The proposed proportion selected in step 1004b1.ii of the implementation of Figure 11 or step 1004b2.ii of the implementation of Figure 12 may be constrained to be greater than or equal to a uniform proportion which is the same for each mission. The updated proportion determined in step 1004b1.iv of the implementation of Figure 11 may be constrained to be greater than or equal to a uniform proportion which is the same for each mission. The uniform proportion may be the same as or different to that of the baseline proportion of the second fuel.

As referred to herein, selecting one or more trial proportions of the second fuel may comprise selecting a first trial proportion and one or more further trial proportions. The first trial proportion may be selected from an ordered sequence of allowable values. The one or more further trial proportions may be selected in order from the ordered sequence of allowable values, optionally using an algorithm configured to select or reject the next value in the ordered sequence of values in dependence on the previously selected value in the ordered sequence of values. For example, the algorithm may reject the next value in the ordered sequence if it is within a predetermined margin of one or more previously selected values in order to select values which are sufficiently spaced apart. Selecting one or more trial proportions of the second fuel may comprise selecting the one or more trial proportions of the second fuel using an optimisation algorithm. Selecting the first trial proportion may comprise selecting the first trial proportion using an optimisation algorithm. Selecting the one or more further trial proportions may comprise selecting the one or more further trial proportions using an optimisation algorithm.

As referred to herein, selecting a proposed proportion of the second fuel and selecting one or more further predetermined proposed proportions may comprise selecting the proposed proportion and the one or more further predetermined proposed proportions from an ordered sequence of allowable values. The one or more further predetermined proposed proportions may be selected in order from the ordered sequence of allowable values, optionally using an algorithm configured to select or reject the next value in the ordered sequence of values in dependence on the previously selected value in the ordered sequence of values. For example, the algorithm may algorithm may reject the next value in the ordered sequence if it is within a predetermined margin of one or more previously selected values in order to select values which are sufficiently spaced apart.

As referred to above, a value of a proportion of the second fuel may be considered allowable if the value satisfies one or more of the following criteria: the value is not less than zero, the value is greater than zero, the value is not less than a uniform proportion which is the same for each mission, the value is greater than a uniform proportion which is the same for each mission, the value is no greater than a maximum allowable proportion for a given mission of the plurality of missions, and the value is no greater than a maximum allowable proportion for any of the missions of the plurality of missions.

As referred to herein, a total amount of fuel required to carry out a mission may include an actual amount of fuel required to carry out the mission and a reserve amount of fuel. The method may take into account one or more subsequent missions, or one or more successive portions of a given mission, to be carried out by an aircraft carrying out one or more of the missions of the plurality of missions. The method may take into account whether or not an amount of the second fuel is available for supplying the or each subsequent mission or a successive portion of a given mission. The method may comprise adjusting the allocation of the second fuel, and therefore the amount of the second fuel in the reserve amount of fuel, for one or more mission of the plurality of missions based on whether or not an amount of the second fuel is available for supplying the or each respective subsequent mission or successive portion of a given mission. For example, it may be preferable to reduce the allocation of the second fuel to avoid excess amounts of the second fuel within the reserve fuel, for example because it may be preferable to minimise an amount of low energy density fuel in the reserve fuel.

As referred to herein, the or each utility value may comprise one or more of:
i) A change in the environmental outcome (e.g. the respective trial predicted outcome or the proposed predicted outcome referenced above) relative to the respective baseline predicted outcome;
ii) A change in the environmental outcome per predicted unit flight distance of the respective mission relative to the respective baseline predicted outcome per predicted unit flight distance of the respective mission;
iii) A change in the environmental outcome per predicted unit amount of fuel consumed during the respective mission relative to the respective baseline predicted outcome per predicted unit amount of fuel consumed during the respective mission;
iv) A change in the environmental outcome per unit amount of fuel if an amount of fuel based on the respective trial proportion of the second fuel or proposed proportion of the second fuel is supplied to the respective mission relative to the respective baseline predicted outcome per unit amount of fuel;
v) A change in the environmental outcome per unit length of formed contrail relative to the respective baseline predicted outcome per unit length of formed contrail;
vi) A change in the environmental outcome per unit length of persistent contrail relative to the respective baseline predicted outcome per unit length of persistent contrail;
vii) A change in the environmental outcome per unit distance flown in ice-supersaturated ambient air relative to the respective baseline predicted outcome per unit distance flown in ice-supersaturated ambient air;
viii) A change in the environmental outcome per soot particle emitted relative to the respective baseline predicted outcome per soot particle emitted;
ix) A change in the environmental outcome per soot particle emitted in contrail forming conditions relative to the respective baseline predicted outcome per soot particle emitted in contrail forming conditions;
x) A change in the environmental outcome per soot particle emitted in persistent contrail forming conditions relative to the respective baseline predicted outcome per soot particle emitted in persistent contrail forming conditions;
xi) A change in the environmental outcome relative to the respective baseline predicted outcome divided by a reduction in a predicted number of soot particles emitted between the baseline and trial scenario (i.e. the reduction in a predicted number of soot particles emitted if an amount of fuel based on the respective baseline proportion of the second fuel is supplied to the respective mission relative to a predicted number of soot particles emitted if an amount of fuel based on the respective trial proportion of the second fuel or proposed proportion of the second fuel is supplied to the respective mission);
xii) A change in the environmental outcome relative to the respective baseline predicted outcome divided by a reduction in a predicted number of soot particles emitted in contrail forming conditions between the baseline and trial scenario;
xiii) A change in the environmental outcome relative to the respective baseline predicted outcome divided by a reduction in a predicted number of soot particles emitted in persistent contrail forming conditions between the baseline and trial scenario;
xiv) A change in the environmental outcome relative to the respective baseline predicted outcome multiplied by a reduction in a predicted number of soot particles emitted between the baseline and trial scenario;
xv) A change in the environmental outcome relative to the respective baseline predicted outcome multiplied by a reduction in a predicted number of soot particles emitted in contrail forming conditions between the baseline and trial scenario;
xvi) A change in the environmental outcome relative to the respective baseline predicted outcome multiplied by a reduction in a predicted number of soot particles emitted in persistent contrail forming conditions between the baseline and trial scenario;
xvii) A change in the environmental outcome relative to the respective baseline predicted outcome divided by an increase in a predicted amount of the second fuel consumed during the respective mission between the baseline and trial scenario;
xviii) A change in the environmental outcome relative to the respective baseline predicted outcome divided by an increase in an amount of the second fuel allocated between the baseline and trial scenario;
xix) A change in the environmental outcome relative to the respective baseline predicted outcome divided by an increase in a predicted amount of SAF and/or hydrotreated fossil kerosene consumed during the respective mission between the baseline and trial scenario;
xx) A change in the environmental outcome relative to the respective baseline predicted outcome divided by an increase in an amount of SAF and/or hydrotreated fossil kerosene in the fuel supplied to the respective mission between the baseline and trial scenario;
xxi) A change in the environmental outcome relative to the respective baseline predicted outcome divided by an increase in a predicted cost of fuel consumed during the respective mission between the baseline and trial scenario; and
xxii) A change in the environmental outcome relative to the respective baseline predicted outcome divided by an increase in a predicted cost of an amount of fuel supplied to the respective mission between the baseline and trial scenario.

As referred to herein, the or each utility value may comprise a weighted summation of two or more of i) to xxii) as described in the preceding paragraph.

In any example implementation described herein, the one or more fuel characteristics may be associated with a different environmental impact.

The method of any example described herein may comprise determining, for one or more mission of the plurality of missions, a maximum allowable proportion of SAF within the amount of fuel supplied to the mission. The method may comprise determining, for each mission of the plurality of missions, a maximum allowable proportion of SAF within the amount of fuel supplied to the mission. The maximum allowable proportion of SAF within the amount of fuel supplied to a respective mission may be based on a compatibility of an aircraft carrying out the missions with SAF.

As referred to herein, the one or more trial proportions of the second fuel, or equivalently tested values of *xᵢ*, may be constrained such that the proportion of SAF within an amount of fuel supplied to the respective mission based on the or each trial proportion of the second fuel / value of *xᵢ* is less than or equal to the maximum allowable proportion of SAF for the respective mission. In any example implementation described herein, determining the fleetwide allocation may comprise determining, for one or more or each mission of the plurality of missions, a maximum allowable proportion of SAF within the amount of fuel supplied to the mission, especially if at least one of the first and second fuels comprises a significant percentage of SAF.

Especially in implementations using a uniform proportion which is the same for each mission, any proportion of the second fuel referred to herein may be constrained such that the proportion of SAF within an amount of fuel supplied to each mission based on the proposed proportion of the second fuel is less than or equal to the lowest value of the maximum allowable proportion of SAF across all missions of the plurality of missions.

The method of any example implementation described herein may comprise initially dividing the plurality of missions into two or more subsets of one or more missions. Each subset may comprise one or more missions compatible with a different maximum allowable proportion of SAF (or other fuel property for which there are technical and/or regulatory constraints, but SAF is chosen here for ease of discussion) within the amount of fuel supplied to the or each mission. The method may comprise pre-allocating a different amount of the second fuel of the fuel source to each subset of missions based on the maximum allowable proportion of SAF within the amount of fuel supplied to the or each mission within the respective subset. The method may be repeated for each subset of missions with the total amount of second fuel to be allocated between all missions of a subset being constrained to a maximum of the pre-allocated amount of the second fuel for the respective subset of missions. The method may be further repeated for each subset of missions with the total amount of second fuel to be allocated between all missions of each subset being constrained to a maximum of the pre-allocated amount of the second fuel for the respective subset of missions.

In any of the example implementations described herein, the fuel source may further comprise an amount of one or more further fuels (e.g. a third fuel, fourth fuel, etc.). Each mission of the plurality of missions may be supplied with an amount of the or each further fuel. The fuel allocation may indicate an amount of the or each further fuel to be allocated to each mission of the plurality of missions. The or each further fuel may have one or more fuel characteristics different from each of the first fuel and the second fuel. The one or more further fuels may comprise a plurality of further fuels. Each further fuel of the plurality of further fuels may have one or more fuel characteristics different from each of the other further fuels of the plurality of further fuels. Any feature described herein with reference to the second fuel may apply equally to the or each further fuel. Any method step described herein may be repeated for the or each further fuel in order to determine an amount of the first fuel, an amount of the second fuel, and an amount of the or each further fuel to be allocated to each mission of the plurality of missions.

The method of any example implementation described herein may comprise initially performing, prior to determining the fleetwide fuel allocation, one or more of the following, optionally if doing so results in a greater predicted sum of utility values for the plurality of missions:
i) dilute the amount of the or each further fuel with an amount of the first fuel of the fuel source such that a fuel composition of the or each further fuel matches a fuel composition of the second fuel before amalgamating the amount of the or each further fuel and the amount of the second fuel of the fuel source;
ii) amalgamate the amount of the or each further fuel with the amount of the second fuel of the fuel source;
iii) determine the fleetwide fuel allocation with the amount of the further fuel or one of the further fuels in place of the amount of the second fuel of the fuel source; and
iv) determine the fleetwide fuel allocation with the amount of the further fuel which results in the greatest predicted sum of utility values for the plurality of missions in place of the amount of the second fuel source, optionally then repeating the method with the amount of the or one of the remaining further fuels which results in the greatest predicted increase in the sum of utility values for the plurality of missions in place of the amount of the second fuel of the fuel source, optionally then repeating the repeating step for the amount of each remaining further fuel.

As referred to herein, the predicted contrail outcome may comprise a total contrail energy forcing or a contrail energy forcing per unit of fuel consumed during the respective mission. The predicted contrail outcome may comprise a total contrail radiative forcing, a contrail radiative forcing per unit of fuel consumed during the respective mission, a total contrail effective radiative forcing, or a contrail effective radiative forcing per unit of fuel consumed during the respective mission. The predicted contrail outcome may comprise an atmospheric temperature change at or near the surface of the earth. The predicted contrail outcome may be expressed as a CO₂ equivalent. The CO₂ equivalent may be the amount of CO₂, e.g., mass of CO₂, emitted to yield the energy forcing, radiative forcing, effective radiative forcing, or temperature change as applicable. The predicted contrail outcome may be expressed as a cost of the CO₂ equivalent. The cost may be a financial cost of removal of the CO₂ equivalent or a non-financial cost.

As referred to herein, the predicted local air quality outcome may comprise a total number of nvPM particles emitted by the respective mission, optionally below a predetermined altitude.

The method of any example implementation described herein may comprise determining the predicted contrail outcome using a contrail model. The contrail model is configured to determine the predicted contrail outcome in dependence on a fuel composition comprising the respective proportion of the second fuel and a corresponding proportion of the first fuel, and may take into consideration one or more of:
i) hydrogen mass fraction and/or specific energy of the fuel composition;
ii) sulphur mass fraction of the fuel composition;
iii) a planned route of the respective mission;
iv) a planned altitude of the respective mission;
v) a meteorological forecast for the respective mission;
vi) a payload mass of the respective mission;
vii) one or more characteristics of an aircraft carrying out the respective mission;
viii) one or more characteristics of an engine of an aircraft carrying out the respective mission; and
ix) the effects of an overlap between one or more contrails produced by an aircraft carrying out the respective mission and one or more contrails produced by an aircraft carrying out another mission.

The method of any example implementation described herein may comprise determining the predicted local air quality model using a local air quality model. The local air quality model is configured to determine the predicted local air quality outcome in dependence on a fuel composition comprising the respective proportion of the second fuel and a corresponding proportion of the first fuel, and may take into consideration one or more of:
i) hydrogen mass fraction and/or specific energy of the fuel composition;
ii) sulphur mass fraction of the fuel composition;
iii) a planned route of the respective mission;
iv) a planned altitude of the respective mission;
v) a meteorological forecast for the respective mission;
vi) a payload mass of the respective mission;
vii) one or more characteristics of an aircraft carrying out the respective mission; and
viii) one or more characteristics of an engine of an aircraft carrying out the respective mission.

The contrail model and/or the local air quality model may be configured to determine the predicted contrail outcome and/or the predicted local air quality outcome in dependence on an amount and characteristic of residual fuel previously supplied to an aircraft carrying out the respective mission, for example any residual amount of the second fuel within one or more fuel tanks of the aircraft.

The method of any example implementation described herein may comprise selecting missions to include in the plurality of missions based on one or more selection criterion comprising one or more of:
i) missions forming part of one or more selected banks of operations, optionally two or more selected consecutive banks of operations, wherein the one or more selected banks of operations optionally include missions more likely to produce contrails with a warming effect, such as missions comprising evening departures, and/or missions departing within a predetermined time period, such as a single day;
ii) missions scheduled to depart during one or more predetermined time periods, optionally two or more predetermined consecutive time periods;
iii) missions to be supplied with fuel from the fuel source, wherein the amount of the second fuel of the fuel source corresponds to a predetermined single delivery of an amount of the second fuel;
iv) missions to be supplied with fuel from the fuel source, wherein the fuel source is a common fuel supply point or the fuel source comprises a common supply point of the second fuel;
v) missions scheduled to depart from one or more predetermined terminals or one or more predetermined airports;
vi) missions scheduled to depart from two or more airports sharing the fuel source or a part of the fuel source comprising the second fuel;
vii) missions operated by one or more predetermined operators;
viii) missions carried out by one or more predetermined categories of aircraft;
ix) missions carried out by one or more predetermined families of aircraft, one or more predetermined sub-families of aircraft, and/or one or more predetermined types of aircraft; and
x) missions carried out by one or more aircraft comprising one or more predetermined engine families, one or more predetermined engine types, and/or one or more engines operating one or more predetermined combustion technologies.

The one or more predetermined categories of aircraft may comprise one or more of: wide-body aircraft, narrow-body aircraft, turboprop aircraft, regional jet, and long-rang aircraft.

The one or more aircraft types may comprise one or more types of aircraft within a sub-family of aircraft.

The one or more engines operating one or more predetermined combustion technologies may comprise one or more engines comprising the same combustor, the same type of combustor, and/or a combustor from the same family of combustors. The one or more engines operating one or more predetermined combustion technologies may comprise one or more engines operating rich-burn combustion, lean-burn combustion, and/or staged combustion.

The method of any example implementation described herein may comprise selecting missions to exclude from the plurality of missions. Selecting missions to exclude from the plurality of missions may comprise selecting missions based on at least one exclusion criterion. The at least one exclusion criterion may comprise missions scheduled for avoidance of ice-supersaturated regions (ISSRs).

Selecting one or more missions to exclude from the plurality of missions may comprise, for each mission:
a) determining a baseline proportion of the second fuel within the amount of fuel supplied to the mission;
b) determining a baseline predicted outcome based on the baseline proportion of the second fuel, wherein the baseline predicted outcome is based on the one or more of the predicted contrail outcome and the predicted local air quality outcome for the baseline proportion of the second fuel; and
c) selecting one or more missions to exclude from the plurality of missions based on the baseline predicted outcome for each mission.

The baseline proportion of the second fuel determined in step (a) may be the same as or different to the baseline proportion of the second fuel as referred to anywhere else herein.

Selecting one or more missions to exclude from the plurality of missions may comprise selecting one or more missions for which the baseline predicted outcome determined at step (b) does not exceed a predetermined threshold. The predetermined threshold may be a predetermined positive value of the baseline predicted outcome determined at step (b). Values not exceeding the predetermined positive value may include zero and negative values.

Selecting one or more missions to exclude from the plurality of missions may comprise determining an ordering of the missions based on the baseline predicted outcome determined at step (b) for each mission. Determining the ordering of the missions may comprise ordering the missions in order of descending magnitude of baseline predicted outcome. Selecting one or more missions to exclude from the plurality of missions may comprise selecting one or more missions for which the baseline predicted outcome determined at step (b) is less than a first predetermined threshold proportion of the baseline predicted outcome determined at step (b) of the first mission of the ordering of the missions. The first predetermined threshold proportion may be 1%, 2%, 5%, or 10%, or within a range bounded by any two of these values.

Selecting one or more missions to exclude from the plurality of missions may comprise selecting one or more missions for which the baseline predicted outcome determined at step (b) is less than a second predetermined threshold proportion of the baseline predicted outcome determined at step (b) of the first mission of the ordering of the missions. The second predetermined threshold proportion may be greater than the first predetermined threshold proportion.

Selecting one or more missions to exclude from the plurality of missions may comprise selecting one or more missions in a predetermined lower portion of the ordering of the missions based on the baseline predicted outcome determined at step (c) for each mission. The predetermined lower portion may be one third, one quarter, one sixth, one eighth, or within a range bounded by any two of these values.

Selecting one or more missions to exclude from the plurality of missions may comprise, for each mission, determining a maximum allowable proportion of the second fuel within the amount of fuel supplied to the mission. Selecting one or more missions to exclude from the plurality of missions may comprise selecting one or more missions for which carrying out the mission with an amount of the second fuel based on the maximum allowable proportion of the second fuel will not cause any persistent contrail segments to disappear nor any new persistent contrail segments to appear.

Selecting one or more missions to exclude from the plurality of missions may comprise, for each mission, determining a predicted outcome based on one or more further proportions of the second fuel, wherein the predicted outcome is based on the one or more of the predicted contrail outcome and the predicted local air quality outcome for the or each further proportion of the second fuel. The one or more further proportions may comprise a bisection of the baseline proportion and the maximum allowable proportion for the respective mission. The bisection may be according to a linear scale or a log scale. The one or more further proportions may exclude proportions for which carrying out the respective mission with an amount of the second fuel based on the proportion will not cause any persistent contrail segments to disappear nor any new persistent contrail segments to appear.

Selecting one or more missions to exclude from the plurality of missions may comprise, for each mission, performing a comparison of the baseline predicted outcome determined at step (c) and the predicted outcome based on the or each further proportion of the second fuel and determining a utility value based on the comparison.

The method of any example implementation described herein may comprise allocating a zero amount of the second fuel to missions excluded from the plurality of missions.

In the method of any example implementation described herein, the or each utility value for each mission may be based on one or more additional inputs, as well as the contrail outcome and/or local air quality outcome discussed above. For example, the or each utility value for each mission may be further based on a predicted CO₂ outcome of the respective mission. The predicted CO₂ outcome of a respective mission may comprise life-cycle CO₂ emissions. The method may comprise determining the predicted CO₂ outcome using a CO₂ model.

The or each predicted outcome as described herein may comprise a combination of one or more of: the predicted contrail outcome, the predicted local air quality outcome, and the predicted CO₂ outcome. The combination may comprise a weighted summation of one or more of: the predicted contrail outcome, the predicted local air quality outcome, and the predicted CO₂ outcome.

The method of any example implementation described herein may comprise comparing the greatest sum of the utility values for the plurality of missions to a predetermined threshold and not continuing with determining the fleetwide fuel allocation if the greatest sum of the utility values does not exceed the predetermined threshold. The predetermined threshold may be based on a cost associated with the proposed portion of the second fuel which provides the greatest sum of the utility values for the plurality of missions. The cost may be defined per unit mass or per unit volume of the second fuel. The cost may be defined individually for each mission of the plurality of missions. The cost may be defined with respect to the baseline proportion of the second fuel within the amount of fuel supplied to the respective mission. The predetermined threshold may be equal to the cost or equal to the cost multiplied by a predetermined factor. The predetermined threshold may be based on historical data. The predetermined threshold may be determined in dependence on the amount of the second fuel of the fuel source. The predetermined threshold may be decreased in response to an increase in the amount of the second fuel of the fuel source. The predetermined threshold may be increased in response to a decrease in the amount of the second fuel of the fuel source.

In various of the above approaches, a maximum amount (*f_{nd, max}*) or proportion (*xₘₐₓ*) of the second fuel usable for a mission is used in the determinations. The following discussion refers to the proportion, *x*, rather than the actual amount (mass or volume), *f*_{nd}, of second fuel for ease, but it will be appreciated that the same principles apply whichever metric is selected.

*x_{max,i}* is defined as the highest value of the blend parameter value x that can be contemplated or permitted for the ith mission. If the second fuel type is itself a regulation-compliant fuel, for example a 50:50 blend of HEFA-SPK - Hydroprocessed Esters and Fatty Acids (HEFA) synthetic paraffinic kerosene (SPK) - with fossil kerosene, then many of the considerations below do not apply and *xₘₐₓ* may be 100% for all missions. However, if the second fuel type is a fuel which cannot be used in neat form for commercial flights under current regulations, for example a fuel blending component such as 100% HEFA-SPK, then most or all of the considerations below are to be taken into account.

*x_{max,i}* typically depends upon some or all of the following factors:
- Composition of the second fuel type, such as:
   ∘ the type(s) of SAF and/or hydro-treated fossil kerosene contained in the second fuel: some types of SAF are currently approved for use on commercial flights in a blend ratio of up to 50% with fossil kerosene (i.e. with a current default jet fuel), while others are approved for use up to only a blend ratio such as 10%.
   ∘ the blend ratio of SAF and/or hydro-treated fossil kerosene within the second fuel: the second fuel may be exclusively SAF and/or hydro-treated fossil kerosene (ignoring any minor fuel additives), or may itself be a blend of such a non-default fuel with fossil kerosene.
- Composition of the first fuel type:
   ∘ If the first ("default") fuel contains SAF and/or hydrotreated fossil kerosene (typically only a small amount of either, at present), this may need be taken into account.
- Amount and characteristics of residual fuel remaining in an aircraft's fuel tank(s) 50:
   ∘ For safety reasons, aircraft 1 typically carry more fuel than is required to complete a mission. Thus, at the end of each mission, and prior to loading fuel for the next mission, the aircraft's fuel tanks already contain some residual or remaining fuel, whose amount and characteristics may need to be taken into account when determining the range of permissible blend parameter values that might be contemplated for the next mission. The amount and characteristics of residual fuel may be measured or calculated based on available data, or may be estimated / forecast.
- Fuel tank volumetric capacity
   o Although SAF and/or hydro-treated fossil kerosene typically has a higher specific energy (energy per unit mass) than fossil kerosene, its energy density (energy per unit volume) is typically a little lower. Thus, in rare cases, e.g. corresponding to very long flights, or missions comprising multiple flights, it may not be possible to reach the intended destination (while retaining appropriate safety margins) when running on a fuel comprising a high percentage blend SAF and/or hydrotreated fossil kerosene. As a result, *x_{max,i}* may be constrained to a lower value for such missions than it would be for shorter missions even on the same aircraft type.
- Aircraft and/or engine type:
   o although at present no SAF may be deployed at a greater than 50% blend ratio with fossil kerosene, it is conceivable that in future, operation of some aircraft types on a still higher blend ratio of some SAF types might become permissible. However, it is likely that for other, legacy aircraft types, the 50% limit would remain. Thus aircraft type might become relevant to the calculation of *x_{max,i}.*

For example, if the first fuel is a blend comprising 5% SAF (of a particular type) and 95% fossil kerosene, and if the second fuel is 100% SAF (of the same particular type), and if the maximum allowable SAF percentage for that particular type of SAF is 50%, and if there is no residual fuel in the fuel tank 50 from the previous mission, and if the next mission is not constrained by fuel tank volumetric capacity even when using 50% SAF, then *x_{max,i}* will be equal to 47.37% (corresponding to a SAF blend ratio of 50% in the resulting fuel composition comprising 47.37% second fuel and 52.63% first fuel). By contrast, if the first fuel is 100% fossil kerosene and the second fuel is a blend of 50% SAF with 50% fossil kerosene, and if the maximum allowable SAF percentage for that particular type of SAF is 50%, and if there is no residual fuel in the fuel tank 50 from the previous mission, and if the next mission is not constrained by fuel tank volumetric capacity even when using 50% SAF, then *x_{max,i}=* 100%.

For any or all of the approaches laid out above, various steps may be taken to improve robustness. One key area where there can be inaccuracies in data used is weather data.

Contrail ice particles can survive if the air in their locality is super-saturated with respect to ice. If the air is not super-saturated with respect to ice, the contrail ice particles lose ice mass by sublimation and eventually disappear. Thus, any forecast of contrail climate impact hinges on an accurate forecast of ice-supersaturated regions (ISSRs). An accurate assessment of the effect of contrail mitigation efforts, such as fuel allocation, therefore depends on the accuracy of ISSR forecasts, which are currently not fully reliable. The robustness of proposed contrail mitigation actions to variations or perturbations in the location and/or lifetime of ISSRs should therefore be considered. Application-specific ways of perturbing a proposed solution (mission fuel allocation) so as to characterise the extent to which its utility value changes in response to perturbations have therefore been developed.

In particular, the proposed contrail mitigation approach is evaluated not only at the expected / forecast conditions but also in a region of parameter space surrounding the expected conditions. This can be achieved either by modelling (i) an adjustment of the weather forecast relative to the mission, or (ii) an adjustment of the mission relative to the weather forecast. The adjustment/offset may be a spatial offset and/or a temporal offset of some or all of the forecast or flight path(s). An average of the results may be taken.

It is generally the case that large, or long-lived, ISSRs can be forecast with greater accuracy than small, or short-lived, ISSRs. If small perturbations with respect to time and/or space alter a mission's contrail outcome substantially, it may be inferred that the contrail outcome is dependent upon small and/or short-lived ISSRs and thus the expected outcome may not occur in practice due to poor forecasting of those small / short-lived ISSRs. In such cases, the mission(s) for which the uncertainty is high may be removed from a set of missions for allocation of (any, or additional) second fuel, e.g. if the variability exceeds a set threshold. Additionally or alternatively, the utility value(s) of that mission/those missions may be given a lower weighting when determining the fleetwide utility value. Conversely if much larger perturbations are required before a mission's contrail outcome is dramatically changed, the confidence that a predicted outcome may be realised in practice is higher.

A range or probability distribution from which perturbations can be selected may be chosen from one or more of the following options:
- Temporal variations: advancing or delaying the entire mission, or a part of the mission, by an amount of time; or advancing or delaying the weather forecast, or a part of the weather forecast (e.g. in one geographical area) by an amount of time;
- Spatial variations: Changing the route and/or altitude profile of the mission or of one or more parts of the mission, for example by translating the entire mission to a slightly different location, shifting the weather forecast (e.g. with respect to latitude and/or longitude), selecting a different cruising altitude, or applying various of the suggested perturbations to sections of a mission that are expected to lie within ISSRs, applying various of the suggested perturbations only to sections of a mission that are forecast to lie outside ISSRs, or randomly or systematically perturbing individual waypoints, or sets of consecutive waypoints, along a mission's path without reference to neighbouring waypoints; or
- Humidity variation: randomly or systematically adjusting the forecast relative humidity for the entirety of a mission, or at one or more waypoints along the mission's path.

Individual adjustments may be absolute (e.g. addition of a predetermined adjustment amount) or relative (e.g. multiplication by an adjustment factor).

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. Herein, "comprising" takes its usual meaning of "including at least" or "having at least" and does not exclude the presence of additional features.

## Claims

1. A computer implemented method (1000) of determining an overall fuel allocation for a plurality of missions carried out by one or more aircraft, the plurality of missions being supplied with fuel from a fuel source (70), the fuel source comprising an amount of a first fuel (72) and an amount of a second fuel (74), each mission of the plurality of missions being supplied with an amount of the first fuel and an amount of the second fuel, the overall fuel allocation indicating an amount of the first fuel and an amount of the second fuel to be allocated to each mission of the plurality of missions, the first fuel and the second fuel having one or more fuel characteristics different from each other, the method comprising:
determining (1002) one or more utility values for each mission of the plurality of missions, wherein the or each utility value for each mission is based on the same one or more of a predicted contrail outcome and a predicted local air quality outcome; and
determining (1004) the overall fuel allocation for the plurality of missions based on the or each utility value for each mission.

2. The method of claim 1, wherein determining the one or more utility values for each mission of the plurality of missions comprises, for each mission:
determining (1002a) a baseline proportion of the second fuel within the amount of fuel to be allocated to the mission;
determining (1002b) a baseline predicted outcome based on the baseline proportion of the second fuel, wherein the baseline predicted outcome is based on the one or more of the predicted contrail outcome and the predicted local air quality outcome for the baseline proportion of the second fuel;
selecting (1002c) one or more trial proportions of the second fuel within the amount of fuel to be allocated to the mission; and
for the or each trial proportion of the second fuel:
determining a trial predicted outcome based on the trial proportion of the second fuel, wherein the trial predicted outcome is based on the one or more of the predicted contrail outcome and the predicted local air quality outcome for the trial proportion of the second fuel;
performing a comparison of the baseline predicted outcome and the trial predicted outcome; and
determining the utility value based on the comparison of the baseline predicted outcome and the trial predicted outcome.

3. The method of claim 1 or claim 2, wherein the one or more utility values for each mission comprises a plurality of utility values, the method comprising, for each mission of the plurality of missions, determining a relationship between proportion of the second fuel within the amount of fuel to be allocated to the mission and utility value, wherein determining the overall fuel allocation comprises determining the overall fuel allocation based on the relationship between proportion of the second fuel within the amount of fuel to be allocated to the mission and utility value for each mission, wherein determining the overall fuel allocation comprises determining for each mission a proportion of the second fuel within the amount of fuel to be allocated to the mission, wherein the proportion of the second fuel within the amount of fuel to be allocated to each mission is not constrained to being the same for each mission, such that the proportion of the second fuel within the amount of fuel to be allocated to each mission can vary between the missions.

4. The method of claim 1 or claim 2, comprising determining (1004a) an ordering of the missions of the plurality of missions based on the or each utility value of each mission, wherein determining the overall fuel allocation comprises determining (1004b) the overall fuel allocation based on the ordering of the missions.

5. The method of claim 4, wherein determining the overall fuel allocation comprises:
i) determining (1004b1.i) a remaining amount of the second fuel of the fuel source;
ii) selecting (1004b1.ii) a proposed proportion of the second fuel within the amount of fuel to be allocated to the mission for each mission of the plurality of missions, wherein the proposed proportion is the same for each mission;
iii) for each mission, in the ordering of the missions:
determining a first proposed amount of the second fuel based on the proposed proportion of the second fuel and a total amount of fuel required to carry out the mission;
determining a second proposed amount of the second fuel based on the first proposed amount of the second fuel and the remaining amount of the second fuel of the fuel source; and
updating the remaining amount of the second fuel of the fuel source by subtracting the second proposed amount from the remaining amount of the fuel source;
iv) for each mission:
determining a baseline proportion of the second fuel within the amount of fuel to be allocated to the mission;
determining an updated proposed proportion of the second fuel within the amount of fuel to be allocated to the mission based on the second proposed amount of the second fuel and the total amount of fuel required to carry out the mission;
determining a baseline predicted outcome based on the baseline proportion of the second fuel, wherein the baseline predicted outcome is based on the one or more of the predicted contrail outcome and the predicted local air quality outcome for the baseline proportion of the second fuel;
determining a proposed predicted outcome based on the updated proposed proportion of the second fuel, wherein the proposed predicted outcome is based on the one or more of the predicted contrail outcome and the predicted local air quality outcome for the updated proposed proportion of the second fuel;
performing a comparison of the baseline predicted outcome and the proposed predicted outcome; and
determining a further utility value based on the comparison of the baseline predicted outcome and the proposed predicted outcome;
v) determining the sum of the further utility values for the plurality of missions;
vi) repeating steps i) to v) for one or more further predetermined proposed proportions of the second fuel; and
vii) selecting (1004b1.vii) an optimum proportion of the second fuel within the amount of fuel to be allocated to each mission based on the proposed proportion which provides the greatest sum of the further utility values for the plurality of missions.

6. The method of claim 5, wherein determining the overall fuel allocation comprises, for each mission:
determining an optimum proportion of the first fuel within the amount of fuel to be allocated to the mission based on the optimum proportion of the second fuel;
allocating an amount of the second fuel to each mission of the plurality of missions based on the optimum proportion of the second fuel; and
allocating an amount of the first fuel to each mission based on the optimum proportion of the first fuel.

7. The method of any preceding claim, comprising determining the predicted contrail outcome using a contrail model and/or determining the predicted local air quality model using a local air quality model, wherein the contrail model and/or the local air quality model is configured to determine the predicted contrail outcome and/or the predicted local air quality outcome in dependence on a fuel composition comprising the respective proportion of the second fuel and a corresponding proportion of the first fuel and one or more of:
i) hydrogen mass fraction of the fuel composition;
ii) aromatic mass fraction of the fuel composition;
iii) naphthalenic mass fraction of the fuel composition;
iv) sulphur mass fraction of the fuel composition;
v) specific energy of the fuel composition;
vi) a planned route of the respective mission;
vii) a planned altitude of the respective mission;
viii) a meteorological forecast for the respective mission;
ix) a payload mass of the respective mission;
x) one or more characteristics of an aircraft carrying out the respective mission;
xi) one or more characteristics of an engine of an aircraft carrying out the respective mission; and
xii) the effects of an overlap between one or more contrails produced by an aircraft carrying out the respective mission and one or more contrails produced by an aircraft carrying out another mission.

8. The method of any preceding claim, comprising selecting missions to include in the plurality of missions based on one or more selection criterion comprising one or more of:
i) missions forming part of one or more selected banks of operations, optionally two or more selected consecutive banks of operations;
ii) missions scheduled to depart during one or more predetermined time periods, optionally two or more predetermined consecutive time periods;
iii) missions to be supplied with fuel from the fuel source, wherein the amount of the second fuel of the fuel source corresponds to a predetermined single delivery of an amount of the second fuel;
iv) missions to be supplied with fuel from the fuel source, wherein the fuel source is a common fuel supply point or the fuel source comprises a common supply point of the second fuel;
v) missions scheduled to depart from one or more predetermined terminals or one or more predetermined airports;
vi) missions scheduled to depart from two or more airports sharing the fuel source or a part of the fuel source comprising the second fuel;
vii) missions operated by one or more predetermined operators;
viii) missions carried out by one or more predetermined categories of aircraft;
ix) missions carried out by one or more predetermined families of aircraft, one or more predetermined sub-families of aircraft, and/or one or more predetermined types of aircraft; and
x) missions carried out by one or more aircraft comprising one or more predetermined engine families, one or more predetermined engine types, and/or one or more engines operating one or more predetermined combustion technologies.

9. The method of any preceding claim, wherein the or each utility value for each mission is further based on a predicted CO₂ outcome of the respective mission and wherein each utility value for the plurality of missions is further based on the predicted CO₂ outcome for the respective missions.

10. A method of loading fuel onto one or more aircraft carrying out a plurality of missions, the plurality of missions being supplied with fuel from a fuel source comprising an amount of a first fuel and an amount of a second fuel, the method comprising:
determining an overall fuel allocation for the plurality of missions using the method of any preceding claim; and
loading (1006) fuel onto the or each aircraft according to the overall fuel allocation.

11. A fuel allocation determination system for determining an overall fuel allocation for a plurality of missions carried out by one or more aircraft, the plurality of missions being supplied with fuel from a fuel source (70) comprising an amount of a first fuel and an amount of a second fuel, the overall fuel allocation indicating an amount of the first fuel and an amount of the second fuel to be allocated to each of the plurality of missions, the first fuel and the second fuel having one or more fuel characteristics different from each other, the system comprising:
a utility value determination module (86a) configured to determine one or more utility values for each mission of the plurality of missions, wherein the or each utility value for each mission is based on the same one or more of a predicted contrail outcome and a predicted local air quality outcome and each utility value for the plurality of missions is based on the same one or more of the predicted contrail outcome and the predicted local air quality outcome for the respective missions; and
a fuel allocation determination module (88a) configured to determine the overall fuel allocation for the plurality of missions based on the or each utility value for each mission.

12. The system of claim 11, comprising an initialisation module (82a), wherein the initialisation module is configured to, for each mission of the plurality of missions:
determine (1002a) a baseline proportion of the second fuel within the amount of fuel to be allocated to the mission; and
select one or more trial proportions of the second fuel within the amount of fuel to be allocated to the mission; wherein the utility value determination module is configured to:
determine (1002b) a baseline predicted outcome based on the baseline proportion of the second fuel, wherein the baseline predicted outcome is based on the one or more of the predicted contrail outcome and the predicted local air quality outcome for the baseline proportion of the second fuel; and for the or each trial proportion of the second fuel:
determine a trial predicted outcome based on the trial proportion of the second fuel, wherein the trial predicted outcome is based on the one or more of the predicted contrail outcome and the predicted local air quality outcome for the trial proportion of the second fuel;
perform a comparison of the baseline predicted outcome and the trial predicted outcome; and
determine the utility value based on the comparison of the baseline predicted outcome and the trial predicted outcome.

13. The system of claim 11 or claim 12, wherein the fuel allocation determination module is configured to determine (1004a) an ordering of the missions of the plurality of missions based on the or each utility value of each mission, wherein the fuel allocation determination module is configured to determine (1004b) the overall fuel allocation based on the ordering of the missions.

14. The system of claim 13, wherein the initialisation module is configured to:
i) determine (1004b1.i) a remaining amount of the second fuel of the fuel source; and
ii) select (1004b1.ii) a proposed proportion of the second fuel within the amount of fuel to be allocated to the mission for each mission of the plurality of missions, wherein the proposed proportion is the same for each mission; wherein the utility value determination module is configured to:
iii) for each mission, in the ordering of the missions:
determine a first proposed amount of the second fuel based on the proposed proportion of the second fuel and a total amount of fuel required to carry out the mission;
determine a second proposed amount of the second fuel based on the first proposed amount of the second fuel and the remaining amount of the second fuel of the fuel source; and
updating the remaining amount of the second fuel of the fuel source by subtracting the second proposed amount from the remaining amount of the fuel source;
iv) for each mission:
determine a baseline proportion of the second fuel within the amount of fuel to be allocated to the mission;
determine an updated proposed proportion of the second fuel within the amount of fuel to be allocated to the mission based on the second proposed amount of the second fuel and the total amount of fuel required to carry out the mission;
determine a baseline predicted outcome based on the baseline proportion of the second fuel, wherein the baseline predicted outcome is based on the one or more of the predicted contrail outcome and the predicted local air quality outcome for the baseline proportion of the second fuel;
determine a proposed predicted outcome based on the updated proposed proportion of the second fuel, wherein the proposed predicted outcome is based on the one or more of the predicted contrail outcome and the predicted local air quality outcome for the updated proposed proportion of the second fuel;
perform a comparison of the baseline predicted outcome and the proposed predicted outcome; and
determine a further utility value based on the comparison of the baseline predicted outcome and the proposed predicted outcome;
v) determine the sum of the further utility values for the plurality of missions; and
vi) repeat steps i) to v) for one or more further predetermined proposed proportions of the second fuel; wherein the fuel allocation determination module is configured to:
vii) select (1004b1.vii) an optimum proportion of the second fuel within the amount of fuel to be allocated to the mission based on the proposed proportion which provides the greatest sum of the further utility values for the plurality of missions.

15. The system of claim 14, wherein the fuel allocation determination module is configured to, for each mission:
determine an optimum proportion of the first fuel within the amount of fuel to be allocated to the mission based on the optimum proportion of the second fuel;
allocate an amount of the second fuel to each mission of the plurality of missions based on the optimum proportion of the second fuel; and
allocate an amount of the first fuel to each mission based on the optimum proportion of the first fuel.
